# EUROPÄISCHE PATENTSCHRIFT

(11) **EP 0 626 429 B1**
(45) Veröffentlichungstag und Bekanntmachung des Hinweises auf die Patenterteilung: **03.12.1997**
(21) Anmeldenummer: 94810275.1
(22) Anmeldetag: 09.05.1994
(51) Int. Cl.: C09B 62/04, C09B 62/503

(54) **Faserreaktive Farbstoffe, ihre Herstellung und Verwendung**
Fiber-reactive dyes, their preparation and use thereof
Colorants réactifs sur la fibre, leur préparation et leur utilisation

(30) Priorität: 17.05.1993 CH 1493/93; 01.09.1993 CH 2598/93
(43) Veröffentlichungstag der Anmeldung: 30.11.1994
(73) Patentinhaber: Ciba Specialty Chemicals Holding Inc., 4057 Basel (CH)
(72) Erfinder: Deitz, Rolf, CH-4058 Basel (CH); Tzikas, Athanassions Dr., CH-4133 Pratteln (CH); Herzig, Paul, CH-4057 Basel (CH)

(56) Entgegenhaltungen:
- EP-A- 0 094 019
- EP-A- 0 258 806
- EP-A- 0 432 542
- EP-A- 0 478 503
- EP-A- 0 568 816

## Beschreibung

Die vorliegende Erfindung betrifft neue faserreaktive Farbstoffe, die zum Färben von cellulosehaltigen Fasermaterialien aus wässrigem Bad sowie zum Bedrucken cellulosehaltiger Fasermaterialien geeignet sind.

Es sind bereits aus der EP-A-0094019, EP-A-0258806, EP-A-0432542 oder EP-A-0478503 Reaktivfarbstoffe mit zwei über ein Triazinyl-Brückenglied verbundenen Chromophoren, die gegebenenfalls einen faserreaktiven Vinylsulfonylrest tragen, bekannt, jedoch gehorchen diese einem anderen Aufbauprinzip als die Verbindungen der unten angegebenen Formeln (1a) und (1b).

Gegenstand der Erfindung sind Verbindungen der Formel 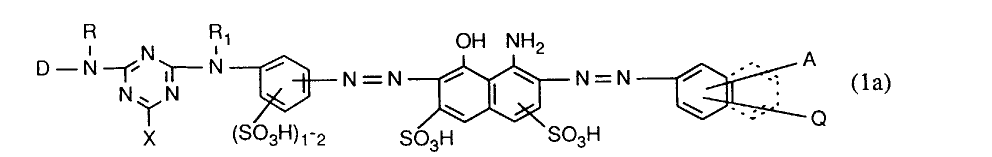 oder 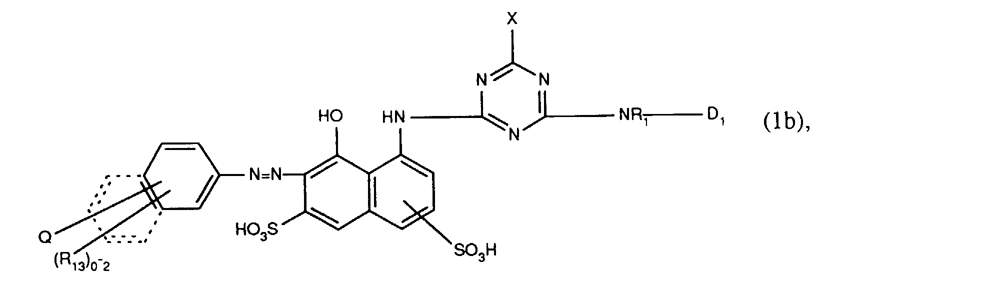 worin
X für Fluor oder Chlor steht,
R und R₁ unabhängig voneinander je Wasserstoff oder gegebenenfalls durch Halogen, Hydroxy, Cyano, C₁-C₄-Alkoxy, C₁-C₄-Alkoxycarbonyl, Carboxyl, Sulfo oder Sulfato substituiertes C₁-C₄-Alkyl bedeuten,
A Wasserstoff, Halogen, C₁-C₄-Alkyl, C₁-C₄-Alkoxy, Sulfo, Carboxy, Trifluormethyl, Nitro, Cyano, Hydroxy, Carbamoyl, N-Mono- oder N,N-Di-C₁-C₄-Alkylcarbamoyl, Sulfamoyl, N-Mono- oder N,N-Di-C₁-C₄-Alkylsulfamoyl, C₁-C₄-Alkylsulfonyl oder C₁-C₄-Alkoxycarbonyl bedeutet,
(R₁₃)₀₋₂ für 0 bis 2 gleiche oder verschiedene Reste aus der Gruppe Methyl, Methoxy, Chlor und Sulfo steht,
Q einen Rest der Formel

   -SO₂-Y (2a)

   -CONH-(CH₂)ₙ-SO₂-Y (2b)

   -CONH-(CH₂)_{n'}-O-(CH₂)ₙ-SO₂-Y (2c)

   oder

   -(O)ₚ-(CH₂)ₘ-CONH-(CH₂)ₙ-SO₂-Y (2d),

   bedeutet,
m, n und n' unabhängig voneinander eine ganze Zahl 1 bis 6 und p die Zahl 0 oder 1 bedeuten,
Y für Vinyl, β-Brom- oder β-Chlorethyl, β-Acetoxyethyl, β-Phenoxyethyl,
β-Phosphatoethyl, β-Sulfatoethyl oder β-Thiosulfatoethyl steht,
D der Rest eines mindestens eine Sulfogruppe enthaltenden Monoazo-, Polyazo-, Metallkomplexazo-, Anthrachinon-, Triphendioxazin, Phthalocyanin- oder
Formazan-Chromophors ist, und
D₁ den Rest eines Monoazochromophors der Formel 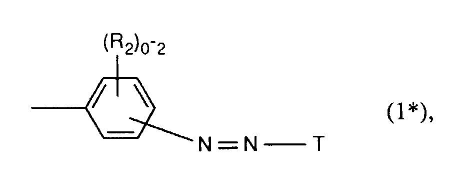 worin (R₂)₀₋₂ für 0 bis 2 gleiche oder verschiedene Reste R₂ aus der Gruppe Sulfo, Sulfomethyl, Hydroxy, Carboxy, Halogen, Cyano, Trifluoromethyl, Sulfamoyl, Carbamoyl, C₂-C₄-Alkanoylamino, Ureido, C₁-C₄-Alkyl, C₁-C₄-Alkoxy oder im Alkylteil durch C₁-C₄-Alkoxy, Hydroxy oder Sulfato substituiertes C₁-C₄-Alkoxy steht und T der Rest einer Diazokomponente oder Kupplungskomponente der Benzol- oder Naphthalinreihe oder der heterocyclischen Reihe ist; oder den Rest eines Polyazo-, Metallkomplexazo-, Anthrachinon-, Triphendioxazin, Phthalocyanin- oder Formazan-Chromophors bedeutet, mit der Massgabe,
dass der Rest -NR- nicht an einen durch -NH₂ substituierten Phenylenrest gebunden ist, wenn D für den Rest eines Monoazo- oder Disazochromophors steht.

C₁-C₄-Alkyl bedeutet generell Methyl, Ethyl, n- oder iso-Propyl oder n-, iso-, sec.- oder tert.-Butyl; C₁-C₄-Alkoxy umfasst generell Methoxy, Ethoxy, n- oder iso-Propoxy und n-, iso-, sec.- oder tert.-Butoxy; Halogen steht generell z.B. für Fluor, Brom oder insbesondere Chlor; C₁-C₄-Alkoxycarbonyl bedeutet generell Methoxycarbonyl, Ethoxycarbonyl, n- oder iso-Propoxycarbonyl oder n-, iso-, sec.- oder tert-Butoxycarbonyl, vorzugsweise Methoxycarbonyl oder Ethoxycarbonyl. Beispiele für C₁-C₄-Alkylsulfonyl sind Methyl- oder Ethylsulfonyl, Beispiele für N-Mono- oder N,N-Di-C₁-C₄-Alkylcarbamoyl sind N-Methylcarbamoyl, N-Ethylcarbamoyl, N,N-Dimethylcarbamoyl oder N,N-Diethylcarbamoyl, und Beispiele für N-Mono- oder N,N-Di-C₁-C₄-Alkylsulfamoyl sind N-Methylsulfamoyl, N-Ethylsulfamoyl, N-Propylsulfamoyl, N-Isopropylsulfamoyl, N-Butylsulfamoyl, N-β-Hydroxyethylsulfamoyl, N,N-Di-β-hydroxyethylsulfamoyl, N,N-Dimethyl- oder N,N-Diethylsulfamoyl. Beispiele für C₂-C₄-Alkanoylamino sind Acetylamino und Propionylamino. Beispiele für im Alkylteil substituiertes C₁-C₄-Alkoxy sind 2-Hydroxyethoxy, 3-Hydroxypropoxy, 2-Sulfatoethoxy, 2-Methoxyethoxy und 2-Ethoxyethoxy.

Beispiele für geeignete Reste R und R₁ sind Wasserstoff, unsubstituiertes C₁-C₄-Alkyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl und β-Sulfatoethyl.

R und R₁ stehen unabhängig voneinander je bevorzugt für Methyl, Ethyl oder insbesondere für Wasserstoff.

X bedeutet Fluor oder insbesondere Chlor.

Y steht bevorzugt für Vinyl oder β-Sulfatoethyl.

Die Chromophorreste D und D₁ können an ihrem Grundgerüst die bei organischen Farbstoffen üblichen Substituenten gebunden enthalten.

Als Beispiele für solche weiteren Substituenten der Chromophore seien genannt: C₁-C₄-Alkyl, C₁-C₄-Alkoxy, im Alkylteil z.B. durch Hydroxy, C₁-C₄-Alkoxy oder Sulfato substituiertes C₁-C₄-Alkoxy wie z.B. 2-Hydroxyethoxy, 3-Hydroxypropoxy, 2-Sulfatoethoxy, 2-Methoxyethoxy, 2-Ethoxyethoxy, Acylaminogruppen mit 1 bis 8 Kohlenstoffatomen, insbesondere Alkanoylaminogruppen und Alkoxycarbonylaminogruppen, wie Acetylamino, Propionylamino, Methoxycarbonylamino, Ethoxycarbonylamino oder Benzoylamino, Phenylamino, Amino, N-Mono- oder N,N-Di-C₁-C₄-Alkylamino, N,N-Di-β-hydroxyethylamino, N,N-Di-β-sulfatoethylamino, Sulfobenzylamino, N,N-Disulfobenzylamino, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Ethylcarbamoyl, Sulfamoyl, N-Alkylsulfamoyl mit 1 bis 4 Kohlenstoffatomen, wie N-Methylsulfamoyl, N-Ethylsulfamoyl, N-Propylsulfamoyl, N-Isopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Hydroxy, Carboxy, Sulfomethyl oder Sulfo. Die Reaktivfarbstoffe enthalten mindestens eine und vorzugsweise mindestens zwei Sulfonsäuregruppen.

Ein in D oder D₁ enthaltener faserreaktiver Rest -SO₂-Y kann direkt oder über ein Brückenglied an den Chromophor gebunden sein.

Vorzugsweise enthält D oder D₁ als faserreaktiven Rest einen Rest der zuvor angegebenen Formel (2a), (2b), (2c) oder (2d).

In den Formeln (2b), (2c) und (2d) stehen n und n' unabhängig voneinander vorzugsweise je für die Zahl 2, 3 oder 4, besonders bevorzugt für die Zahl 2 oder 3 und insbesondere bevorzugt für die Zahl 2.

m steht vorzugsweise für die Zahl 1, 2 oder 3 und besonders bevorzugt für die Zahl 1 oder 2.

p steht bevorzugt für die Zahl 0.

Von besonderem Interesse sind Verbindungen der Formel (1a) oder (1b), worin Q und ein gegebenenfalls in D oder D₁ vorhandener faserreaktiver Rest der Formel

-SO₂-Y (2a),

-CONH-(CH₂)₂₋₄-SO₂-Y (2b')

oder

-(CH₂)₁₋₃-CONH-(CH₂)₂₋₄-SO₂-Y (2d')

worin Y Vinyl, β-Brom- und β-Chlorethyl, β-Acetoxyethyl, β-Phenoxyethyl, β-Phosphatoethyl, β-Sulfatoethyl oder β-Thiosulfatoethyl bedeutet, entsprechen.

Besonders bevorzugt entsprechen Q und ein gegebenenfalls in D oder D₁ vorhandener faserreaktiver Rest der Formel

-SO₂-Y (2a)

und

-CONH-(CH₂)₂₋₃-SO₂-Y (2b''),

worin Y Vinyl oder β-Sulfatoethyl bedeutet. Hierbei ist es insbesondere bevorzugt, dass D und D₁ keinen faserreaktiven Rest aufweisen und Q einem faserreaktiven Rest der zuvor angegebenen Formel (2a) oder (2b") entspricht.

(R₂)₀₋₂ steht bevorzugt für 0 bis 2 Reste R₂ aus der Gruppe Sulfo, C₂-C₄-Alkanoylamino, Ureido, C₁-C₄-Alkyl, C₁-C₄-Alkoxy, 2-Hydroxyethoxy, 2-Sulfatoethoxy, 2-Methoxyethoxy und 2-Ethoxyethoxy. Besonders bevorzugt steht (R₂)₀₋₂ für 0 bis 2 Reste R₂ aus der Gruppe Sulfo, Acetylamino, Propionylamino, Ureido, Methyl, Methoxy, 2-Hydroxyethoxy oder 2-Sulfatoethoxy.

Bedeutet T den Rest einer Kupplungskomponente, handelt es sich z.B. um einen in geeigneter Weise substituierten Phenyl-, Naphthyl-, 6-Hydroxypyridon-(2)- oder 1-Phenyl- oder 1-Naphthylpyrazolon-(5)-Rest. Bevorzugt als Rest einer Kupplungskomponente T sind unsubstituiertes oder z.B. durch C₁-C₂-Alkyl, C₁-C₂-Alkoxy, Halogen, Carboxy, Sulfo, Hydroxy, Amino, N-Mono- oder N,N-Di-C₁-C₄-Alkylamino, C₂-C₄-Alkanoylamino oder Benzoylamino substituiertes Phenyl oder Naphthyl oder ein Rest der Formel 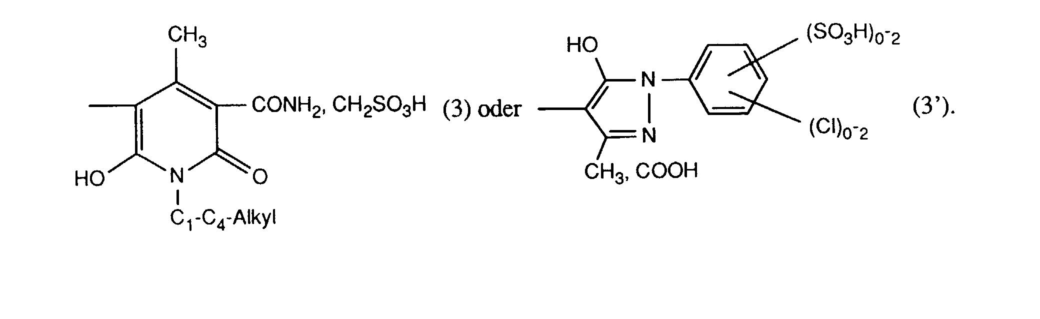 T steht als Rest einer Kupplungskomponente besonders bevorzugt für einen unsubstituierten oder durch Methyl, Methoxy, Chlor, Sulfo, Hydroxy, Amino, Acetylamino oder Benzoylamino substituierten Phenyl- oder Naphthylrest oder für einen Rest der oben angegebenen Formel (3).

Bedeutet T den Rest einer Diazokomponente, so handelt es sich z.B. um einen unsubstituierten oder z.B. durch C₁-C₂-Alkyl, C₁-C₂-Alkoxy, Carboxy, Sulfo, Halogen oder durch einen Rest der zuvor angegebenen Formel (2a) bis (2d) substituierten Phenyl- oder Naphthylrest. Bevorzugt steht T als Rest einer Diazokomponente für einen unsubstituierten oder durch Sulfo, Methyl, Methoxy, Chlor oder einen Rest der Formel (2a) oder (2b") substituierten Phenyl- oder Naphthylrest.

Bevorzugte Bedeutungen von D betreffen:
a) Farbstoffreste eines 1:1-Kupferkomplexazofarbstoffes der Benzol- oder Naphthalinreihe, worin das Kupferatom an je eine metallisierbare Gruppe beidseitig in ortho-Stellung zur Azobrücke gebunden ist.
b) Farbstoffreste eines Mono- oder Disazofarbstoffes, der Formel

   D*-N=N-(M-N=N)ᵤ-K- (3a)

   oder

   -D*-N=N-(M-N=N)ᵤ-K (3b),

   oder eines davon abgeleiteten Metallkomplexes; D* ist der Rest einer Diazokomponente der Benzol- oder Naphthalinreihe, M der Rest einer Mittelkomponente der Benzol- oder Naphthalinreihe, und K der Rest einer Kupplungskomponente der Benzol-, Naphthalin-, Pyrazolon-, 6-Hydroxypyridon-(2)- oder Acetessigsäurearylamid-Reihe, wobei D*, M und K bei Azofarbstoffen übliche Substituenten tragen können, insbesondere Hydroxy-, Amino-, Methyl-, Ethyl-, Methoxy- oder Ethoxygruppen, 2-Hydroxy-, 2-Methoxy- oder 2-Sulfatoethoxygruppen, gegebenenfalls substituierte Alkanoylaminogruppen mit 2 bis 4 C-Atomen, gegebenenfalls substituierte Benzoylaminogruppen, Halogenatome sowie im Fall von D₁ eine oder mehrere faserreaktive Reste der zuvor angegebenen Formel (2a), (2b), (2c) oder (2d); u = 0 oder 1 ist; und D*, M und K zusammen mindestens zwei Sulfogruppen, vorzugsweise drei oder vier Sulfogruppen, enthalten.
c) Farbstoffreste eines Disazofarbstoffes, der Formel

   -D*-N=N-K₁-N=N-D₁* (4a),

   worin D* und D₁* unabhängig voneinander der Rest einer Diazokomponente der Benzol- oder Naphthalinreihe sind und K₁ der Rest einer Kupplungskomponente der Naphthalinreihe ist; wobei D*, D₁* und K₁ bei Azofarbstoffen übliche Substituenten tragen können, insbesondere Hydroxy-, Amino-, Methyl-, Ethyl-, Methoxy- oder Ethoxygruppen, gegebenenfalls substituierte Alkanoylaminogruppen mit 2 bis 4 C-Atomen, 2-Hydroxy-, 2-Methoxy- oder 2-Sulfatoethoxygruppen, gegebenenfalls substituierte Benzoylaminogruppen, Halogenatome sowie im Fall von D₁ einer oder mehrere faserreaktive Reste der zuvor angegebenen Formel (2a), (2b), (2c) oder (2d), und D*, D₁* und K₁ zusammen mindestens zwei Sulfogruppen, vorzugsweise drei oder vier Sulfogruppen, enthalten.
d) Farbstoffreste eines Formazanfarbstoffes, der Formel 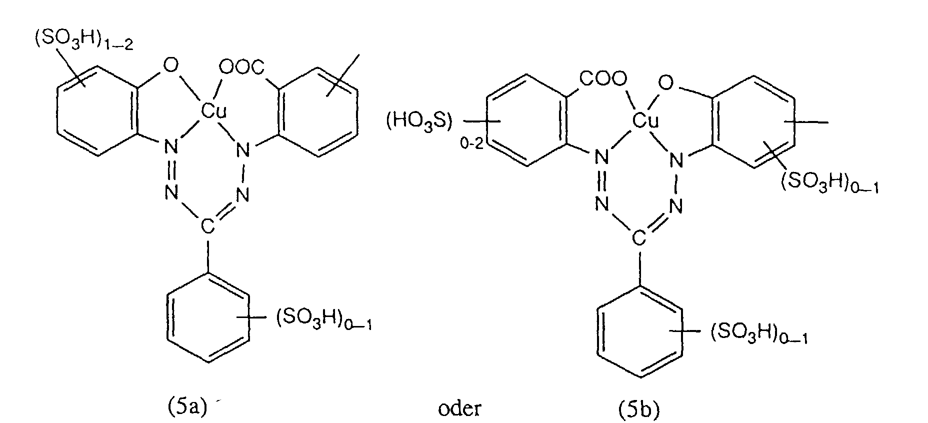 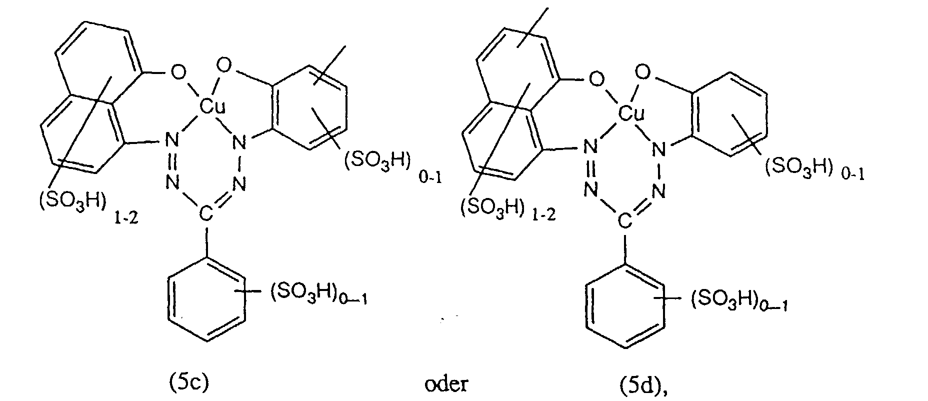 worin die Benzolkerne weiterhin durch Alkyl mit 1 bis 4 C-Atomen, Alkoxy mit 1 bis 4 C-Atomen, Alkylsulfonyl mit 1 bis 4 C-Atomen, Halogen, Carboxy sowie im Fall von D₁ durch einen oder mehrere faserreaktive Reste der zuvor angegebenen Formel (2a), (2b), (2c) oder (2d) substituiert sein können.
e) Farbstoffreste eines Anthrachinonfarbstoffes, der Formel 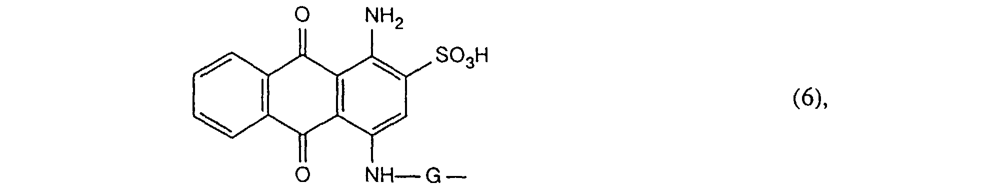 worin G ein Phenylen-, Cyclohexylen-, Phenylenmethylen- oder C₂-C₆-Alkylenrest ist; wobei der Anthrachinonkern durch eine weitere Sulfogruppe, und G als Phenylrest durch Alkyl mit 1 bis 4 C-Atomen, Alkoxy mit 1 bis 4 C-Atomen, Halogen, Carboxy oder Sulfo substituiert sein kann, und der Farbstoff vorzugsweise mindestens 2 Sulfogruppen enthält.
f) Farbstoffreste eines Phthalocyaninfarbstoffes, der Formel 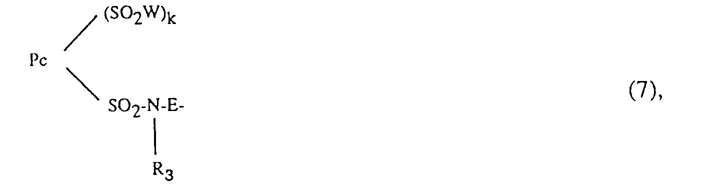 worin Pc der Rest eines Kupfer- oder Nickelphthalocyanins; W -OH und/oder -NR₄R₅; R₄ und R₅ unabhängig voneinander Wasserstoff oder Alkyl mit 1 bis 4 Kohlenstoffatomen, das durch Hydroxy oder Sulfo substituiert sein kann; R₃ Wasserstoff oder Alkyl mit 1 bis 4 Kohlenstoffatomen; E ein Phenylenrest, der durch Alkyl mit 1 bis 4 C-Atomen, Halogen, Carboxy oder Sulfo substituiert sein kann; oder ein Alkylenrest mit 2 bis 6 C-Atomen, vorzugsweise ein Sulfophenylen- oder Ethylenrest; und k = 1, 2 oder 3 ist.
g) Farbstoffreste eines Dioxazinfarbstoffes, der Formel 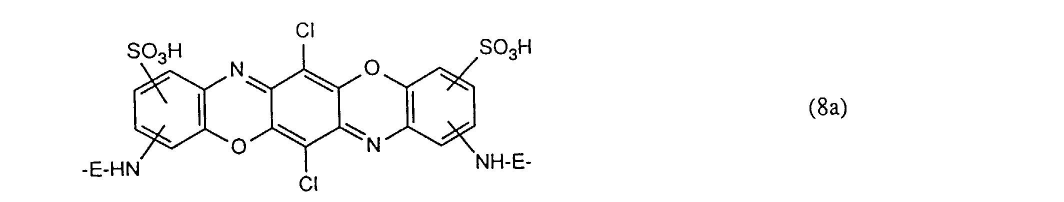 oder 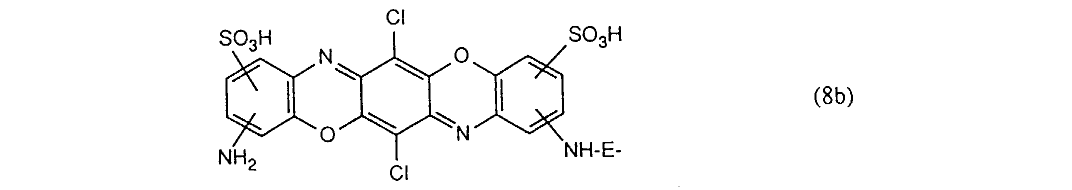 oder 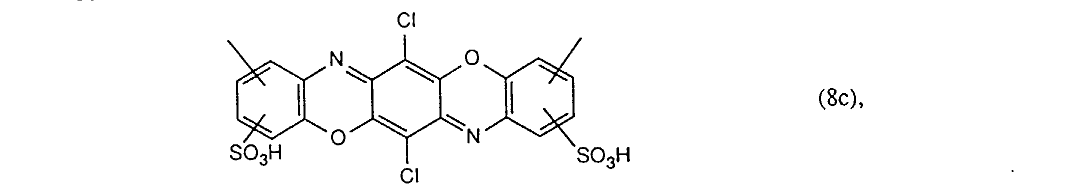 worin E ein Phenylenrest, der durch Alkyl mit 1 bis 4 C-Atomen, Halogen, Carboxy oder Sulfo substituiert sein kann; oder ein Alkylenrest mit 2 bis 6 C-Atomen ist; und die äusseren Benzolringe in den Formeln (8a), (8b) und (8c) durch Alkyl mit 1 bis 4 C-Atomen, Alkoxy mit 1 bis 4 C-Atomen, Acetylamino, Nitro, Halogen, Carboxy, Sulfo sowie im Fall von D₁ durch eine oder mehrere faserreaktive Reste der zuvor angegebenen Formel (2a), (2b), (2c) oder (2d) weitersubstituiert sein können.

Für die Reaktivfarbstoffe der erfindungsgemässen Formel (1a) sind als Farbstoffreste D die Chromophorreste der nachfolgenden Formeln (9) bis (22) besonders wichtig: 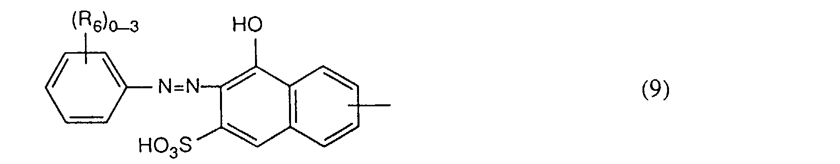 worin R₆ für C₁-C₄-Alkyl, C₁-C₄-Alkoxy, Halogen, Carboxy und Sulfo steht. 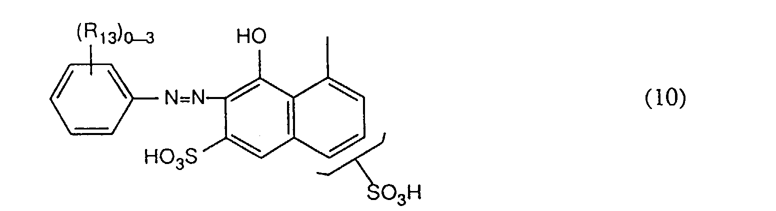 worin R₁₃ für C₁-C₄-Alkyl, C₁-C₄-Alkoxy, Halogen, Carboxy, Sulfo oder C₁-C₄-Alkoxyanilino steht. 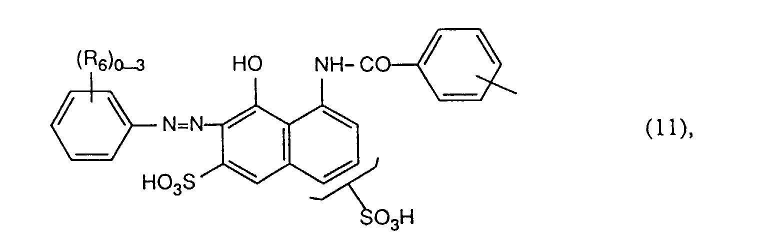 worin R₆ für C₁-C₄-Alkyl, C₁-C₄-Alkoxy, Halogen, Carboxy und Sulfo steht. 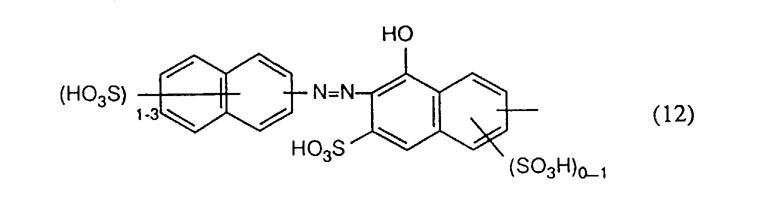 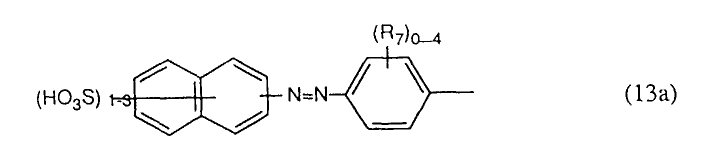 oder 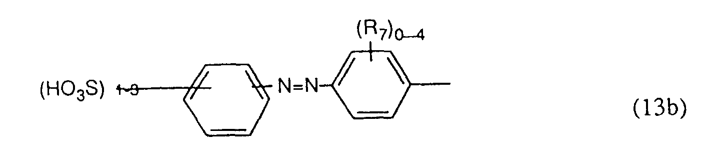 oder 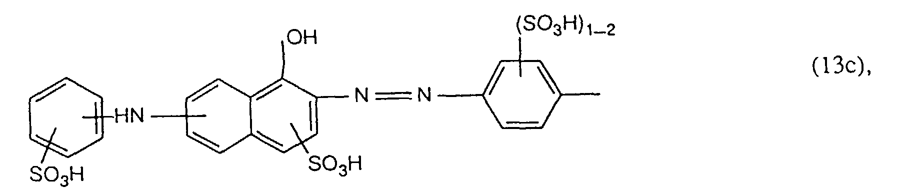 worin R₇ für Halogen, Nitro, Cyan, Trifluormethyl, Sulfamoyl, Carbamoyl, C₁-C₄-Alkyl, C₁-C₄-Alkoxy, Acetylamino, Ureido, Hydroxy, Carboxy, Sulfomethyl und Sulfo steht. 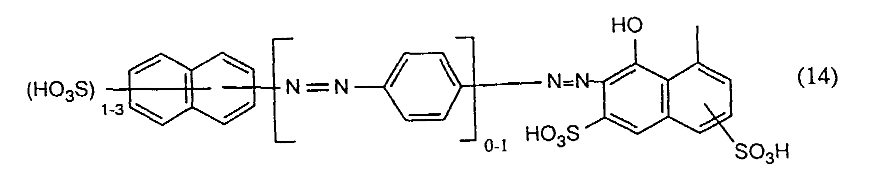 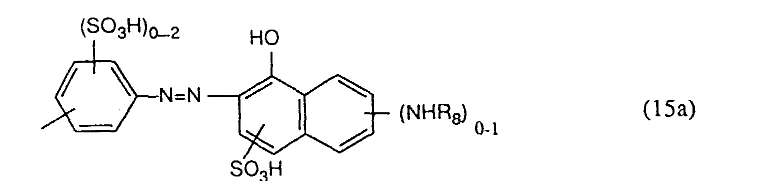 oder 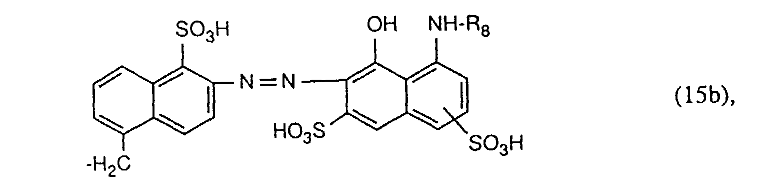 worin R₈ C₁-C₄-Alkanoyl oder Benzoyl ist. 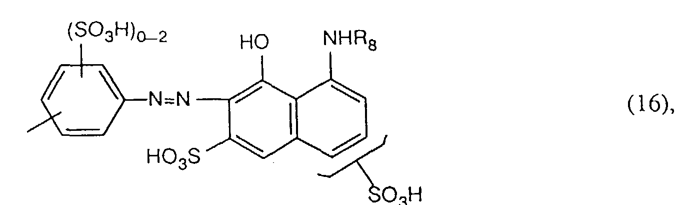 worin R₈ C₁-C₄-Alkanoyl oder Benzoyl ist. 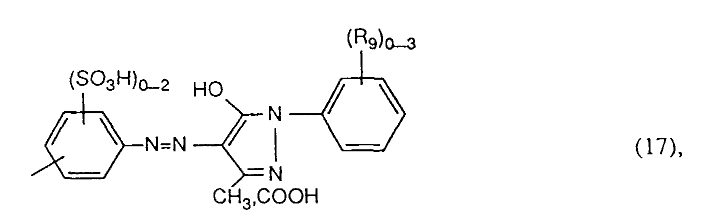 worin R₉ für C₁-C₄-Alkyl, C₁-C₄-Alkoxy, Halogen, Carboxy und Sulfo steht. 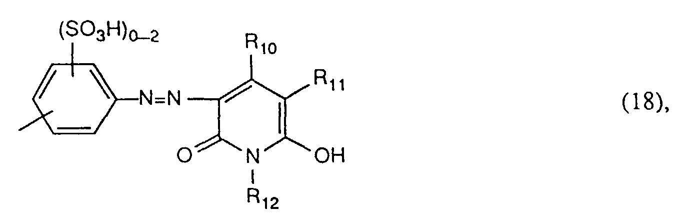 worin R₁₂ und R₁₀ unabhängig voneinander Wasserstoff, C₁-C₄-Alkyl oder Phenyl, und R₁₁ Wasserstoff, Cyano, Carbamoyl oder Sulfomethyl ist. 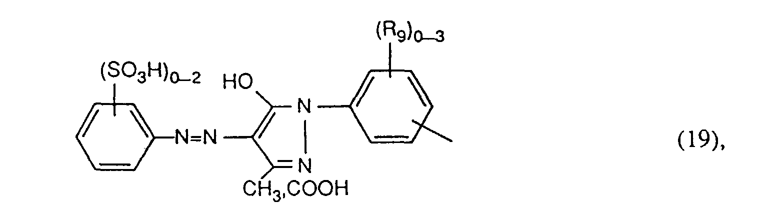 worin R₉ für C₁-C₄-Alkyl, C₁-C₄-Alkoxy, Halogen, Carboxy und Sulfo steht. 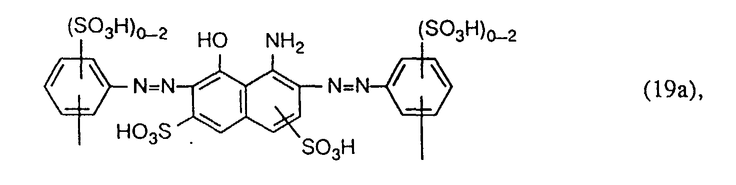 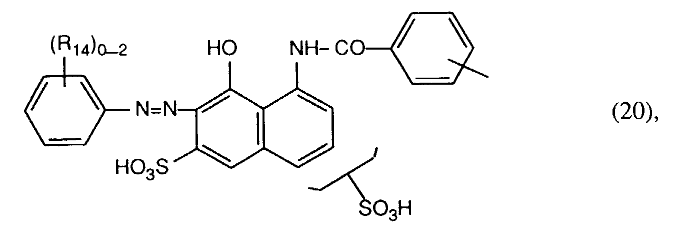 worin R₁₄ für C₁-C₄-Alkyl, C₁-C₄-Alkoxy, Halogen, Carboxy und Sulfo steht. 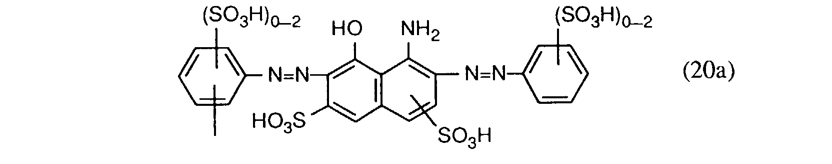 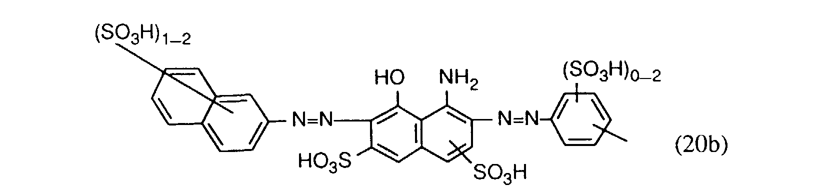 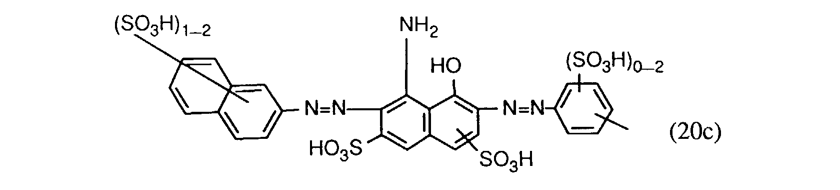 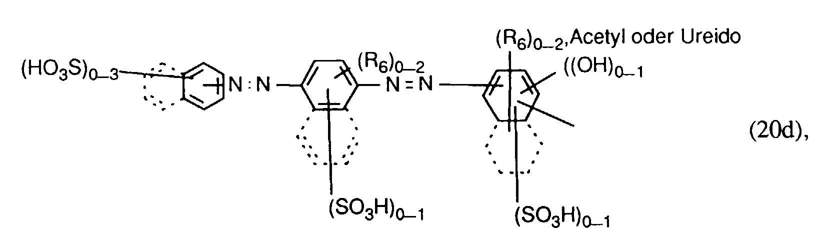 worin R₆ die unter Formel (11) angegebene Bedeutung hat. 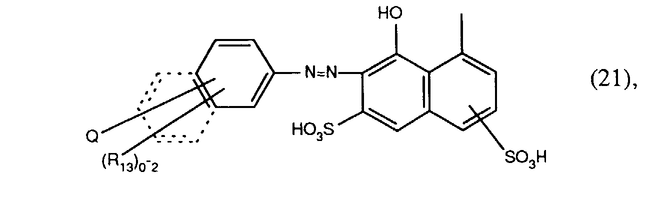 worin Q für einen Rest der zuvor angegebenen Formel (2a), (2b') oder (2d') steht und (R₁₃)₀₋₂ für 0 bis 2 gleiche oder verschiedene Reste R₁₃ aus der Gruppe Methyl, Methoxy, Chlor und Sulfo steht. 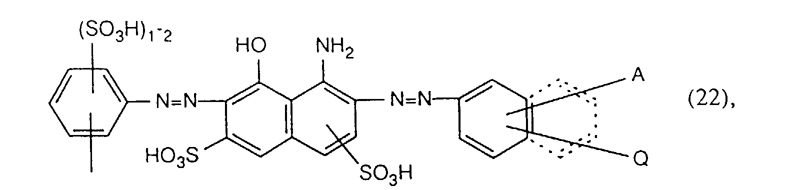 worin A Wasserstoff, Halogen, C₁-C₄-Alkyl, C₁-C₄-Alkoxy, Sulfo, Carboxy, Trifluormethyl, Nitro, Cyano, Hydroxy, Carbamoyl, N-Mono- oder N,N-Di-C₁-C₄-Alkylcarbamoyl, Sulfamoyl, N-Mono- oder N,N-Di-C₁-C₄-Alkylsulfamoyl, C₁-C₄-Alkylsulfonyl oder C₁-C₄-Alkoxycarbonyl bedeutet und Q für einen Rest der zuvor angegebenen Formel (2a), (2b), (2c) oder (2d) steht.

Die erfindungsgemäss besonders bevorzugten Reste D entsprechen der zuvor angegebenen Formel (5a), (5b) oder (6) oder der Formel 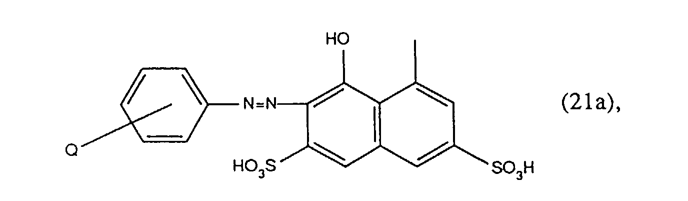 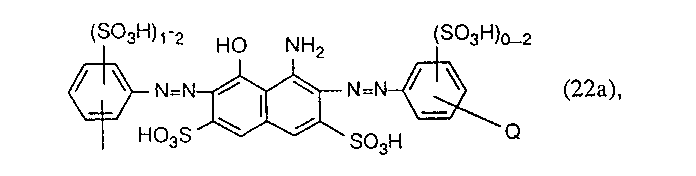 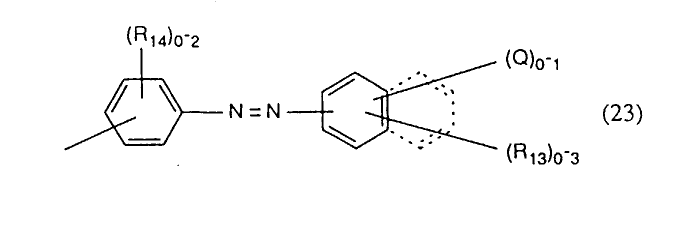 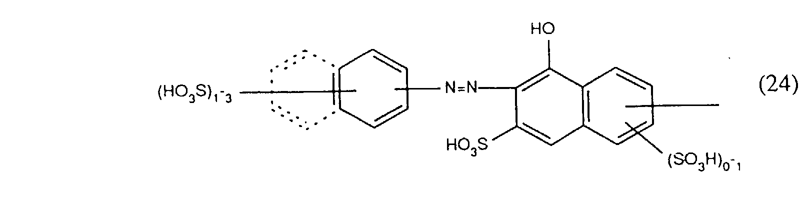 oder 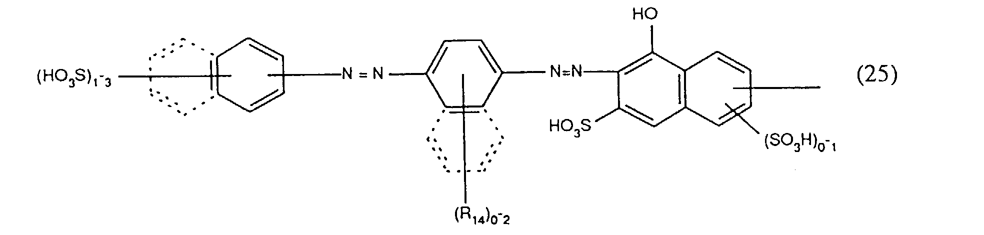 worin (R₁₃)₀₋₃ für 0 bis 3 gleiche oder verschiedene Reste R13 aus der Gruppe Methyl, Methoxy, Chlor und Sulfo steht, (R₁₄)₀₋₂ für 0 bis 2 gleiche oder verschiedene Reste aus der Gruppe Sulfo, Acetylamino, Propionylamino, Ureido, Methyl, Methoxy, 2-Hydroxyethoxy und 2-Sulfatoethoxy bedeutet und Q für einen Rest der zuvor angegebenen Formel (2a) oder (2b") steht.

Steht D₁ für den Rest eines Polyazo-, Metallkomplexazo-, Anthrachinon-, Triphendioxazin, Phthalocyanin- oder Formazan-Chromophors, so gelten hierbei die zuvor für D angegebenen Bedeutungen und Bevorzugungen.

Steht D₁ für den Rest eines Monoazochromophors, handelt es sich vorzugsweise um einen Rest der zuvor angegebenen Formel (1*), worin für die darin enthaltenen Variablen die genannten Bedeutungen und Bevorzugungen gelten.

Besonders bevorzugt steht D₁ für einen Rest der oben angegebenen Formel (5a), (5b), (6), (22) bzw. (22a) oder (23) sowie für einen Rest der Formel 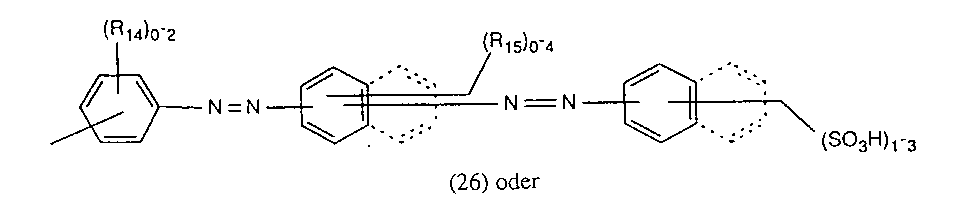 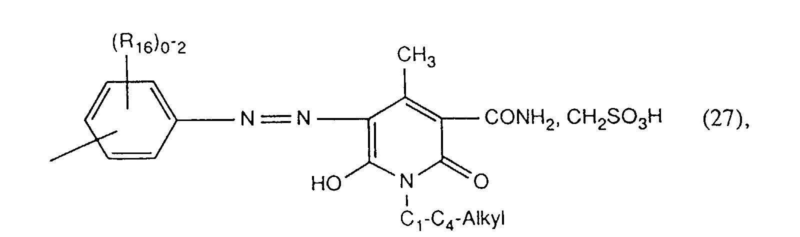 worin (R₁₄)₀₋₂ die zuvor angegebene Bedeutung hat, (R₁₅)₀₋₄ für 0 bis 4 gleiche oder verschiedene Reste aus der Gruppe Sulfo, Hydroxy, Amino, Methoxy, 2-Hydroxyethoxy, 2-Sulfatoethoxy, Methyl, Acetylamino, Benzoylamino, Propionylamino und Ureido steht und (R₁₆)₀₋₂ für 0 bis 2 gleiche oder verschiedene Reste aus der Gruppe Sulfo, Methyl, Methoxy und Chlor steht.

Eine bevorzugte Ausführungsform der vorliegenden Erfindung betrifft Verbindungen der Formel 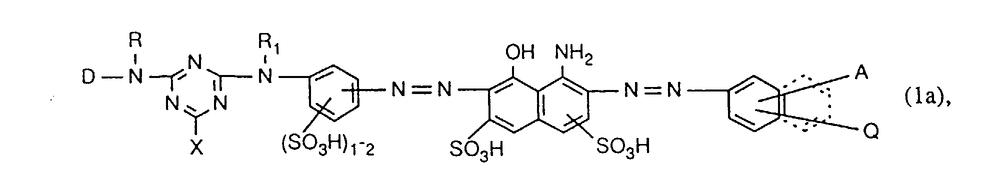 worin für A, D, Q, R, R₁ und X jeweils die zuvor genannten Bedeutungen und Bevorzugungen gelten.

Eine weitere bevorzugte Ausführungsform der vorliegenden Erfindung betrifft Verbindungen der Formel 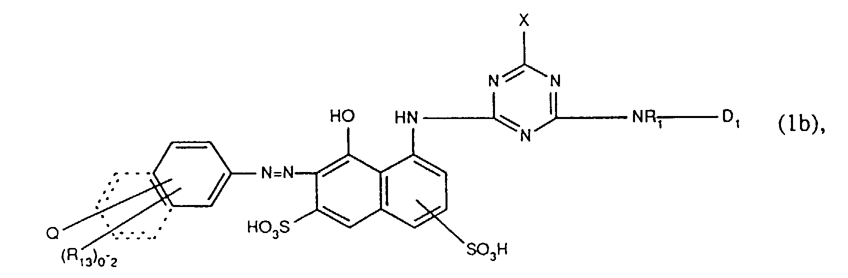 worin für D₁, Q, (R₁₃)₀₋₂ und X jeweils die zuvor angegebenen Bedeutungen und Bevorzugungen gelten.

Beispiele für geeignete Reste D-NR- oder D₁-NR₁- sind:

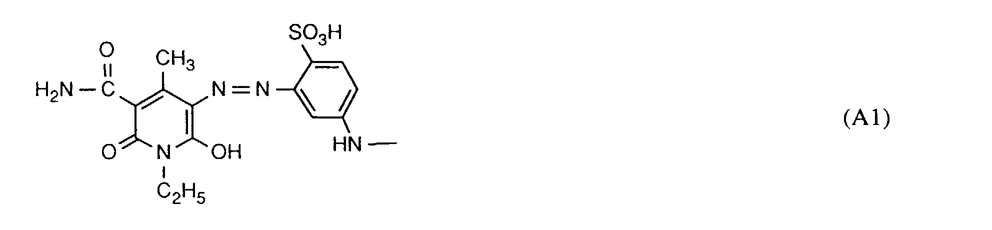

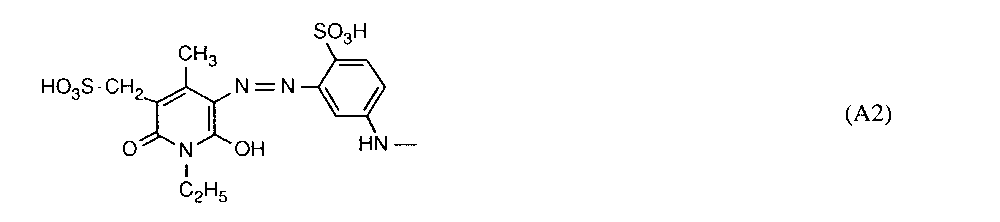

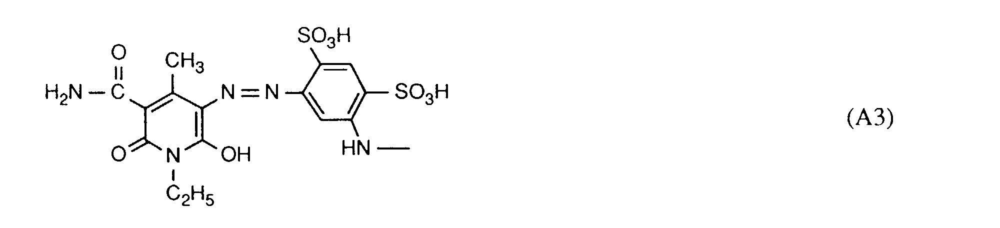

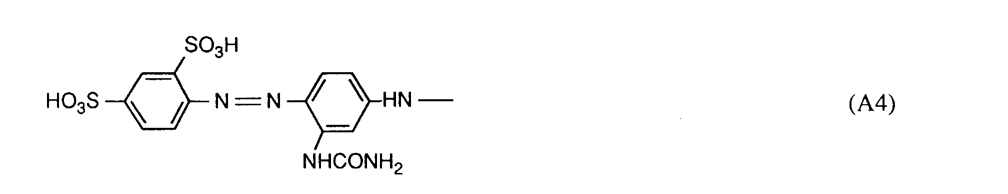

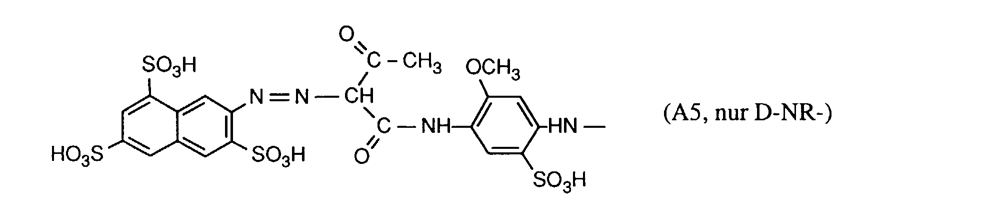

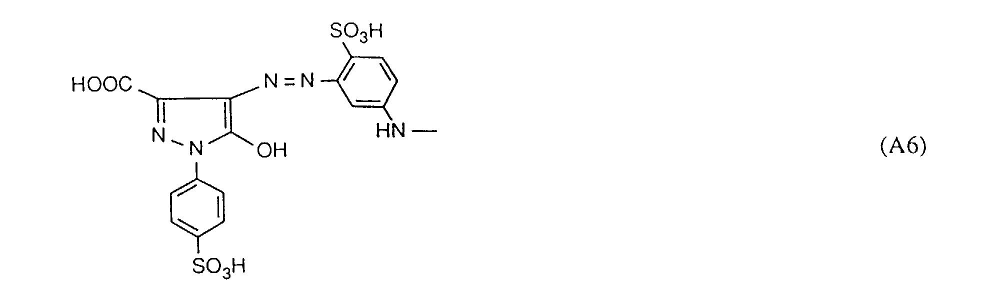

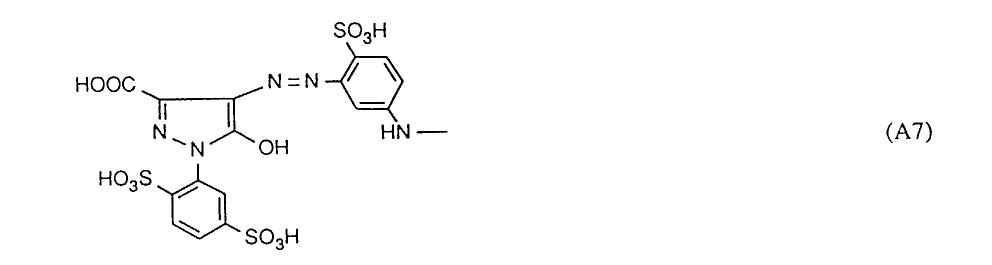

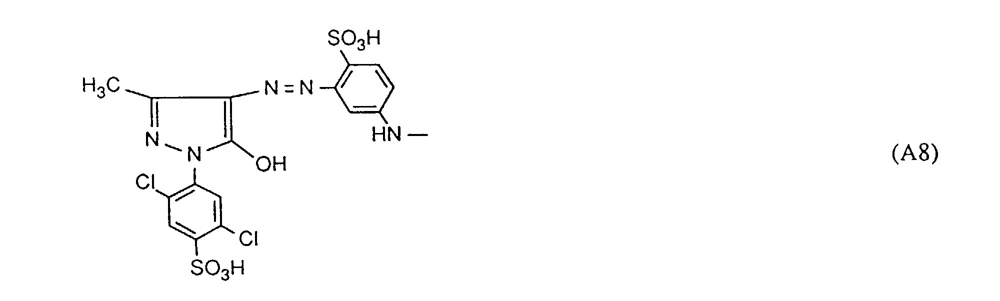

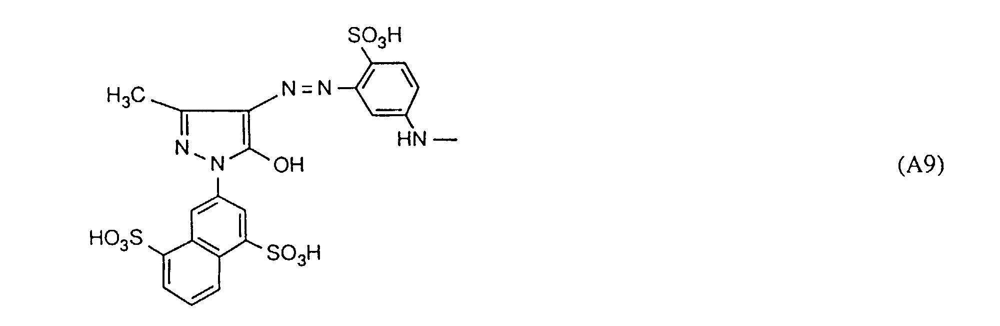

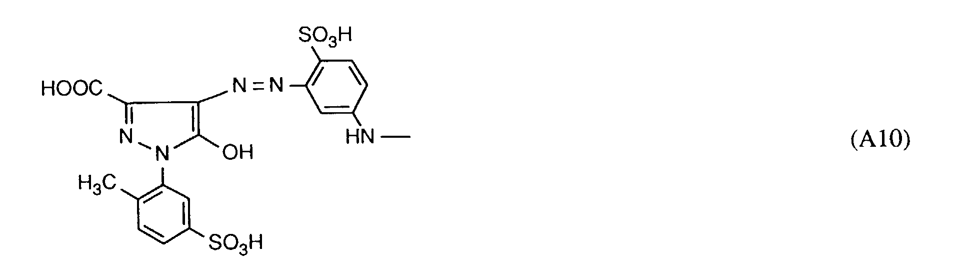

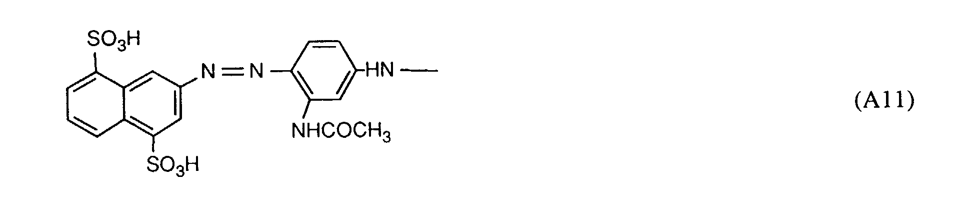

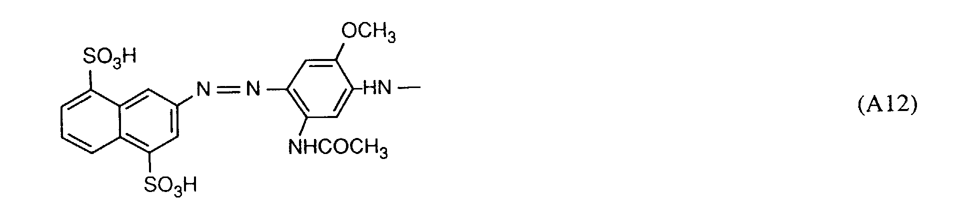

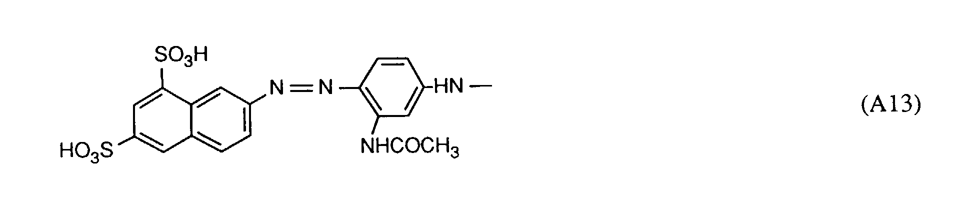

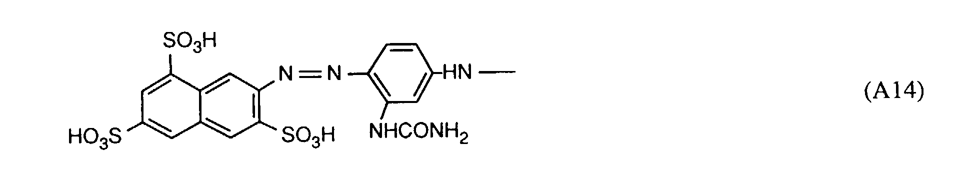

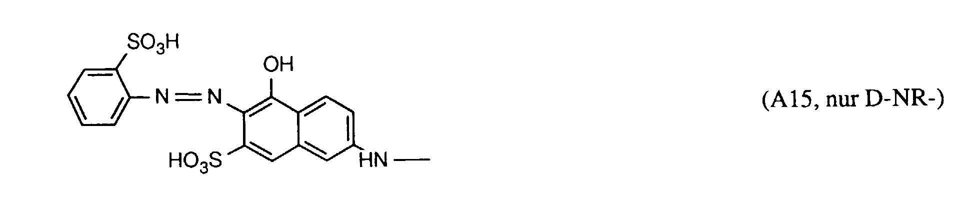

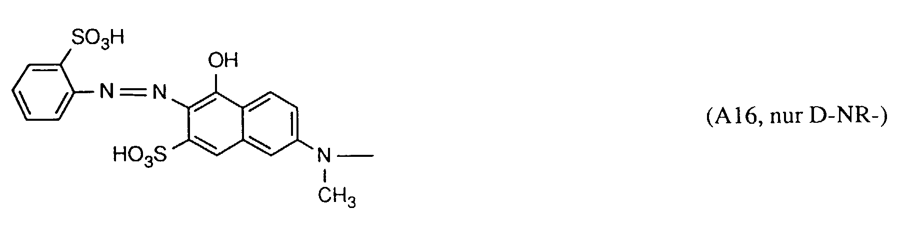

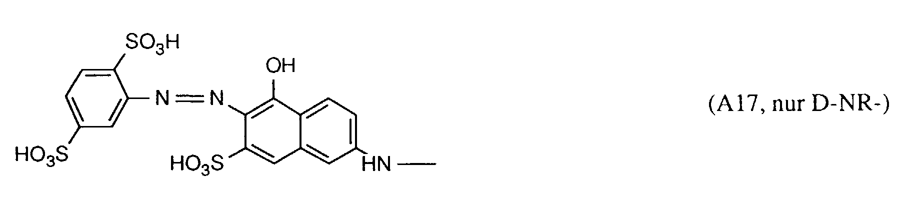

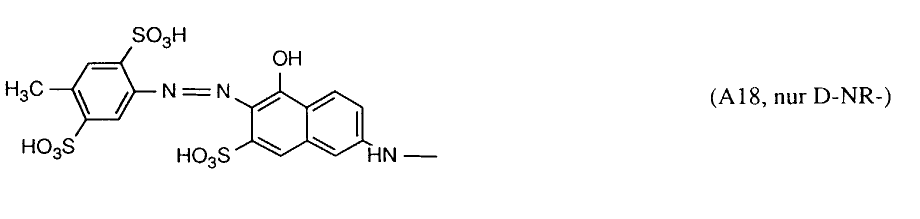

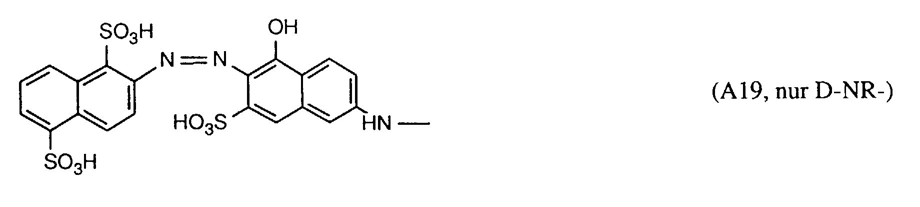

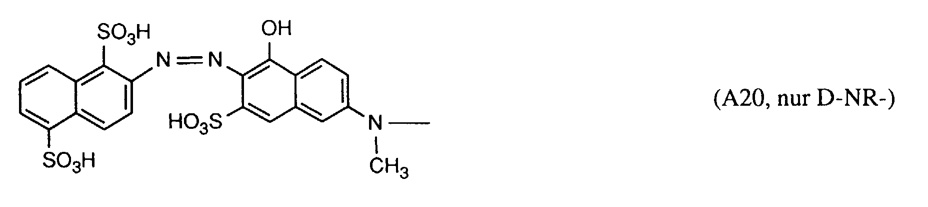

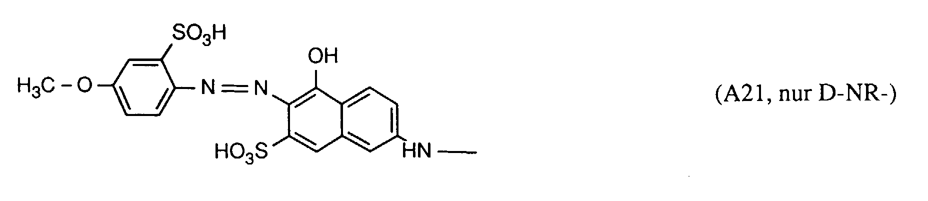

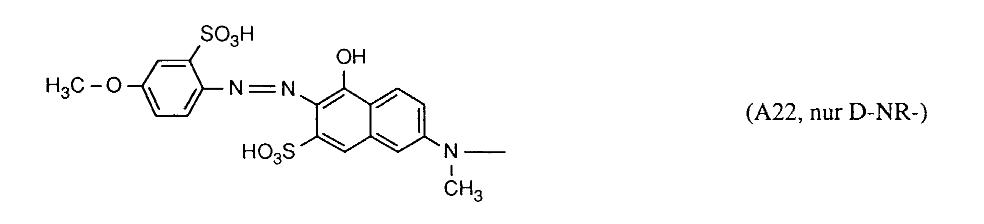

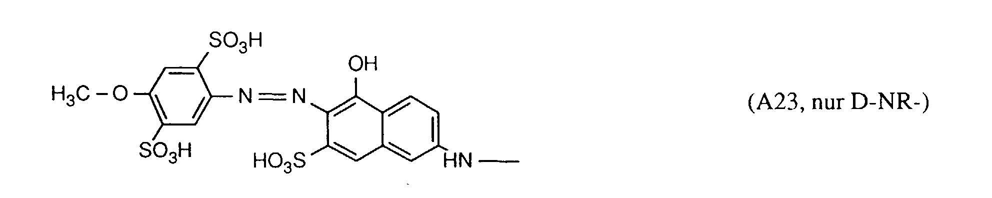

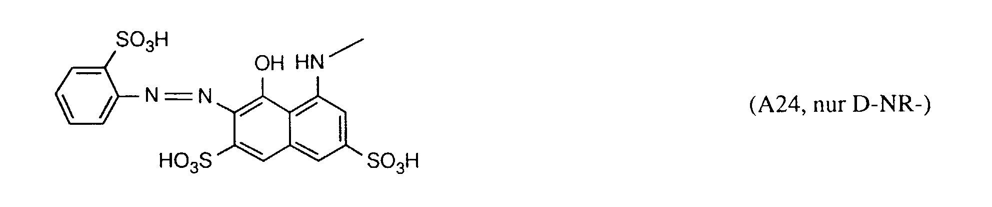

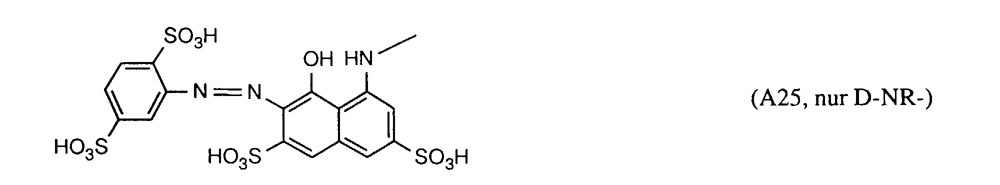

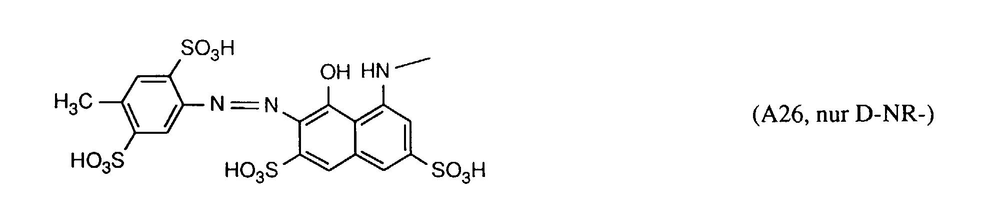

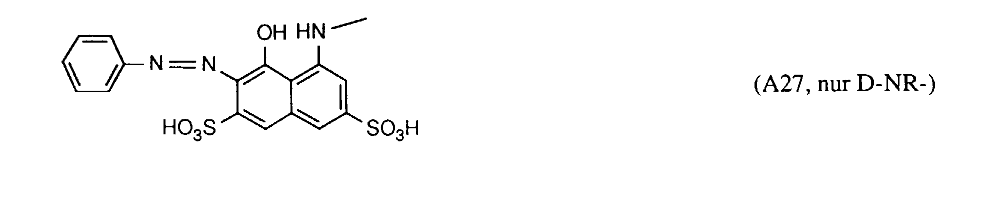

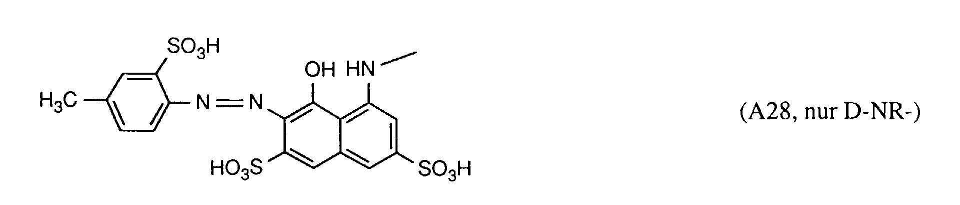

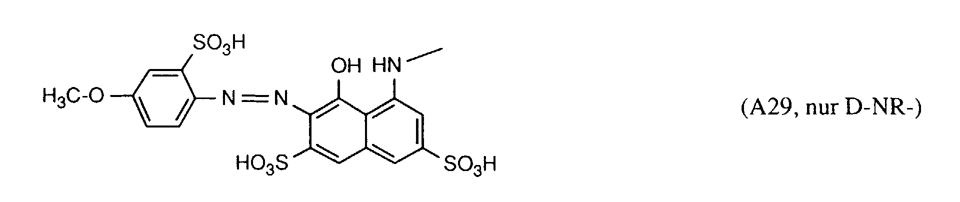

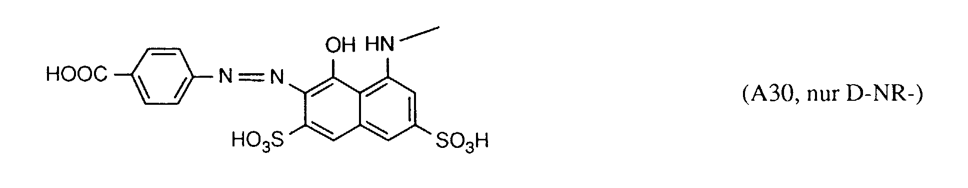

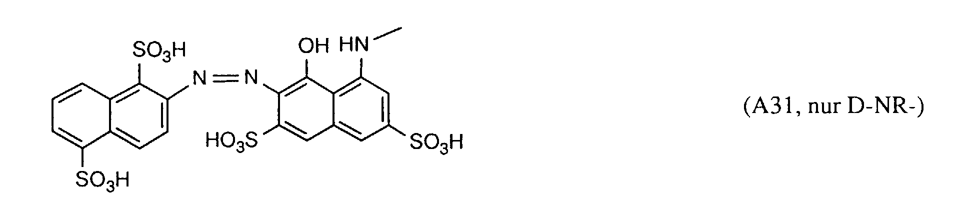

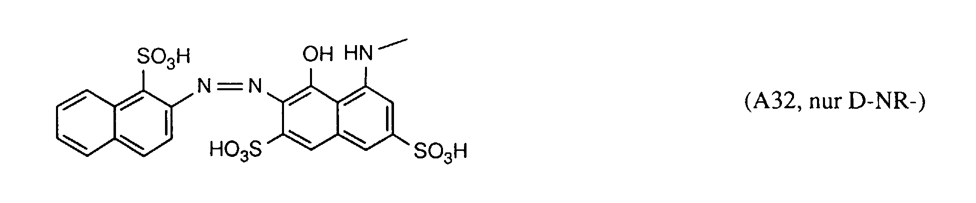

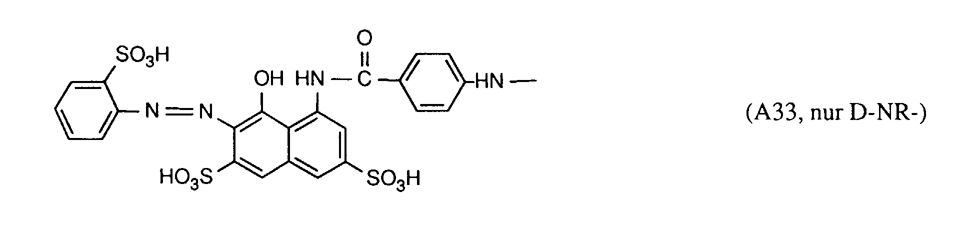

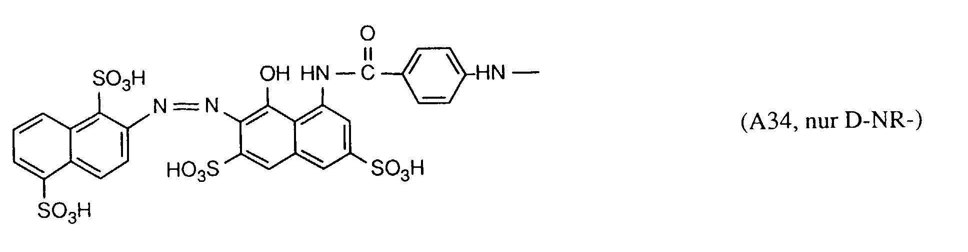

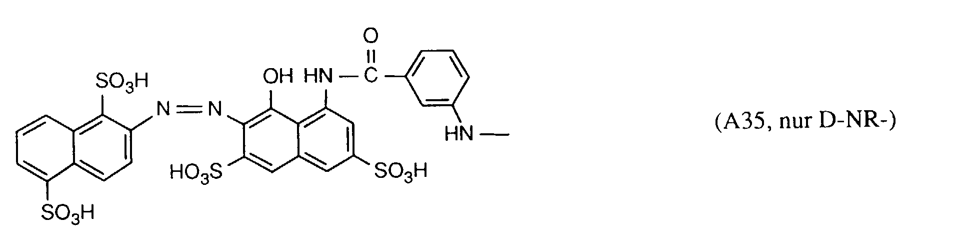

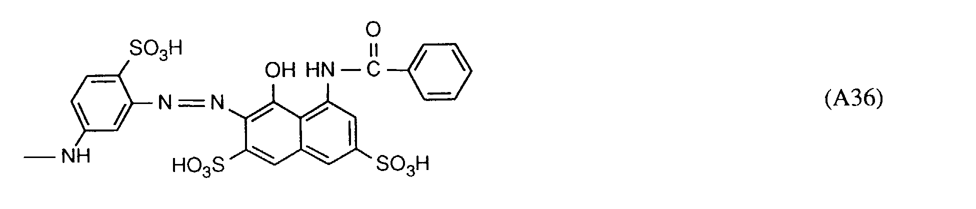

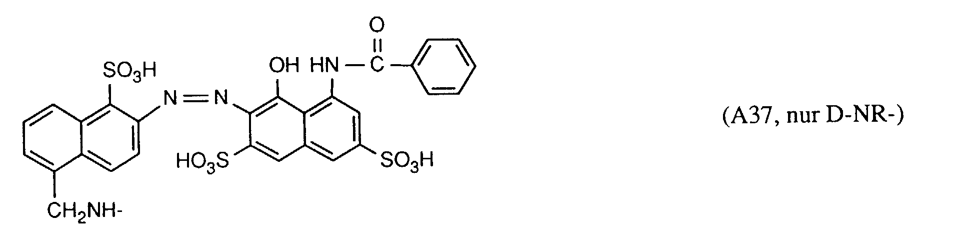

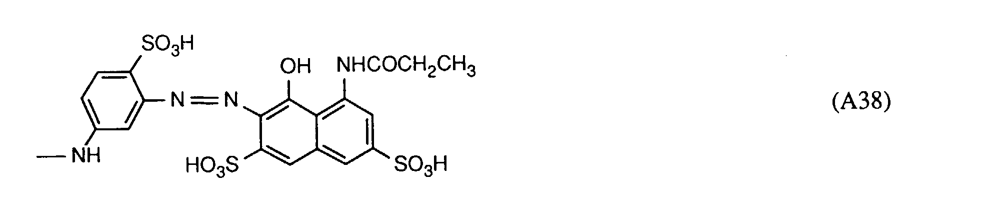

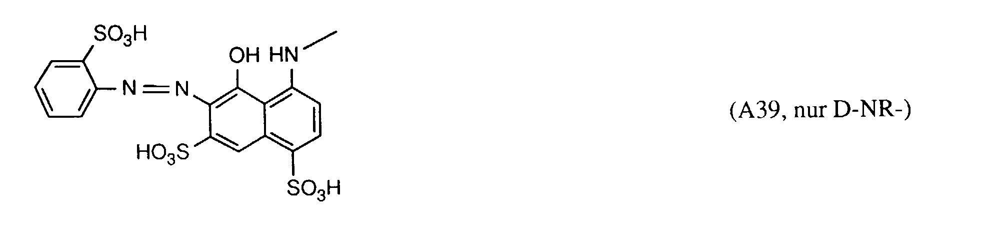

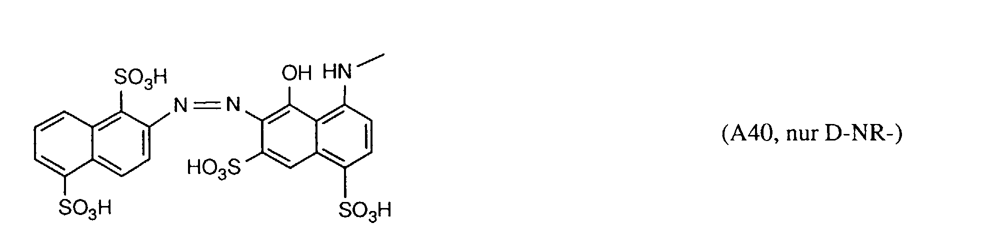

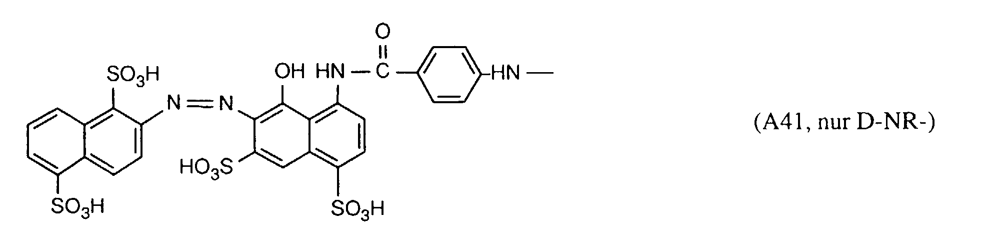

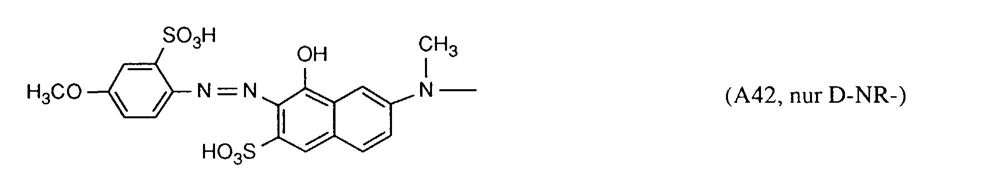

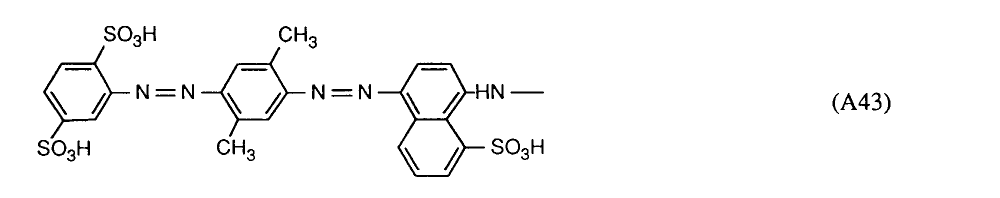

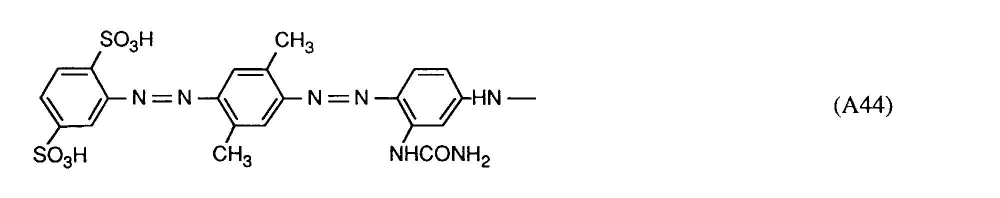

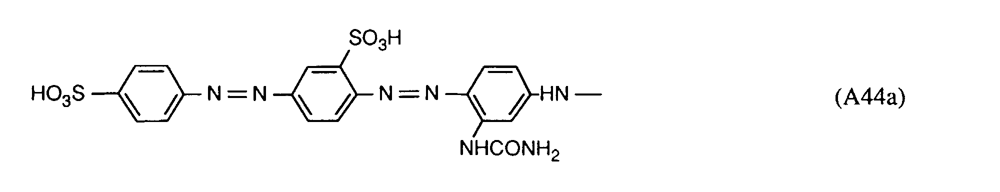

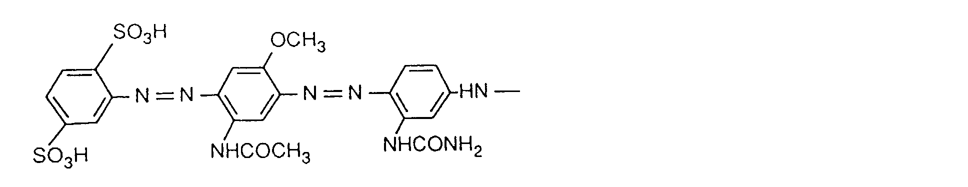

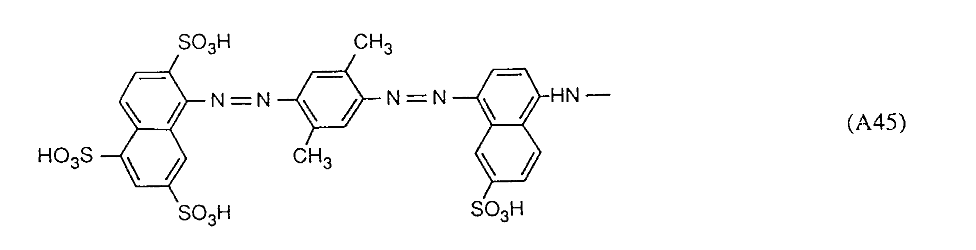

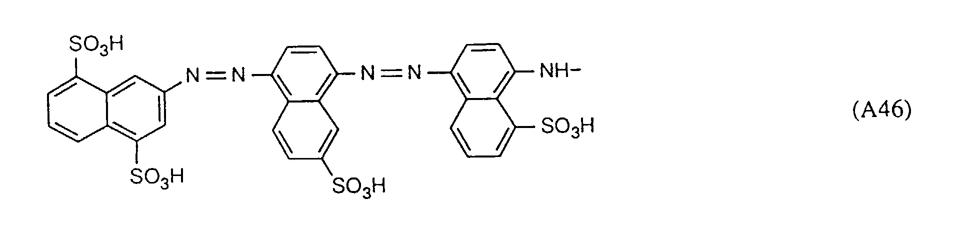

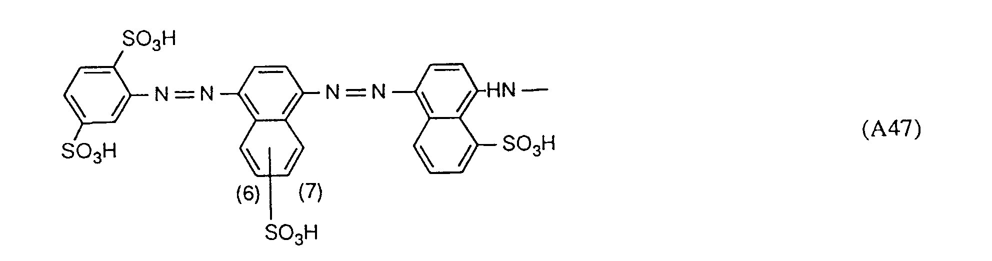

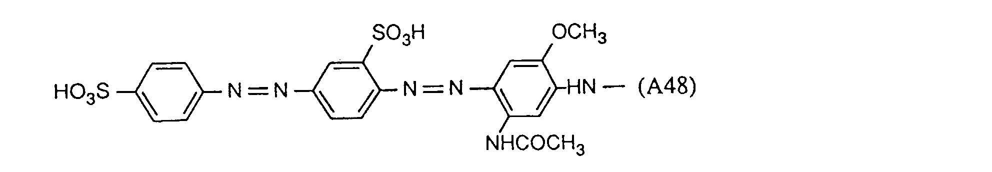

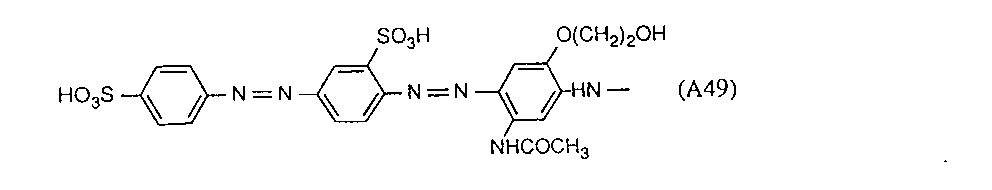

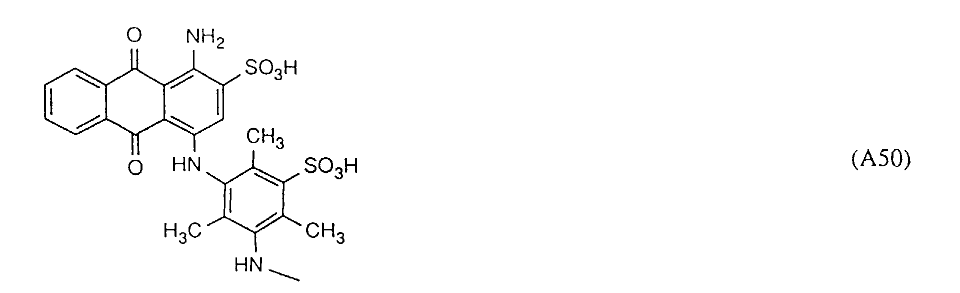

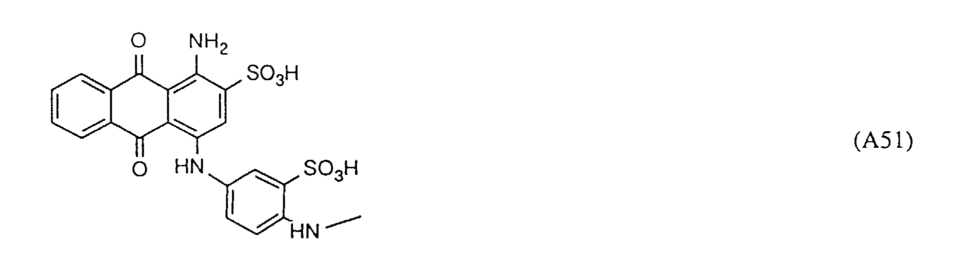

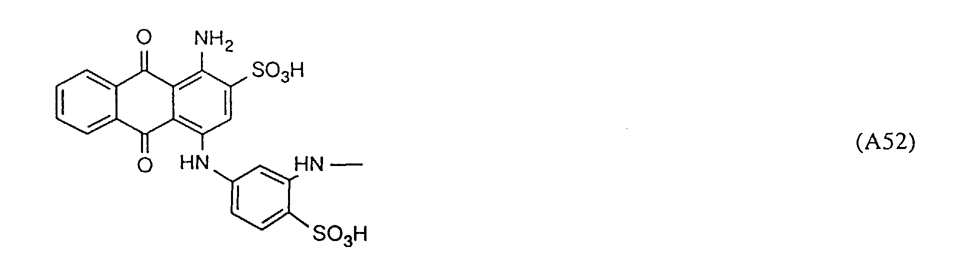

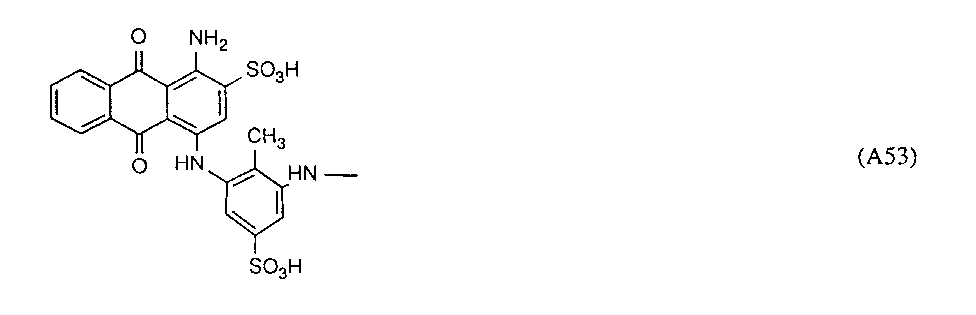

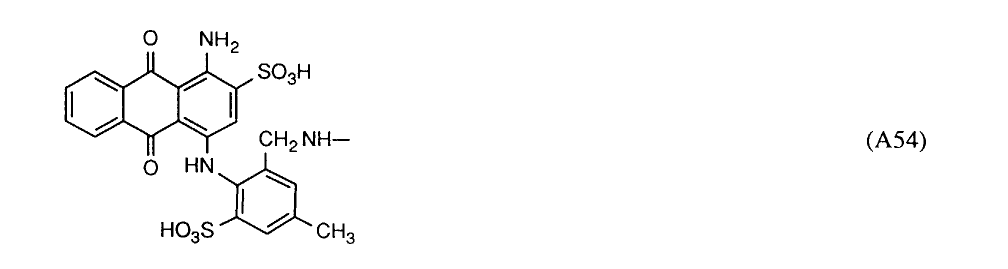

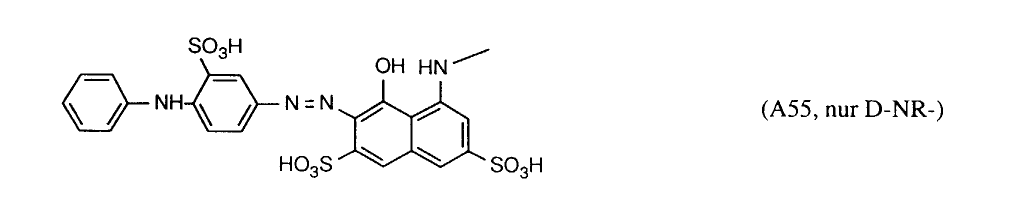

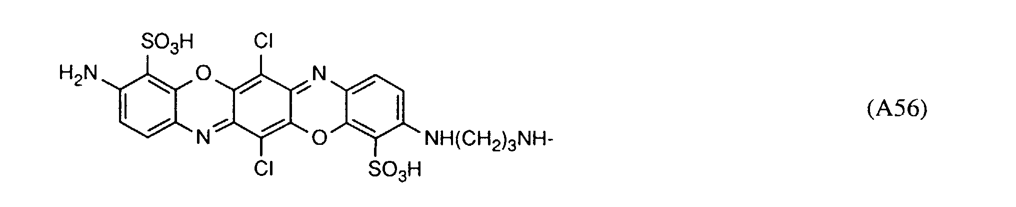

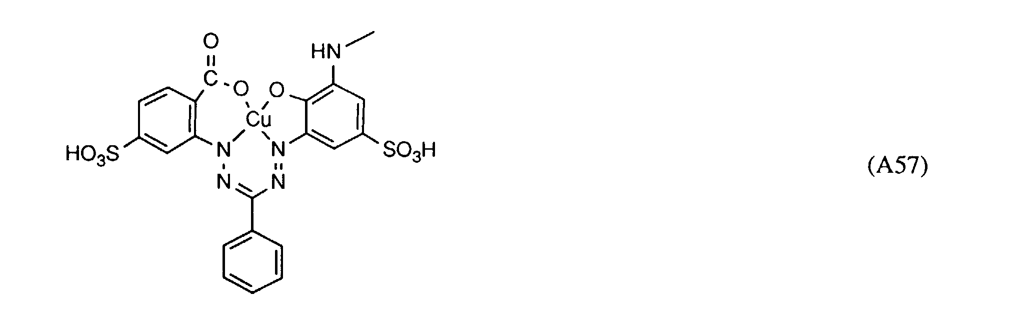

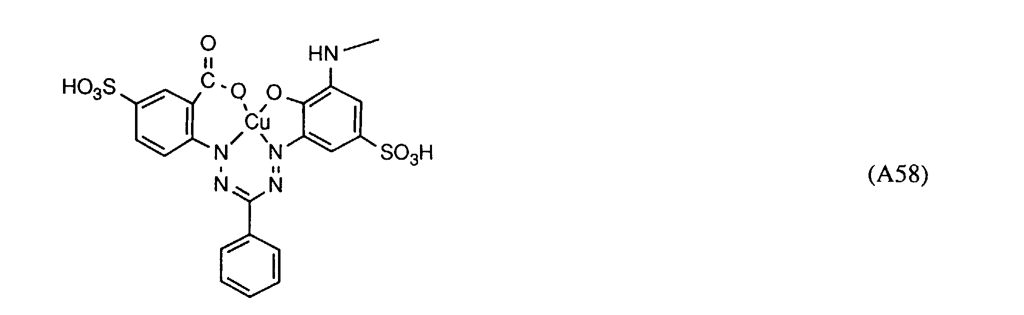

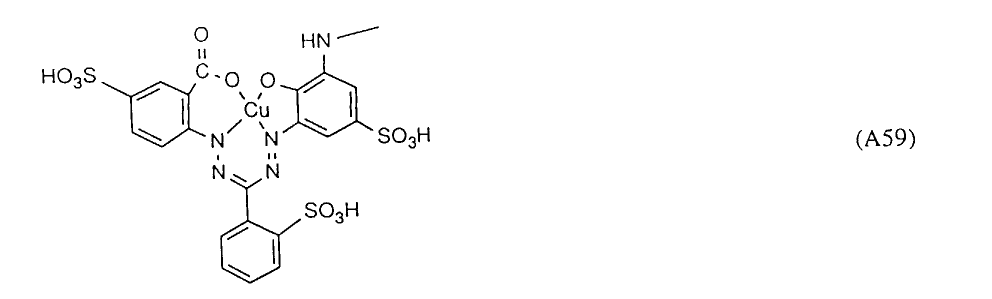

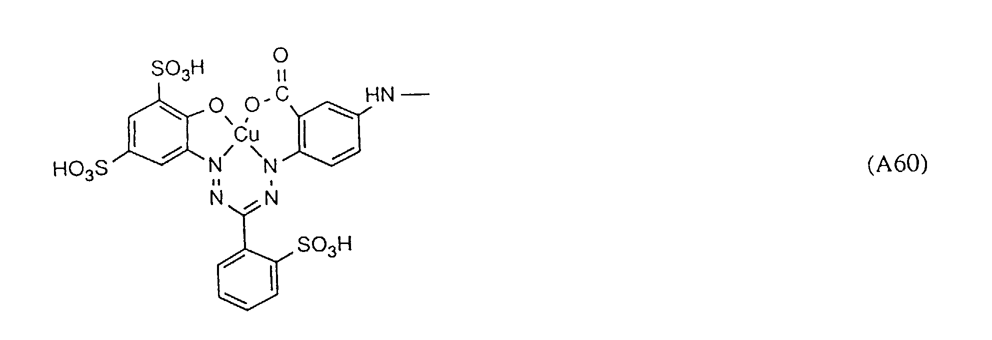

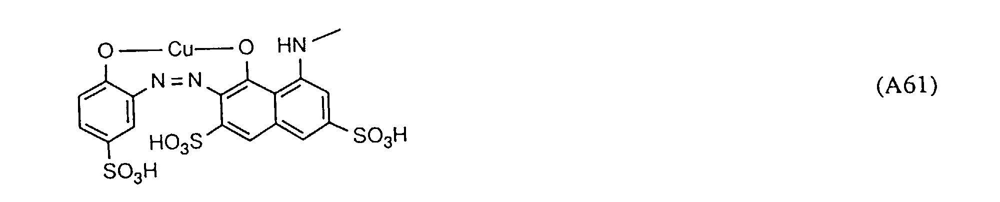

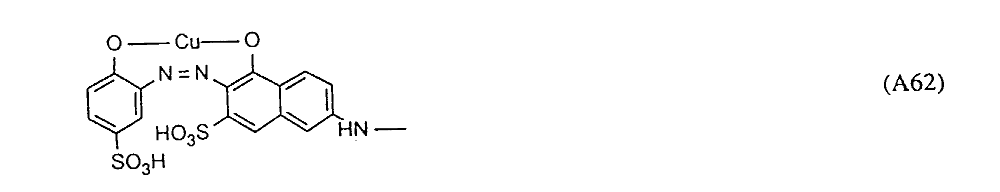

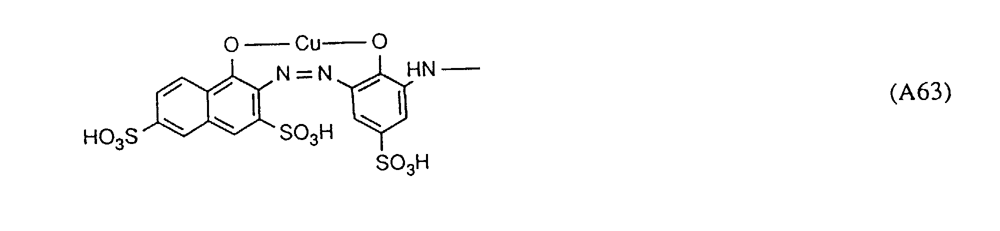

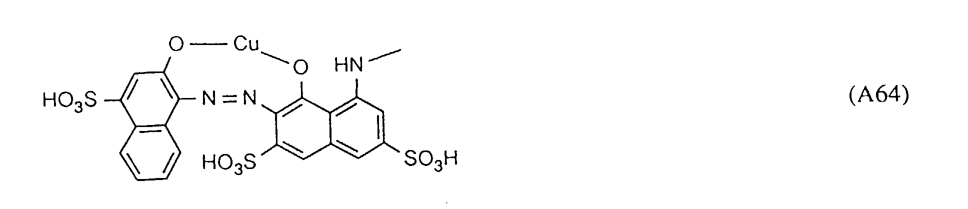

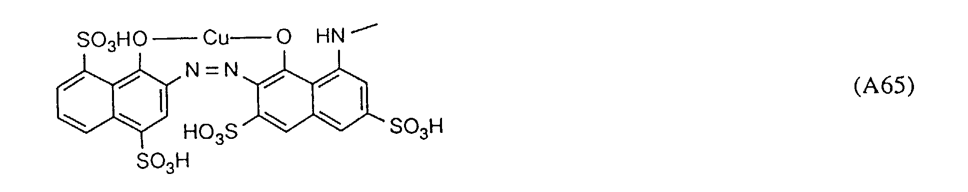

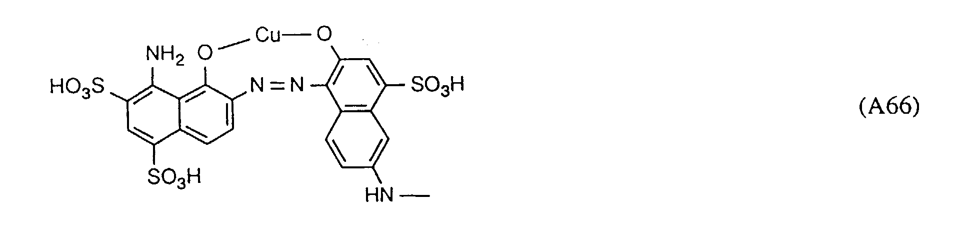

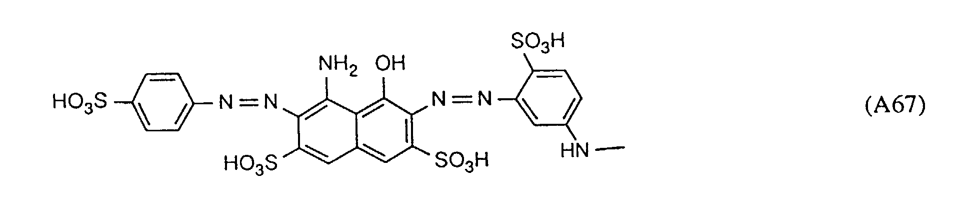

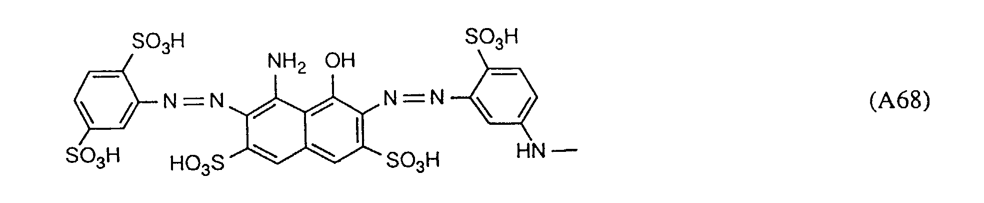

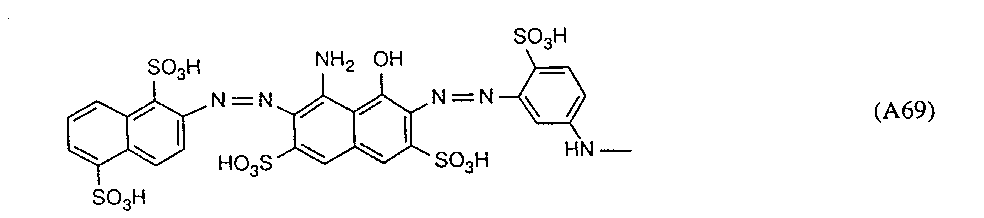

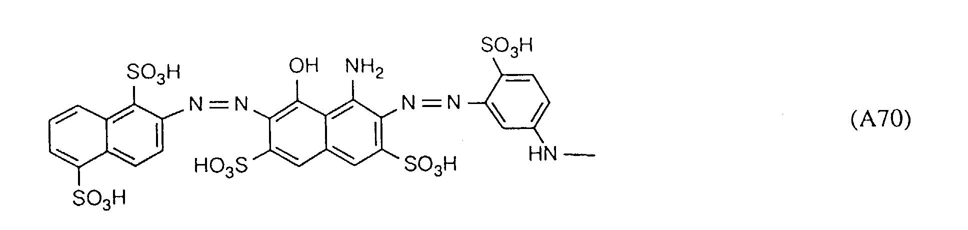

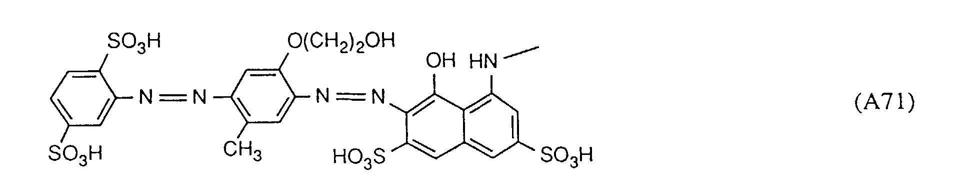

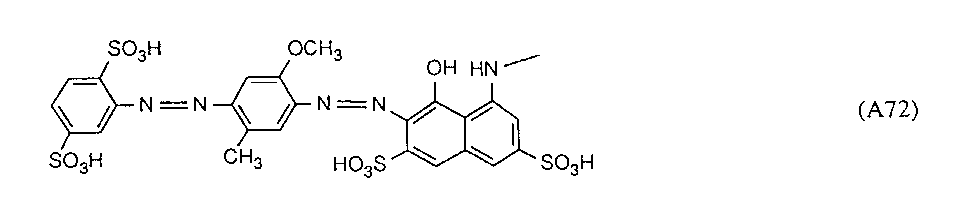

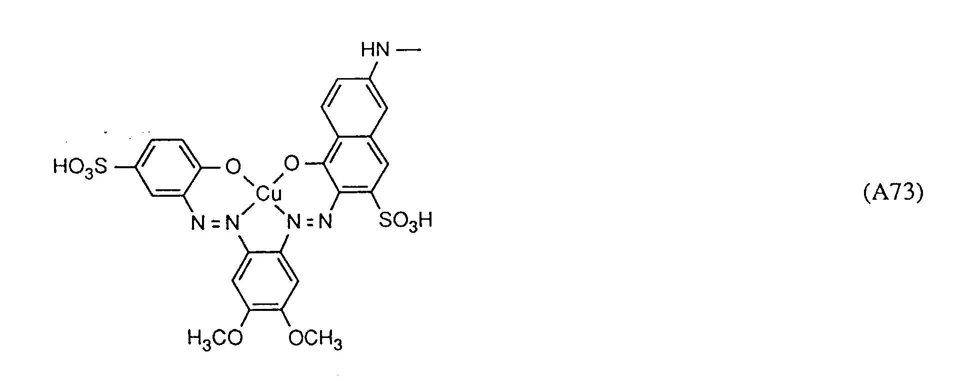

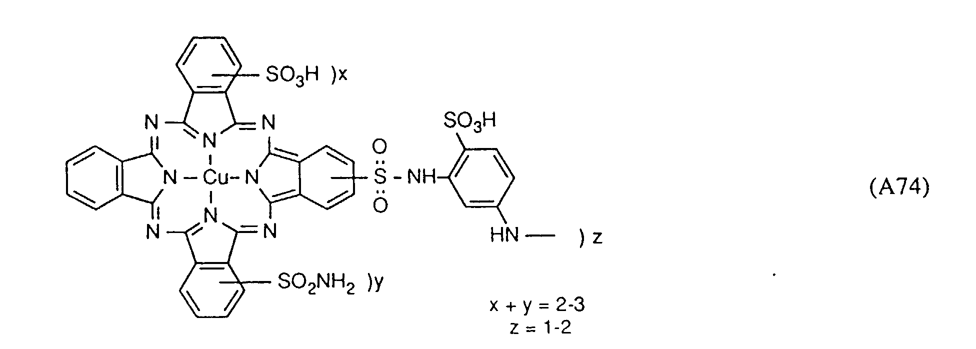

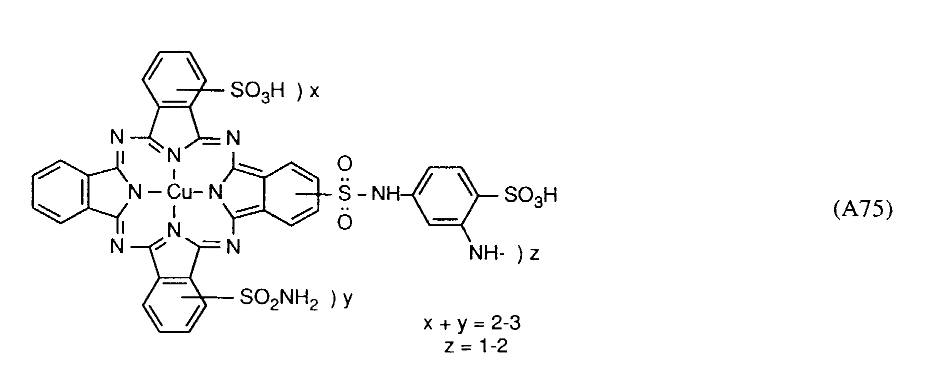

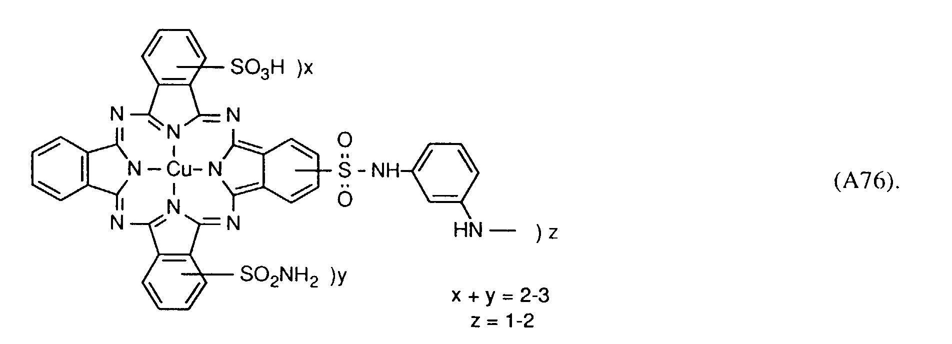

Geeignete Reste der Formel 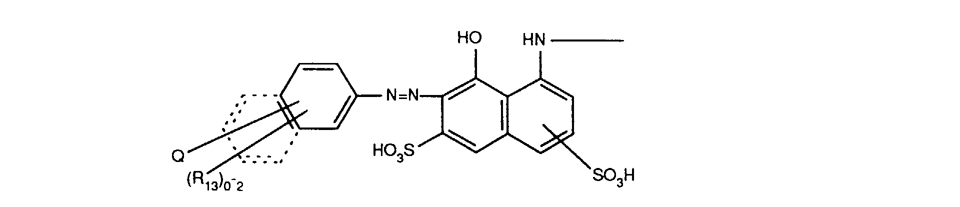 in den Verbindungen der zuvor angegebenen Formel (1b) sind: 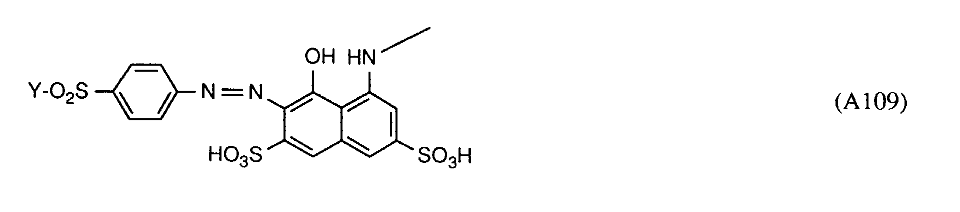 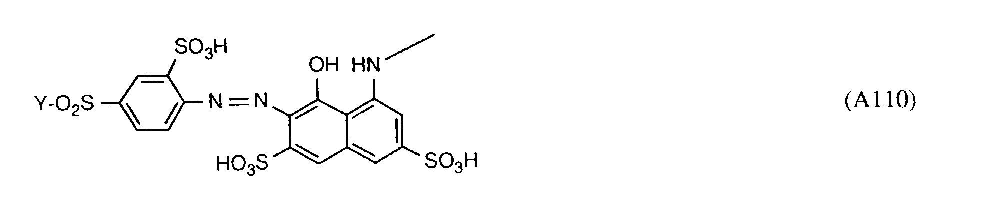 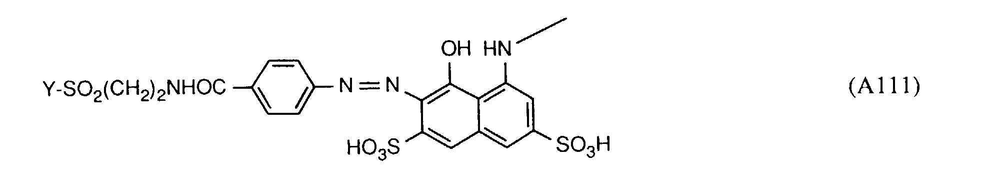 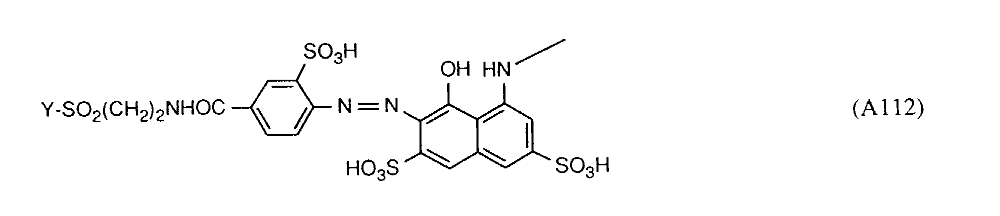 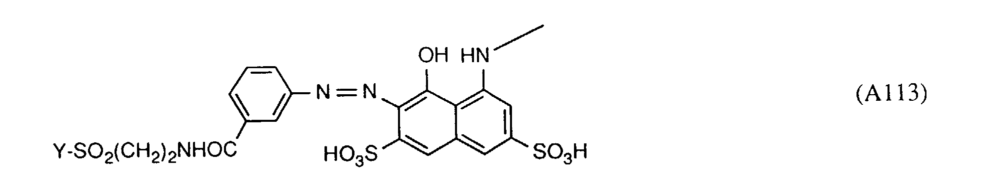 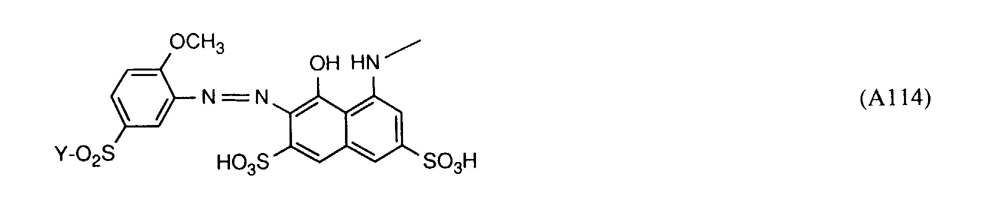 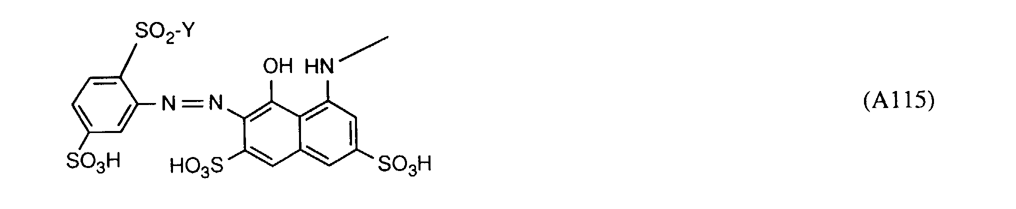 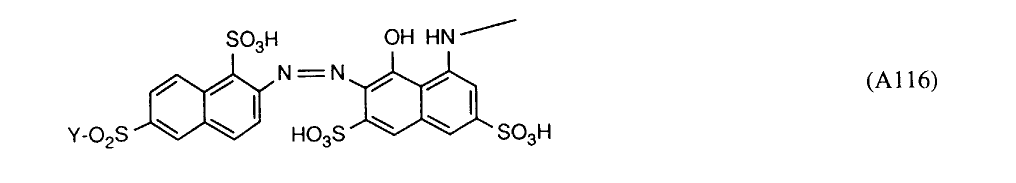 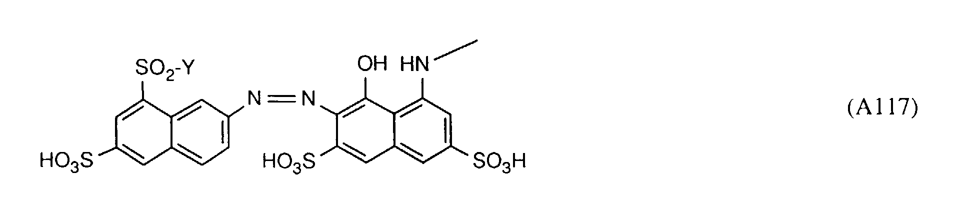 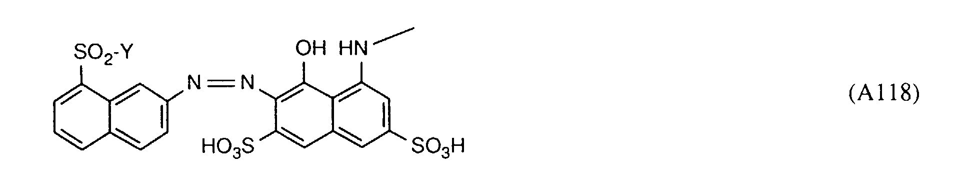 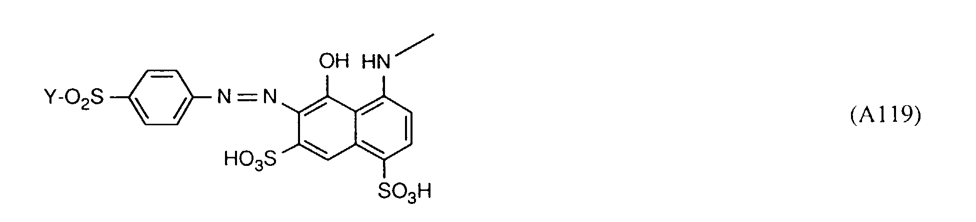 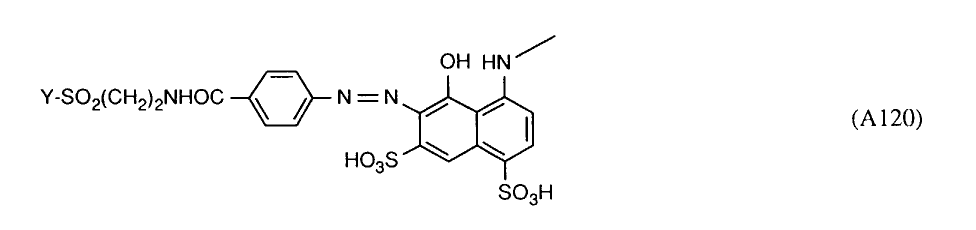 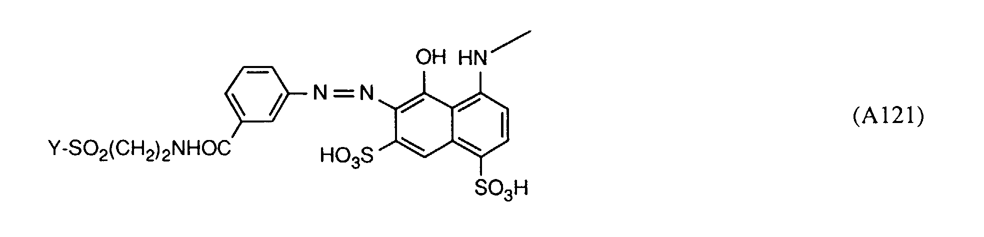 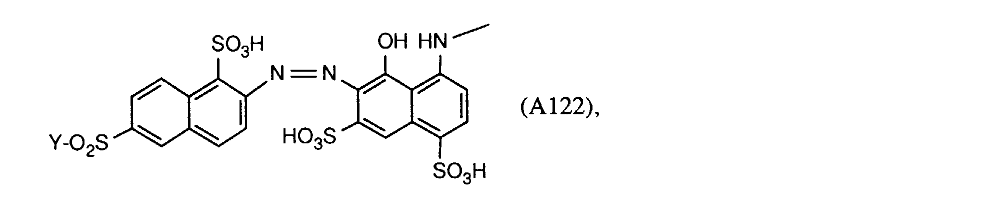 worin für Y jeweils die zuvor angegebenen Bedeutungen und Bevorzugungen gelten.

Weitere geeignete Reste D₁-NR₁ sowie Reste der Formel 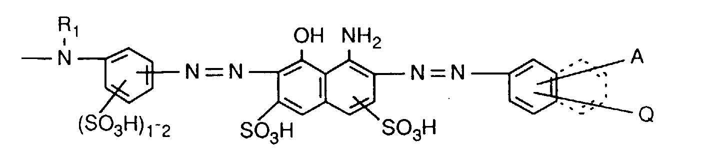 in den Verbindungen der Formel (1a) sind 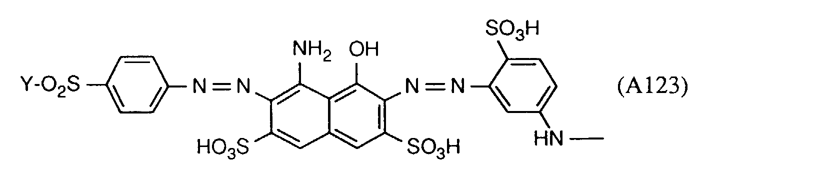 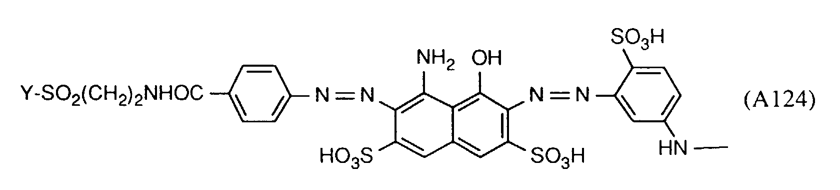 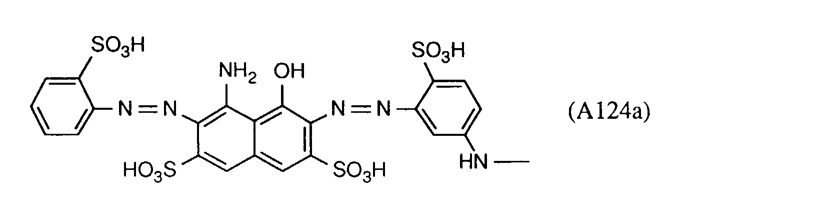 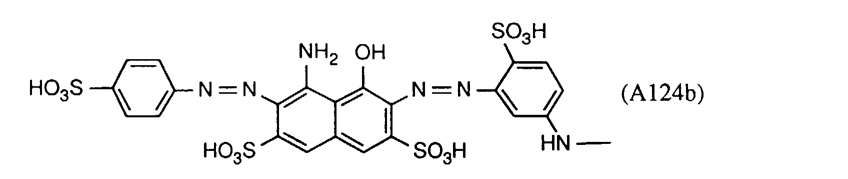 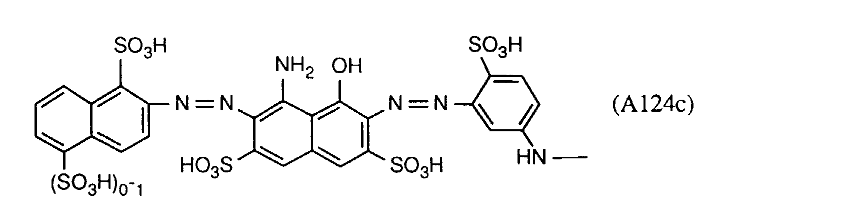 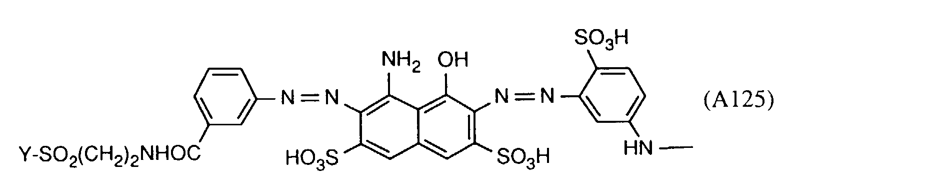 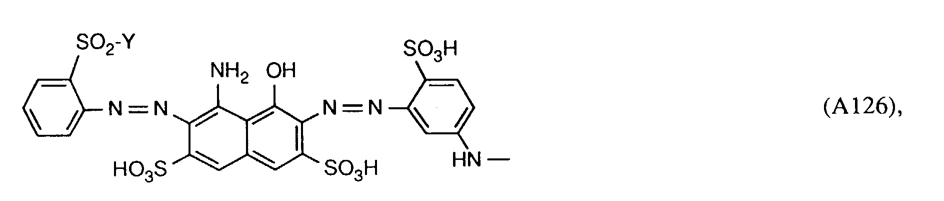 worin für Y die zuvor genannten Bedeutungen und Bevorzugungen gelten.

Eine bevorzugte Ausführungsform der vorliegenden Erfindung betrifft Verbindungen der Formel 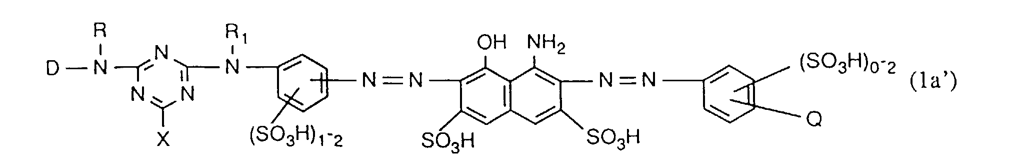 worin R und R₁ unabhängig voneinander je Wasserstoff, Methyl oder Ethyl sind, X Chlor oder Fluor bedeutet, Q einen Rest der zuvor angegebenen Formel (2a) oder (2b") darstellt und D für einen Rest der zuvor angegebenen Formel (5b), der ausser Sulfo keine weiteren Substituenten trägt, oder für einen Rest der zuvor angegebenen Formel (6), (21a), (23), (24) oder (25) steht.

Eine weitere bevorzugte Ausführungsform der vorliegenden Erfindung betrifft Verbindungen der Formel 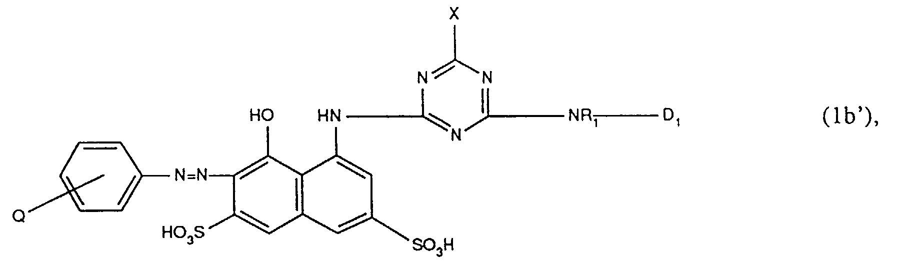 worin R₁ Wasserstoff, Methyl oder Ethyl ist, X Chlor oder Fluor bedeutet, Q einen Rest der zuvor angegebenen Formel (2a) oder (2b") darstellt und D₁ für einen Rest der zuvor angegebenen Formel (5b), der ausser Sulfo keine weiteren Substituenten trägt, oder für einen Rest der zuvor angegebenen Formel (22), (23), (26) oder (27) steht.

Die Verbindungen der Formel (1a) und (1b) sind faserreaktiv. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Die Verbindungen der Formel (1a) und (1b) weisen mindestens zwei und vorzugsweise vier bis acht Sulfogruppen auf, wobei diese jeweils in Form der freien Säure oder vorzugsweise in Salzform, z.B. als Na-, Li-, K- oder Ammoniumsalz, vorliegen. Die Verbindungen der Formel (1a) und (1b) können auch als Mischsalz, z.B. als Na/Li- oder Na/Li/NH₄-Salz, vorliegen.

Die Reaktivfarbstoffe der Formel (1) können in an sich bekannter Weise hergestellt werden.

Ein bevorzugtes Verfahren zur Herstellung von Farbstoffen der zuvor angegebenen Formel (1a) besteht z.B. darin, dass man in etwa 1 Aequivalent eines organischen Farbstoffes der Formel

D-NHR (29)

oder ein Farbstoffvorprodukt, in etwa 1 Aequivalent 2,4,6-Trifluor-s-triazin (Cyanurfluorid) oder 2,4,6-Trichlor-s-triazin (Cyanurchlorid), in etwa 1 Aequivalent der Verbindung der Formel 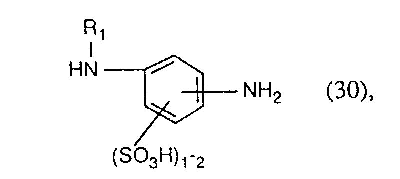 in etwa 1 Aequivalent der Verbindung der Formel 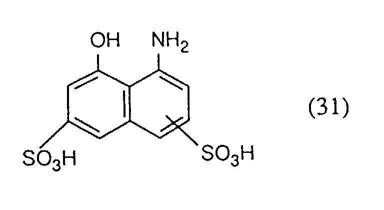 und in etwa 1 Aequivalent einer Verbindung der Formel 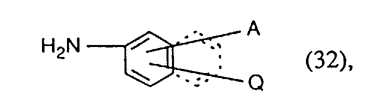 worin A, D, R, R₁ und Q jeweils die zuvor angegebene Bedeutung haben, durch Diazotierung und Kupplung in beliebiger Reihenfolge miteinander umsetzt, oder, im Fall von Farbstoffvorprodukten, die erhaltenen Zwischenprodukte in die gewünschten Farbstoffe überführt und gegebenenfalls eine weitere Umwandlungsreaktion anschliesst.

Eine bevorzugte Variante zur Herstellung der Verbindungen der Formel (1a) betrifft die Herstellung einer Verbindung der Formel 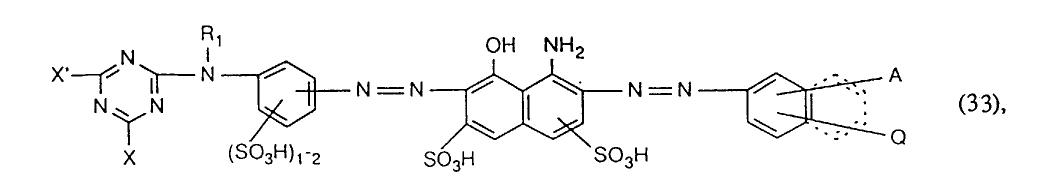 worin A, R₁, X und Q jeweils die zuvor angegebene Bedeutung haben und X' Halogen, vorzugsweise Chlor oder Fluor bedeutet, und deren weitere Umsetzung mit einer Verbindung der zuvor angegebenen Formel (29). Dieser Weg ist insbesondere gut gangbar für Verbindungen der Formel (1a), worin D der Rest eines Anthrachinon-, Phthalocyanin-, Formazan- oder Dioxazinchromophors ist.

Eine weitere bevorzugte Variante zur Herstellung der Verbindungen der Formel (1a) betrifft die Herstellung einer Verbindung der Formel 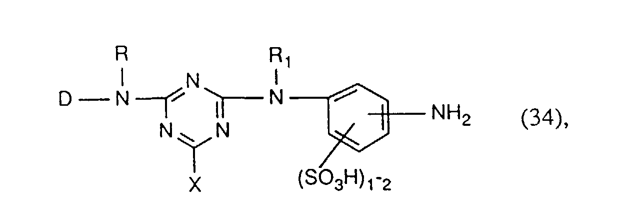 Diazotierung dieser Verbindung und Kupplung auf eine Verbindung der Formel 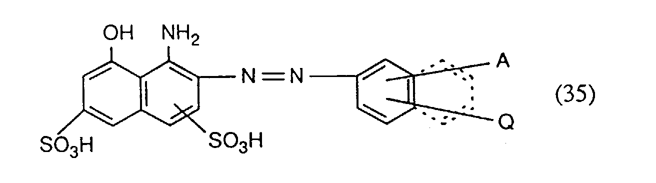 worin A, D, R, R₁, X und Q jeweils die zuvor angegebene Bedeutung haben. Dieser Weg ist bevorzugt bei der Synthese von Verbindungen der Formel (1a), worin D der Rest eines Monoazo-, Polyazo- oder Metallkomplexazochromophors ist.

Gegenstand der Erfindung ist ferner ein Verfahren zum Färben und Bedrucken von cellulosehaltigen Fasermaterialien mit den erfindungsgemässen Farbstoffen. Als Fasermaterialien kommen beispielsweise die natürlichen Cellulosefasern, wie Baumwolle, Leinen und Hanf, sowie Zellstoff und regenerierte Cellulose in Betracht. Die Farbstoffe sind auch zum Färben oder Bedrucken von hydroxylgruppenhaltigen Fasern geeignet, die in Mischgeweben enthalten sind, z.B. von Gemischen aus Baumwolle mit Polyamidfasern, oder insbesondere Polyesterfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült. Zum Färben und Bedrucken werden die üblichen Färbe- bzw. Druckverfahren angewendet.

Für das erfindungsgemässe Verfahren können die Mengen, in denen die Reaktivfarbstoffe in den Färbebädern oder Druckpasten verwendet werden, je nach der gewünschten Farbtiefe schwanken, im allgemeinen haben sich Mengen von 0,01 bis 10 Gewichtsprozent, insbesondere 0,1 bis 6 Gewichtsprozent, bezogen auf das Färbegut, als vorteilhaft erwiesen.

Die Färbeflotten können die allgemein üblichen Zusätze enthalten, beispielsweise die wässrigen Lösungen anorganischer Salze, z.B. von Alkalichloriden oder Alkalisulfaten, Alkalihydroxide, Harnstoff, Verdickungen, wie z.B. Alginatverdickungen, wasserlösliche Cellulosealkyläther sowie Dispergierhilfsmittel, Egalisierhilfsmittel und Migrationshilfsinhibitoren, ferner Natrium-m-nitrobenzolsulfonat und als weitere Verdickungsmittel beispielsweise Methylcellulose, Stärkeäther, Emulsionsverdickungen, vorzugsweise ein Alginat, z.B. Natriumalginat, sowie Netzmittel.

Bevorzugt für das erfindungsgemässe Verfahren ist das Färben nach der Ausziehmethode. Das Färben erfolgt hierbei in der Regel in wässrigem Medium, bei einem Flottenverhältnis von beispielsweise 1:2 bis 1:60, insbesondere einem Flottenverhältnis von 1:5 bis 1:20, einem pH des Färbebades von z.B. 6 bis 13 und einer Temperatur von beispielsweise 40 bis 110°C, insbesondere einer Temperatur von 60 bis 95°C.

Die erfindungsgemässen Farbstoffe zeichnen sich durch ein gutes Fixiervermögen und ein sehr gutes Aufbauvermögen aus. Sie zeichnen sich durch einen hohen Ausziehgrad aus und können nach dem Ausziehverfahren über einen sehr grossen Temperaturbereich eingesetzt werden und eignen sich deshalb auch zum Färben von Baumwolle-Polyester-Mischgeweben nach den für solche Gewebe empfohlenen Bedingungen. Die erfindungsgemässen Farbstoffe eignen sich auch zum Druck, vor allem auf Baumwolle, oder von Mischgeweben, die z.B. Wolle oder Seide enthalten.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit und Bügelechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: Eine neutrale Lösung von 106 Teilen der Verbindung der Formel 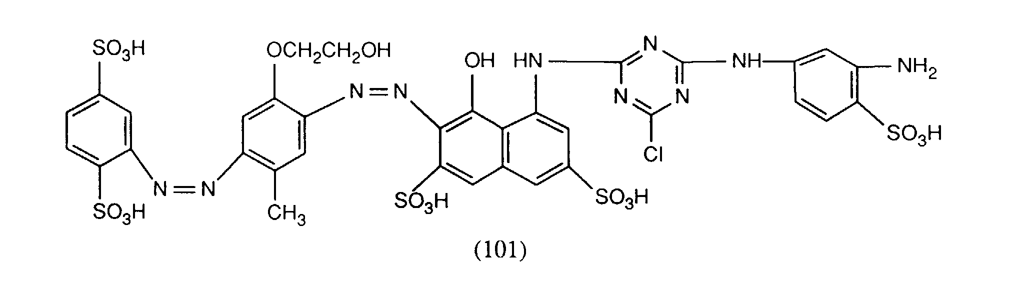 in 1000 Teilen Wasser wird bei einer Temperatur von ca. 0°C mit 7 Teilen Natriumnitrit und 25 Teilen 32%ige Salzsäure versetzt und eine Stunde gerührt. Man zerstört den Nitritüberschuss mit wenig Sulfaminsäure und tropft die Suspension des Diazoniumsalzes in eine kalte neutrale Lösung von 61 Teilen 1-Amino-2-[4-(2-sulfatoethylsulfonyl)phenylazo]-8-hydroxynaphthalin-3,6-disulfonsäure, wobei man den pH-Wert durch Zugabe von Natriumhydroxidlösung konstant hält. Man lässt auf Raumtemperatur erwärmen, befreit die Lösung dialytisch von Salz und dampft den Farbstoff der Formel 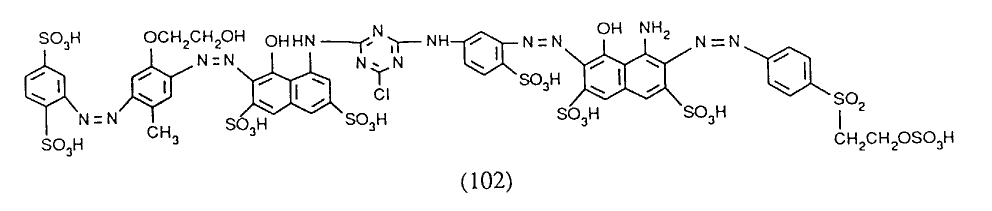 ein. Das erhaltene Pulver färbt Cellulose in reinen marineblauen Tönen mit guten Allgemeinechtheiten.

Beispiel 2: Eine neutrale Lösung von 104 Teilen der Verbindung der Formel 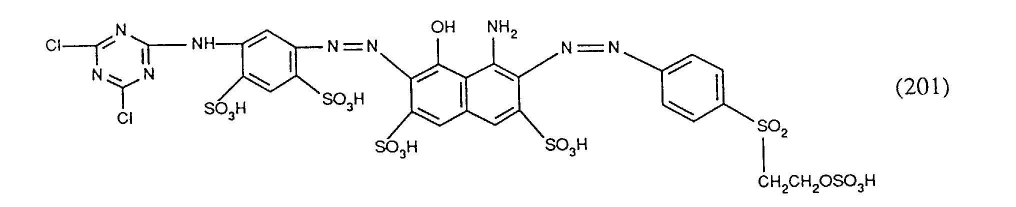 in 1000 Teilen Wasser wird bei einer Temperatur von ca. 0°C zu einer kalten neutralen Lösung von 53 Teilen der Verbindung der Formel 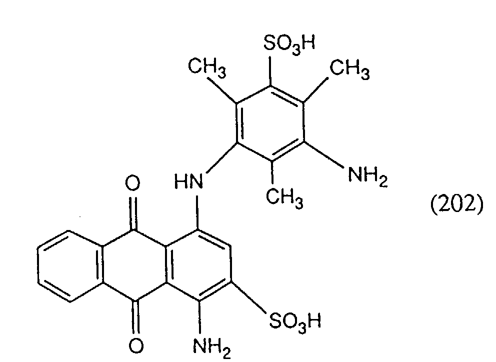 gegeben, wobei man den pH-Wert durch Zugabe von Natriumhydroxidlösung konstant hält. Man lässt auf Raumtemperatur erwärmen, befreit die Lösung dialytisch von Salz und dampft den Farbstoff der Formel 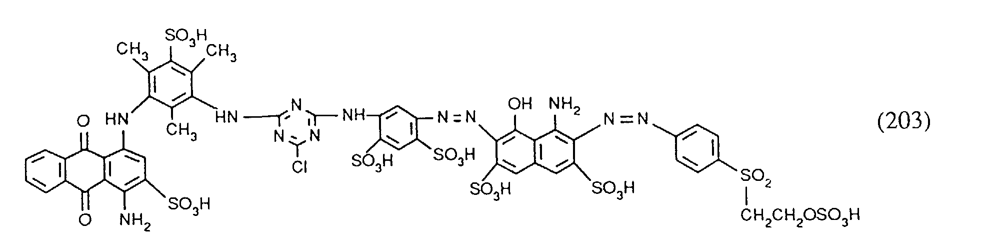 ein. Das erhaltene Pulver färbt Cellulose in reinen blauen Tönen mit guten Allgemeinechtheiten.

Beispiele 3-9: Verfährt man wie im Beispiel 1 beschrieben und verwendet anstelle der dort eingesetzten Verbindung (101) eine Verbindung der allgemeinen Formel 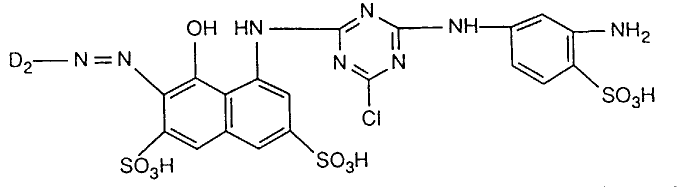 worin D₂ die in der folgenden Tabelle genannten Bedeutungen hat, werden analoge Farbstoffe erhalten, die jeweils Baumwolle mit guten Allgemeinechtheiten färben.

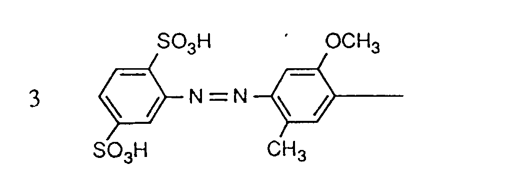

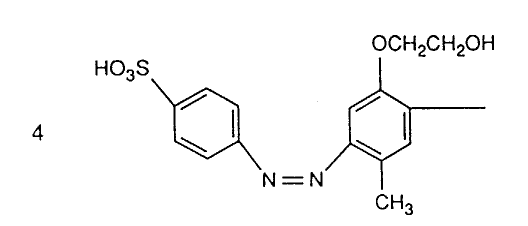

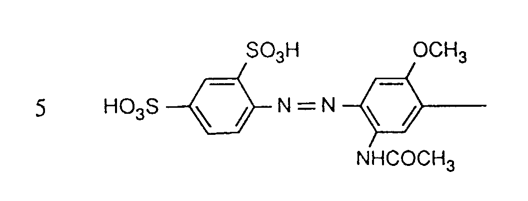

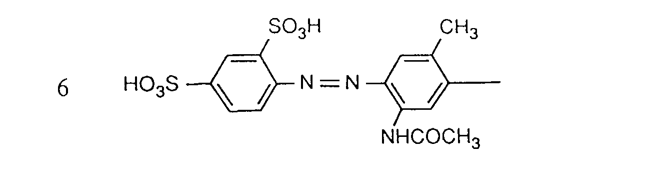

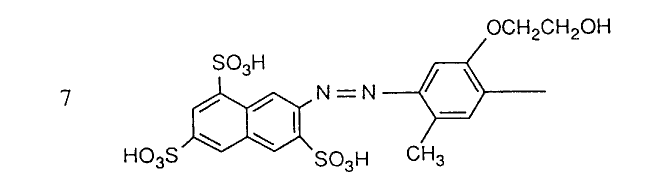

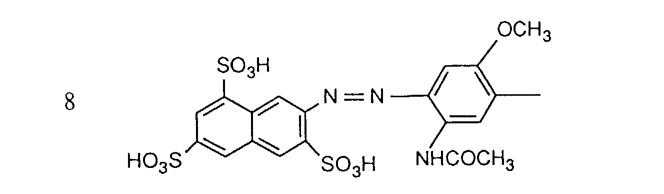

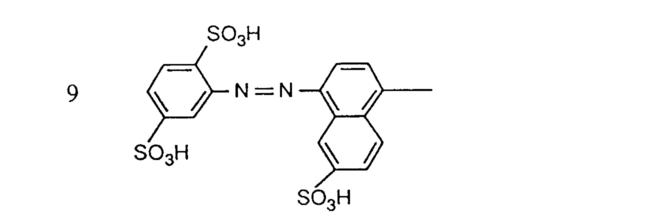

Beispiele 10-13: Verfährt man wie im Beispiel 2 beschrieben und verwendet anstelle der dort eingesetzten Verbindung (202) die in der folgenden Tabelle genannten Verbindungen, werden analoge Farbstoffe erhalten, die Baumwolle jeweils mit guten Allgemeinechtheiten färben.

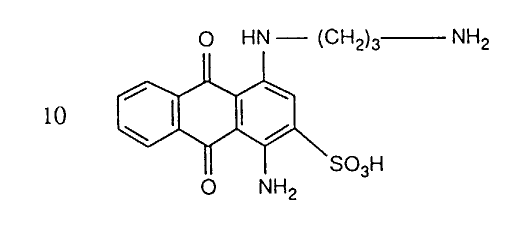

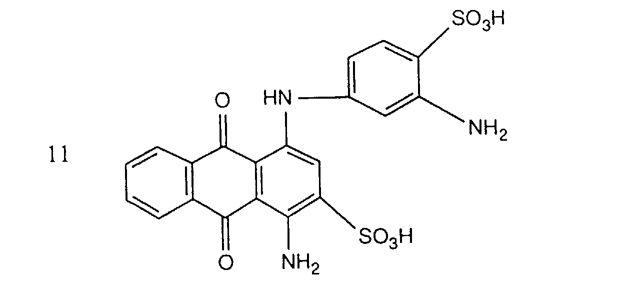

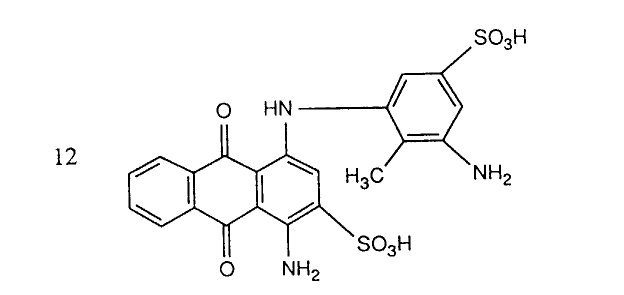

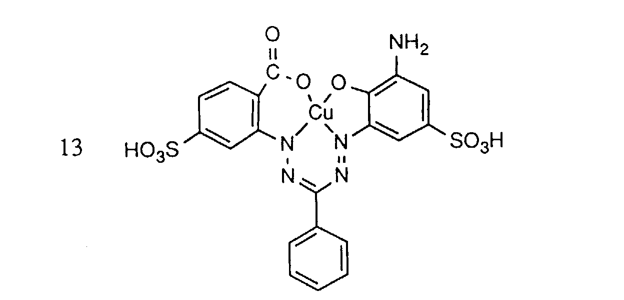

Beispiele 14-17: Analog wie in den Beispielen 1 bis 13 beschrieben lassen sich die folgenden Verbindungen herstellen, die Baumwolle jeweils mit guten Allgemeinechtheiten färben.

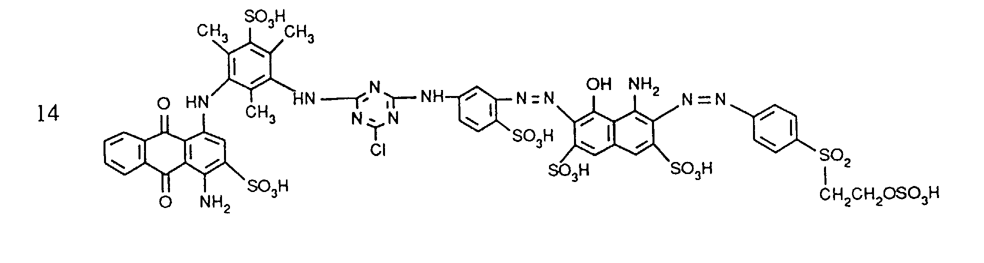

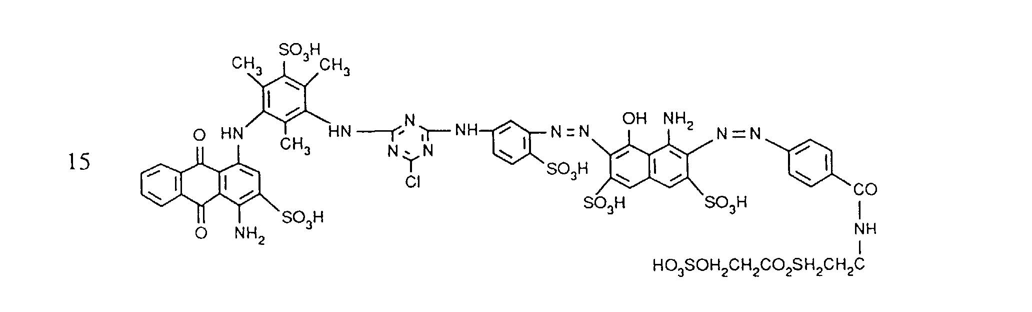

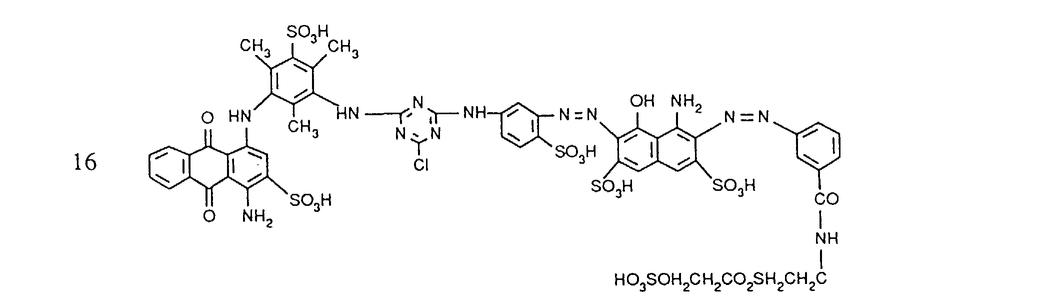

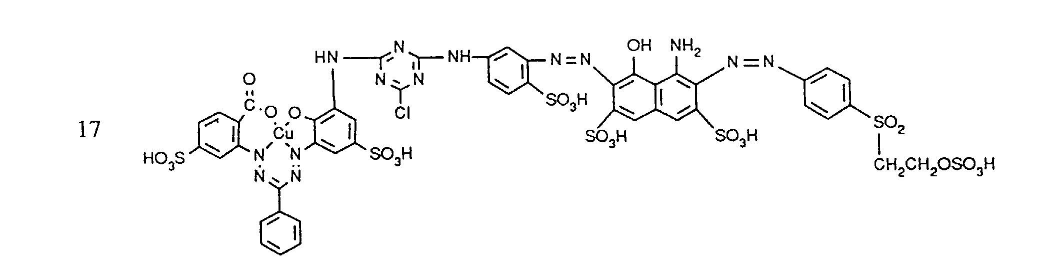

Beispiel 18: Verwendet man in den Beispielen 1 bis 17 anstelle des chlortriazinylhaltigen Vorprodukts jeweils das entsprechende fluortriazinylhaltige Vorprodukt, erhält man die analogen Fluortriazinylverbindungen.

Beispiele 19-48: Analog wie in den Beispielen 1 und 2 beschrieben lassen sich die folgenden Farbstoffe herstellen, die Baumwolle in der angegebenen Nuance mit guten Allgemeinechtheiten färben.

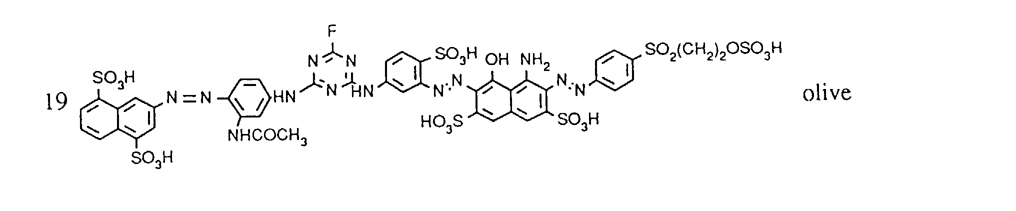

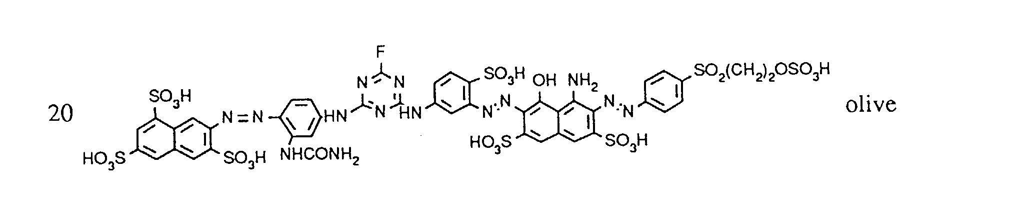

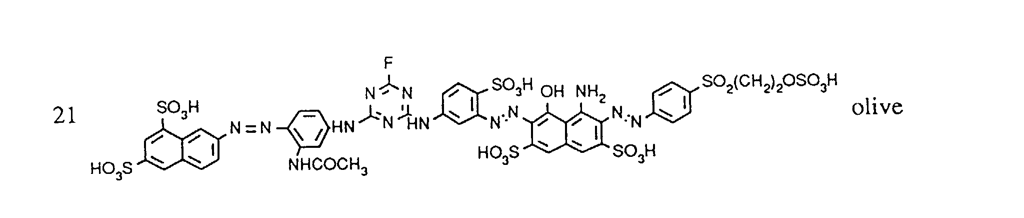

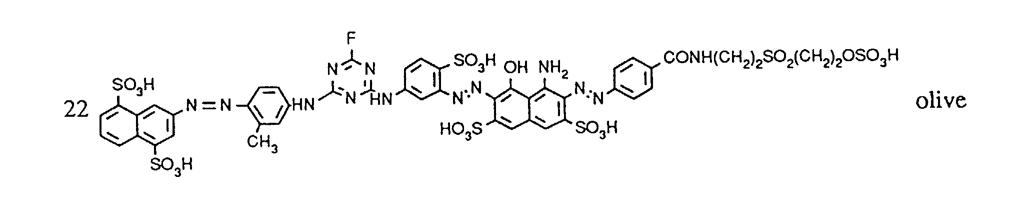

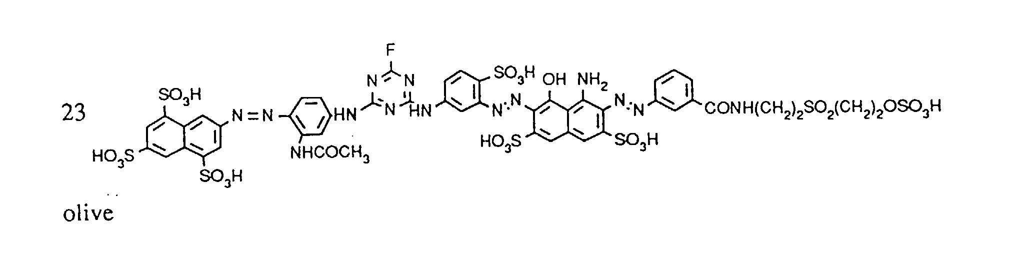

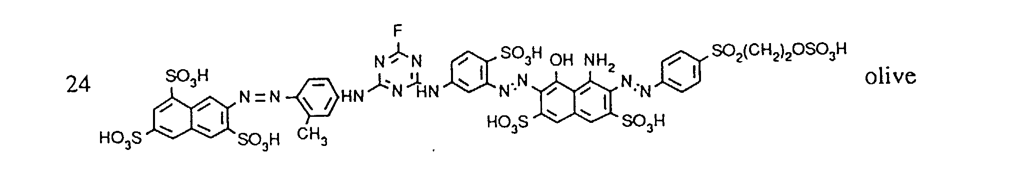

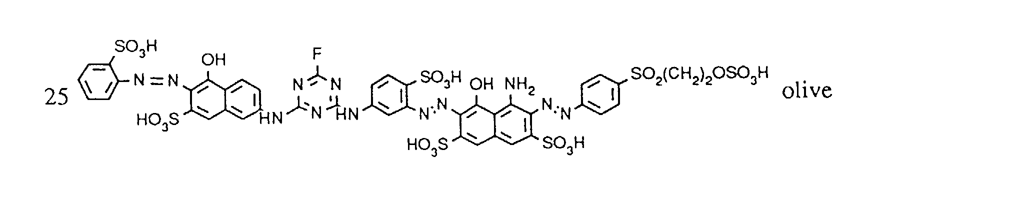

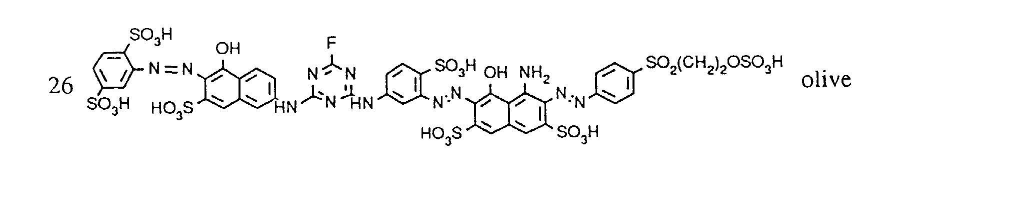

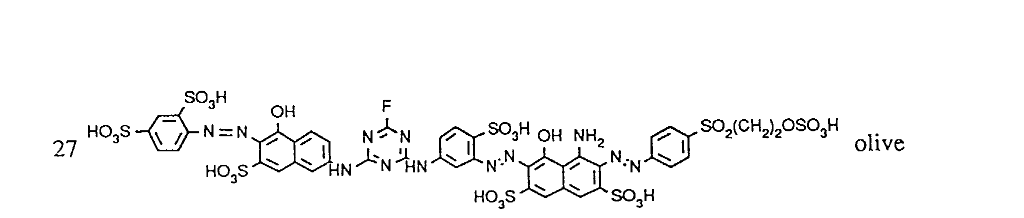

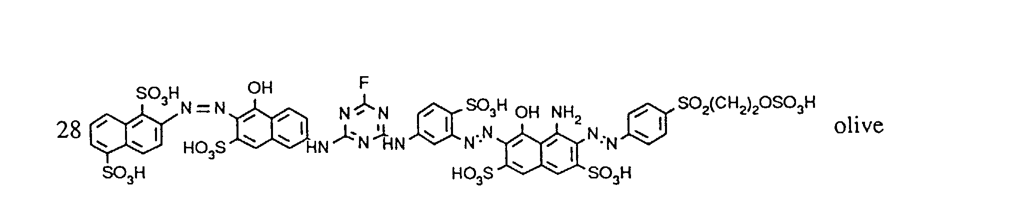

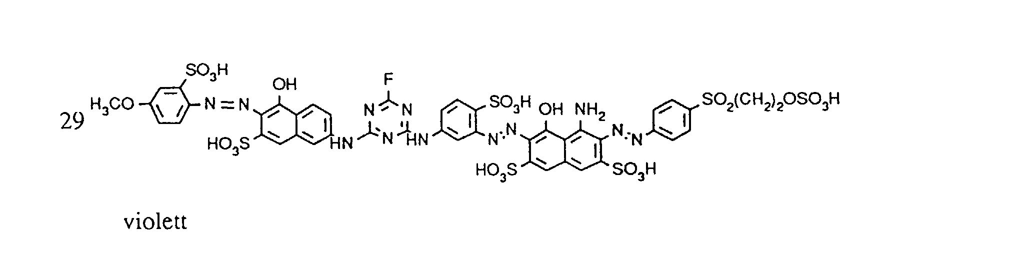

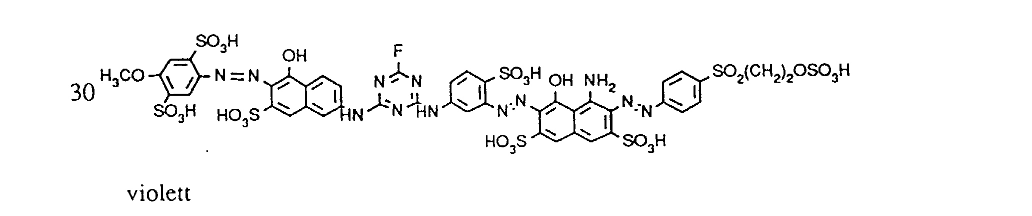

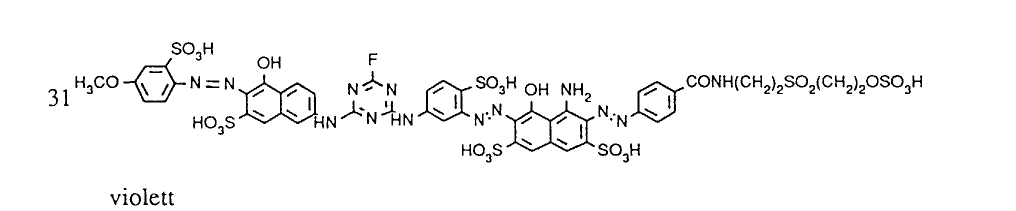

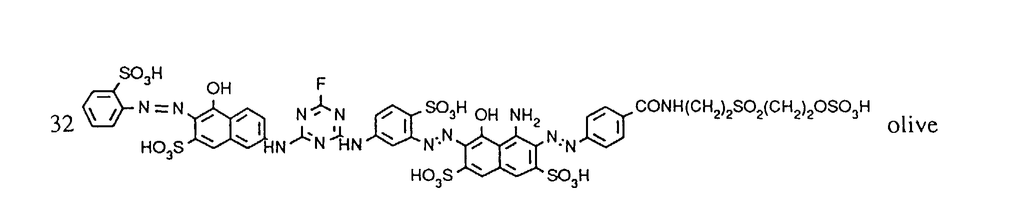

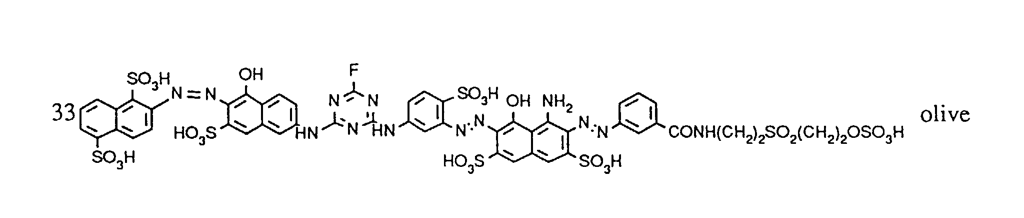

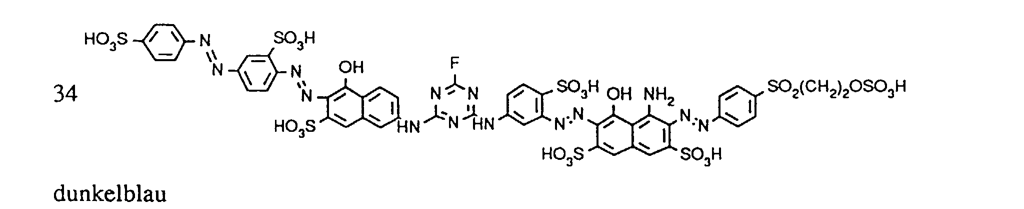

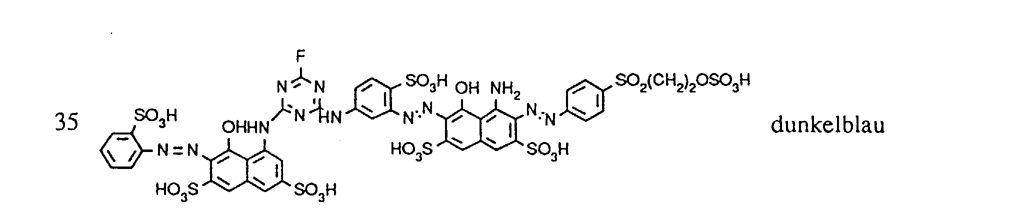

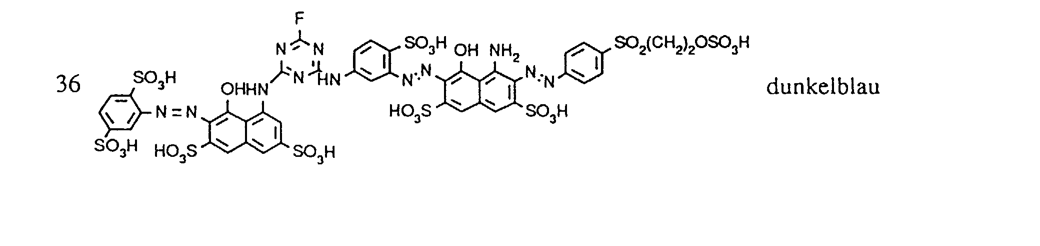

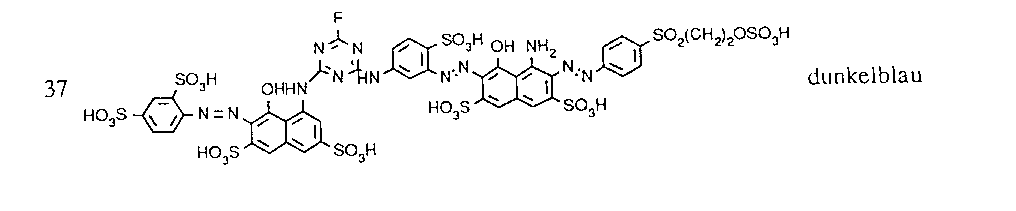

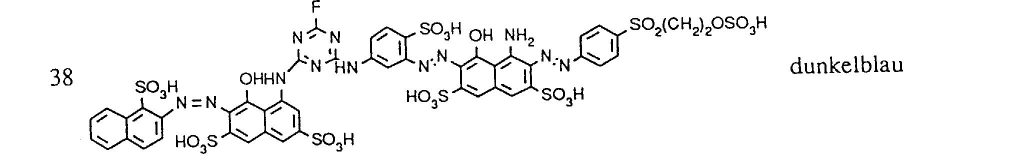

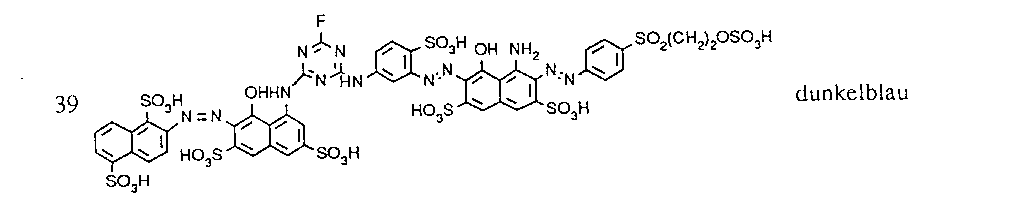

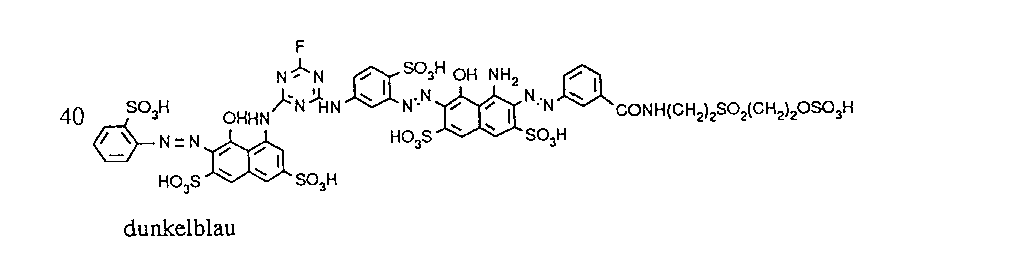

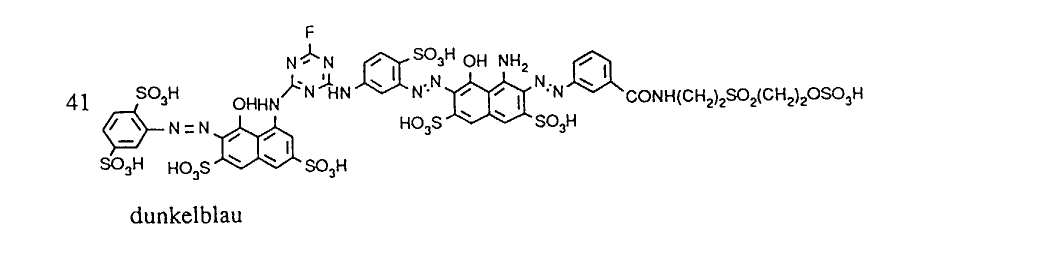

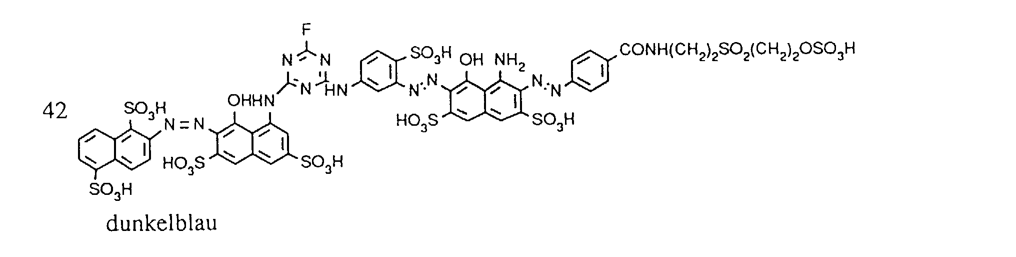

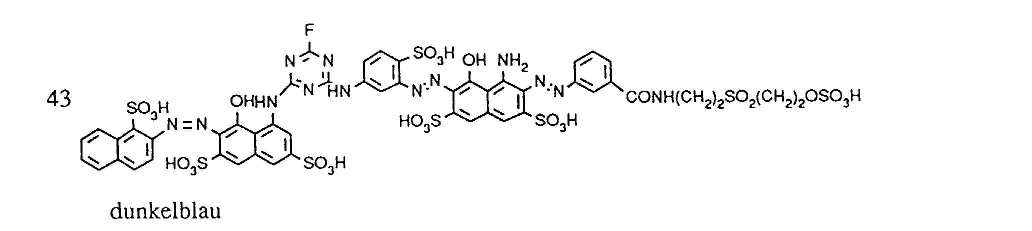

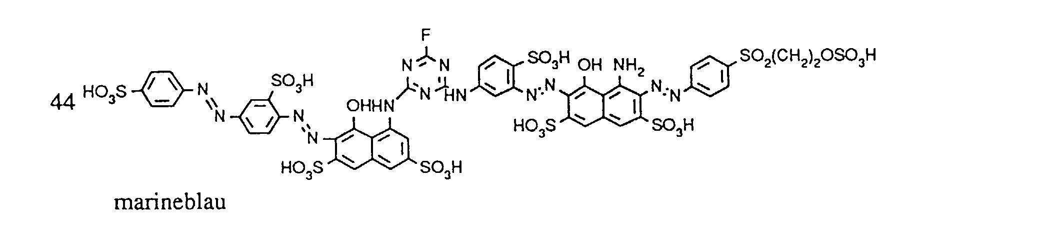

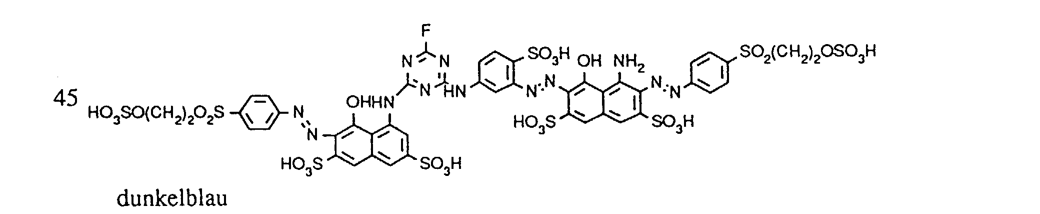

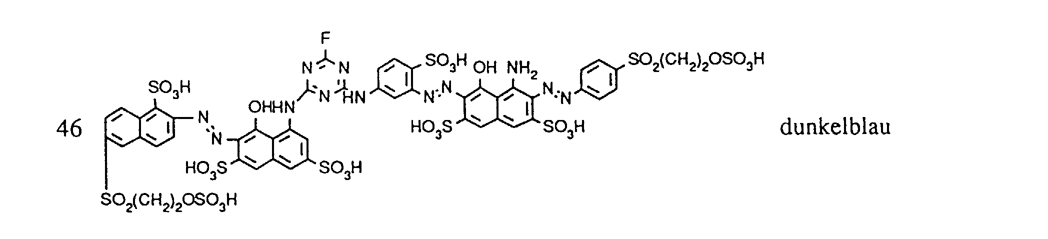

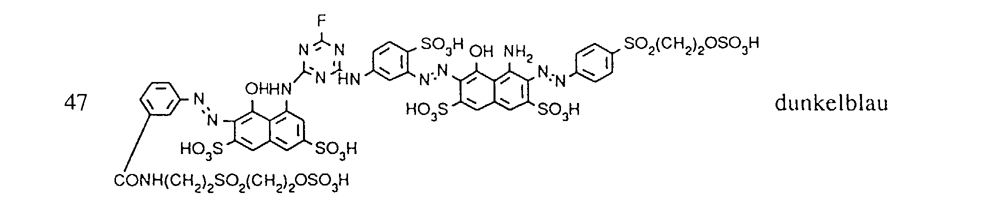

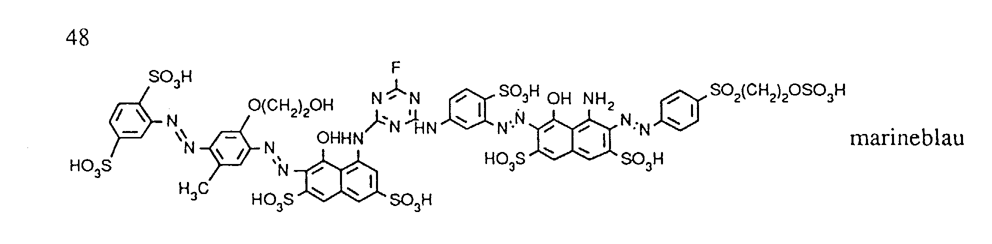

Beispiel 49: Verwendet man in den Beispielen 19 bis 48 anstelle des fluortriazinylhaltigen Vorprodukts jeweils das entsprechende chlortriazinylhaltige Vorprodukt, erhält man die analogen Chlortriazinylverbindungen.

Beispiel 50: 18,45 Teile Cyanurchlorid werden in 150 Teilen Eis/Wasser-Mischung suspendiert und gerührt. Dazu werden 38,5 Teile 1-Amino-8-hydroxy-naphthalin-3,6-di-sulfonsäure, gelöst in 180 Teilen Wasser, bei 0 bis 2°C zugetropft. Die entstehende Salzsäure wird durch Zugabe von 2n Natriumhydroxydlösung neutralisiert. Nach beendeter Kondensation werden 28 Teile 4-Amino-(2-sulfatoethylsulfonyl)-benzol in üblicher Weise mit Natriumnitrit in Salzsäure diazotiert und bei pH 2,5 - 6 und 0-5°C gekuppelt. Die erhaltene Verbindung der Formel 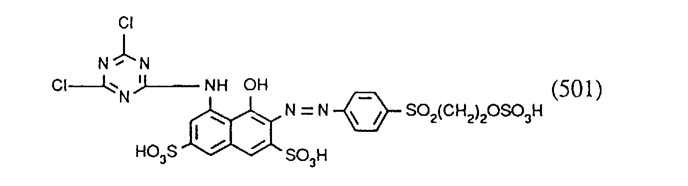 wird anschliessend mit 59,5 Teilen der Verbindung der Formel 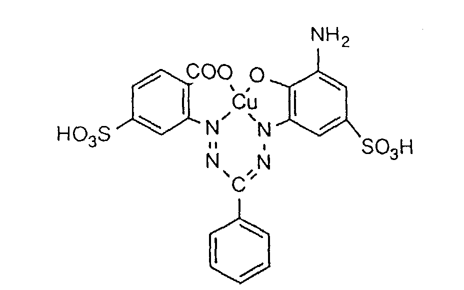 ca. 3 Stunden bei pH 6 - 7 und Raumtemperatur kondensiert. Man lässt das Reaktionsgemisch ca. 16 Stunden nachrühren, filtriert danach den ausgefallenen Farbstoff ab und wäscht mit Wasser und Aceton; der Farbstoff entspricht der Formel 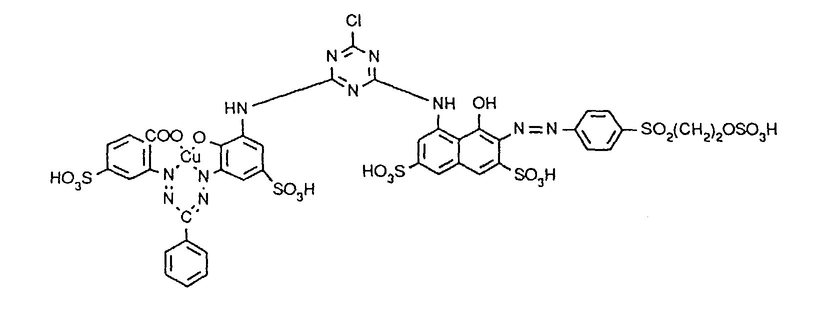 und färbt Baumwolle in reinen blauen Tönen.

Beispiel 50a: Verfährt man wie im Beispiel 50 beschrieben, und verwendet anstelle der Verbindung der Formel (501) die analoge Menge der Verbindung der Formel 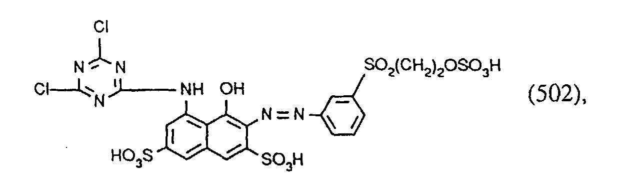 erhält man die Verbindung der Formel

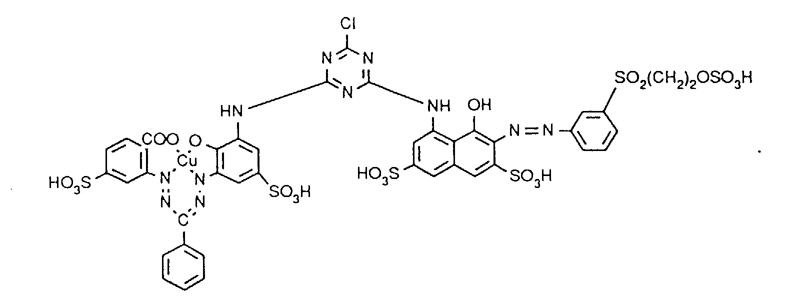

Beispiel 51: Man kondensiert das gemäss Beispiel 50 hergestellte Produkt der Formel (501) ca. 3,5 Stunden bei 20 bis 30°C und pH 6,5 und 6,75 mit 54,5 Teilen der Monoazoverbindung der Formel

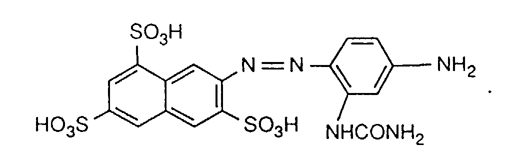

Nach einem ca. 16stündigen Nachrühren bei Raumtemperatur und pH 6,5 wird der Farbstoff abfiltriert und gewaschen; er entspricht der Formel 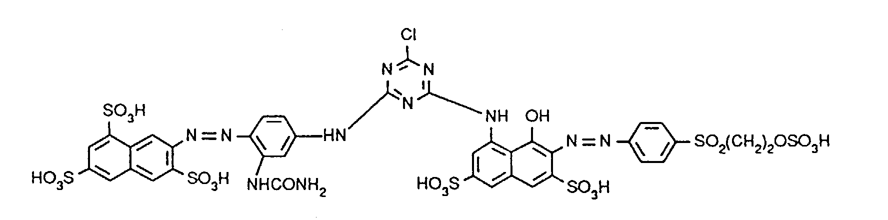 und färbt Baumwolle in einer scharlach Nuance mit guten Allgemeinechtheiten.

Beispiel 51a: Verfährt man wie im Beispiel 51 beschrieben, und verwendet anstelle der Verbindung der Formel (501) die analoge Menge der Verbindung der Formel (502), erhält man die Verbindung der Formel

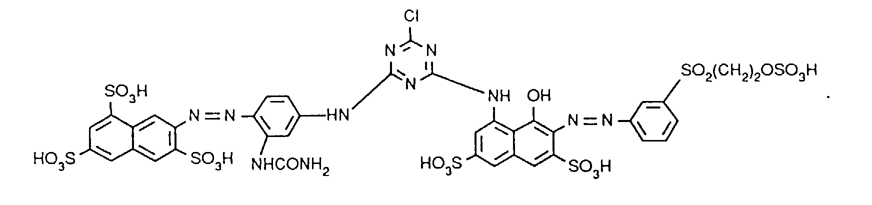

Beispiele 52-68: Analog wie im Beispiel 50 oder 51 beschrieben lassen sich weitere Farbstoffe der Formel 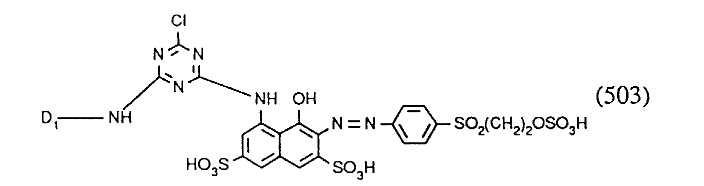 herstellen, worin D₁ die in der Tabelle angegebene Bedeutung hat:

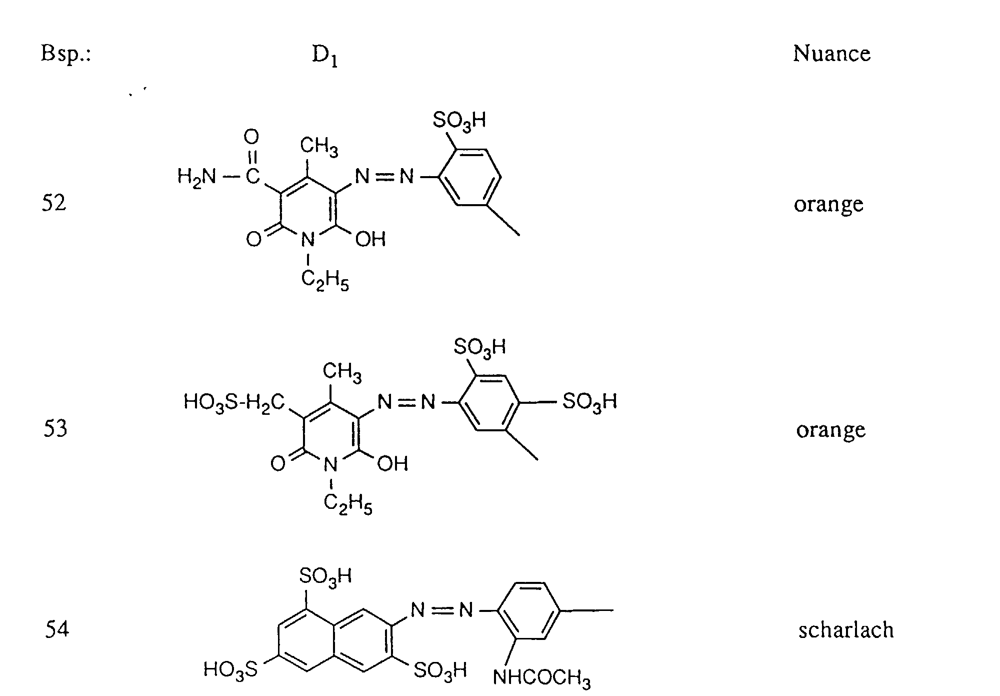

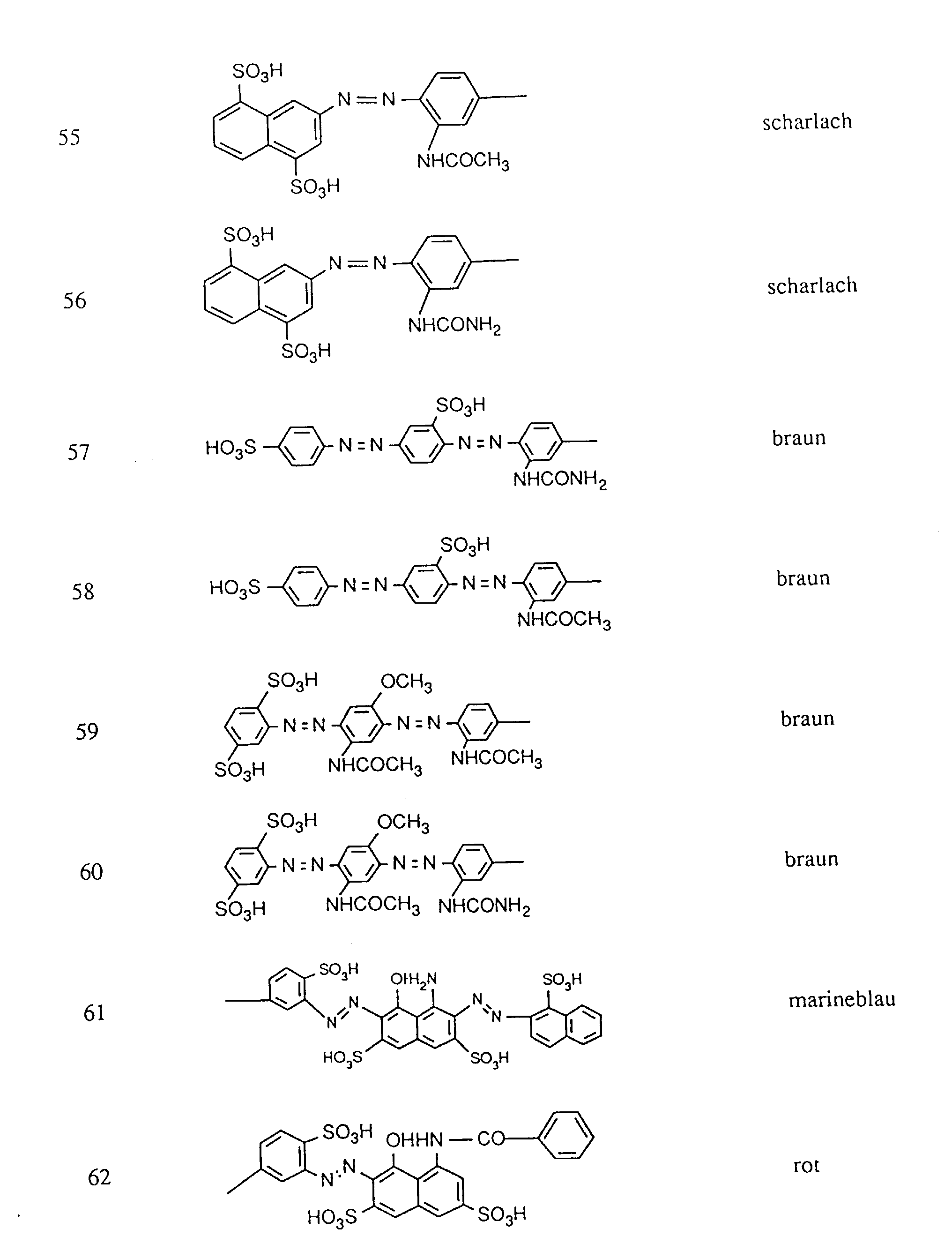

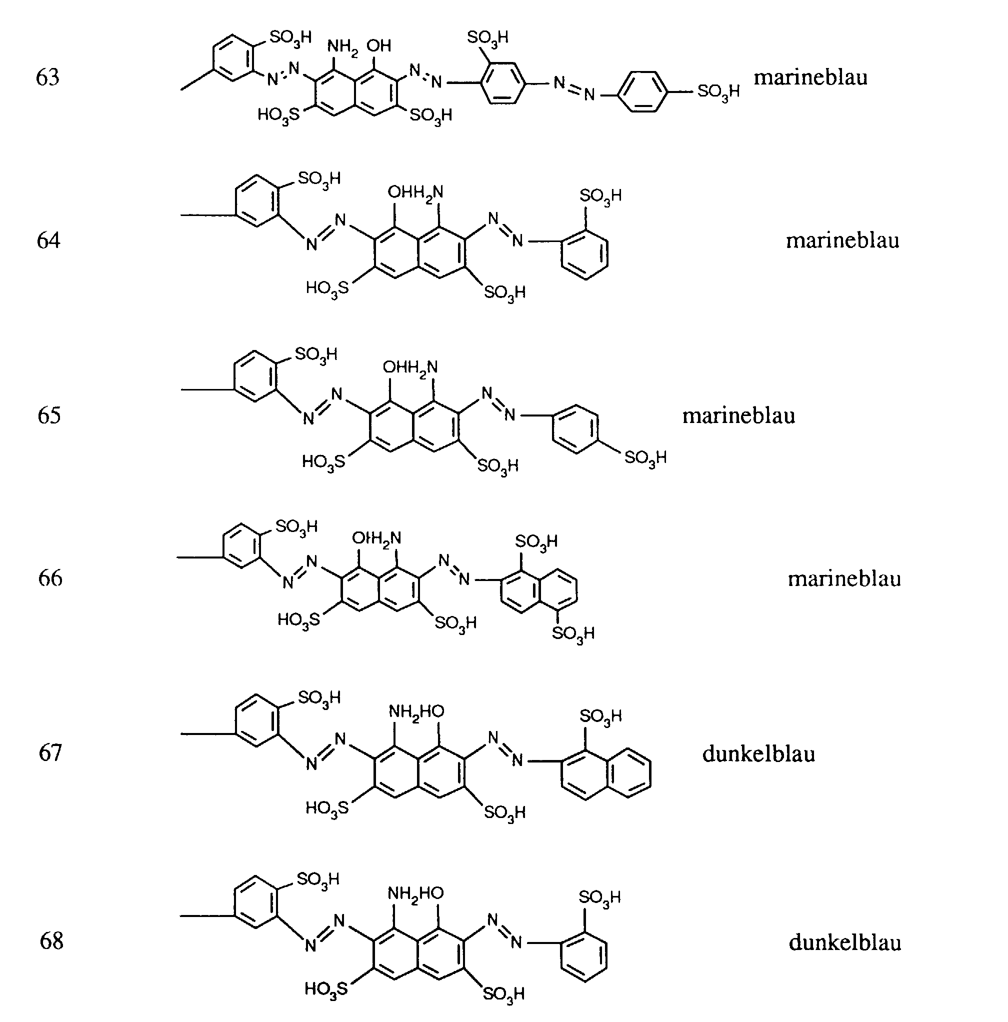

Beispiel 69: Verwendet man in den Beispielen 50 bis 68 anstelle des chlortriazinylhaltigen Vorprodukts der Formel (503) jeweils das entsprechende fluortriazinylhaltige Vorprodukt, erhält man die analogen Fluortriazinylverbindungen.

Beispiele 70-75: Analog wie im Beispiel 50 oder 51 beschrieben lassen sich weitere Farbstoffe der Formel 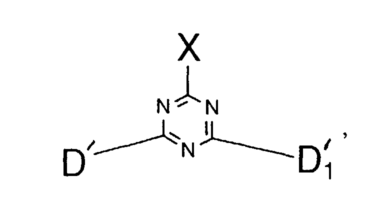 worin X, D' und D'₁ die in der Tabelle angegebene Bedeutung haben, herstellen:

| Bsp.: | D'₁: | X: | D': | Y: | Nuance: |
|---|---|---|---|---|---|
| 70 | A14 | Cl | A109 | -CH=CH₂ | orange |
| | | | | | |
| 71 | A14 | F | A109 | -CH=CH₂ | orange |
| | | | | | |
| 72 | A4 | Cl | A109 | -(CH₂)₂OSO₃H | orange |
| | | | | | |
| 73 | A2 | Cl | A109 | -(CH₂)₂OSO₃H | orange |
| | | | | | |
| 74 | A57 | F | A113 | -(CH₂)₂OSO₃H | violett |
| | | | | | |
| 75 | A75 | Cl | A109 | -(CH₂)₂OSO₃H | blau |

Die Bedeutungen der Reste Al bis A126 sind in der Beschreibung angegeben.

Beispiel 76: 2 Teile Farbstoff gemäss Beispiele 1 werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g wasserfreies Na₂CO₃ enthält, zugegeben. Die Temperatur des Färbebades wird weitere 45 Minuten bei 40°C gehalten. Danach wird die marineblau gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 77: 2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g wasserfreies Na₂CO₃ enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird die marineblau gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 78: 8 Teile des gemäss Beispiel 1 erhaltenen Farbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird die marineblau gefärbte Ware gespült, während einer Viertelstunde mit einem nicht-ionogenen Waschmittel kochend geseift, nochmals gespült und getrocknet. Die erhaltene Ware zeichnet sich durch sehr gute Echtheiten aus.

Beispiel 79: 4 Teile des gemäss Beispiel 1 erhaltenen Farbstoffes werden in 50 Teilen Wasser gelöst. Dazu gibt man 50 Teile einer Lösung, die pro Liter 5 g Natriumhydroxyd und 20 g wasserfreies Na₂CO₃ enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die marineblau gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 80: 6 Teile des gemäss Beispiel 1 erhaltenen Farbstoffes werden in 50 Teilen Wasser gelöst. Dazu gibt man 50 Teile einer Lösung, die pro Liter 16 g Natriumhydroxyd und 0,04 Liter Wasserglas (38°Bé) enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 10 Stunden bei Raumtemperatur gelagert. Danach wird die marineblau gefärbte Ware gespült, während einer Viertelstunde mit einem nichtionogenen Waschmittel kochend geseift, nochmals gespült und getrocknet. Die erhaltene Ware zeichnet sich durch sehr gute Echtheiten aus.

Beispiel 81: 2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die marineblau Färbung während 30 Sekunden bei 100 bis 102°C, spült, seift während einer Viertelstunde in einer 0,3%igen kochenden Lösung eines nichtionogenen Waschmittels, spült und trocknet. Die erhaltene Ware zeichnet sich durch sehr gute Echtheiten aus.

Beispiel 82: 3 Teile des gemäss Beispiele 1 erhaltenen Farbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das marineblau bedruckte Gewebe wird dann gespült, gegebenenfalls kochend geseift und nochmals gespült, und anschliessend getrocknet. Die erhaltene Ware zeichnet sich durch sehr gute Echtheiten aus.

Beispiel 83: 5 Teile des gemäss Beispiel 1 erhaltenen Farbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen marineblau bedruckten Stoff 8 Minuten bei 102°C in gesättigtem Dampf. Das bedruckte Gewebe wird dann gespült, gegebenenfalls kochend geseift und nochmals gespült, und anschliessend getrocknet. Die erhaltene Ware zeichnet sich durch sehr gute Echtheiten aus.

## Patentansprüche

1. Verbindungen der Formel 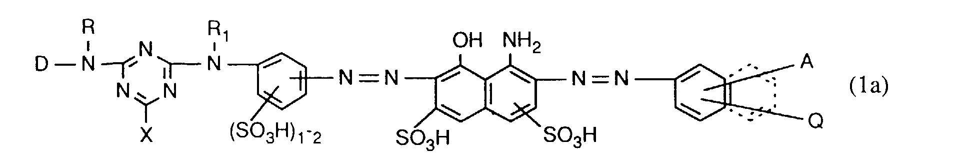 oder 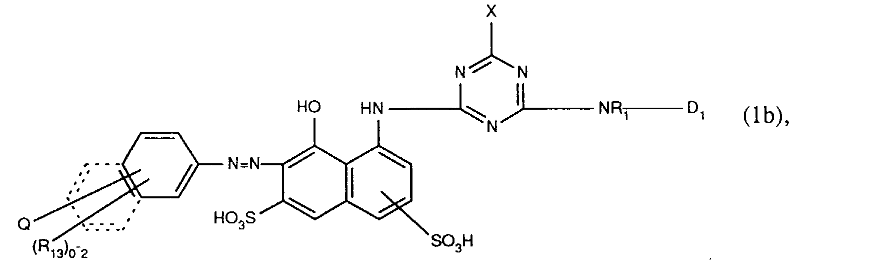 worin
X für Fluor oder Chlor steht,
R und R₁ unabhängig voneinander je Wasserstoff oder gegebenenfalls durch Halogen, Hydroxy, Cyano, C₁-C₄-Alkoxy, C₁-C₄-Alkoxycarbonyl, Carboxyl, Sulfo oder Sulfato substituiertes C₁-C₄-Alkyl bedeuten,
A Wasserstoff, Halogen, C₁-C₄-Alkyl, C₁-C₄-Alkoxy, Sulfo, Carboxy, Trifluormethyl, Nitro, Cyano, Hydroxy, Carbamoyl, N-Mono- oder N,N-Di-C₁-C4-Alkylcarbamoyl, Sulfamoyl, N-Mono- oder N,N-Di-C₁-C₄-Alkylsulfamoyl, C₁-C₄-Alkylsulfonyl oder C₁-C₄-Alkoxycarbonyl bedeutet,
(R₁₃)₀₋₂ für 0 bis 2 gleiche oder verschiedene Reste aus der Gruppe Methyl, Methoxy, Chlor und Sulfo steht,
Q einen Rest der Formel
-SO₂-Y (2a)
-CONH-(CH₂)ₙ-SO₂-Y (2b)
-CONH-(CH₂)_{n'}-O-(CH₂)ₙ-SO₂-Y (2c)
oder
-(O)ₚ-(CH₂)ₘ-CONH-(CH₂)ₙ-SO₂-Y (2d),
bedeutet,
m, n und n' unabhängig voneinander eine ganze Zahl 1 bis 6 und p die Zahl 0 oder 1 bedeuten,
Y für Vinyl, β-Brom- oder β-Chlorethyl, β-Acetoxyethyl, β-Phenoxyethyl, β-Phosphatoethyl, β-Sulfatoethyl oder β-Thiosulfatoethyl steht,
D der Rest eines mindestens eine Sulfogruppe enthaltenden Monoazo-, Polyazo-, Metallkomplexazo-, Anthrachinon-, Triphendioxazin, Phthalocyanin- oder Formazan-Chromophors ist, und
D₁ den Rest eines Monoazochromophors der Formel 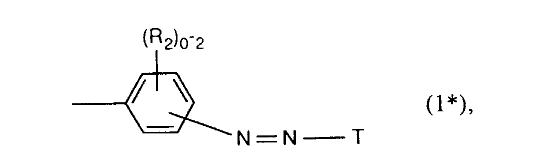 worin (R₂)₀₋₂ für 0 bis 2 gleiche oder verschiedene Reste R₂ aus der Gruppe Sulfo, Sulfomethyl, Hydroxy, Carboxy, Halogen, Cyano, Trifluoromethyl, Sulfamoyl, Carbamoyl, C₂-C₄-Alkanoylamino, Ureido, C₁-C₄-Alkyl, C₁-C₄-Alkoxy oder im Alkylteil durch C₁-C₄-Alkoxy, Hydroxy oder Sulfato substituiertes C₁-C₄-Alkoxy steht und T der Rest einer Diazokomponente oder Kupplungskomponente der Benzol- oder Naphthalinreihe oder der heterocyclischen Reihe ist; oder den Rest eines Polyazo-, Metallkomplexazo-, Anthrachinon-, Triphendioxazin, Phthalocyanin- oder Formazan-Chromophors bedeutet, mit der Massgabe,
dass der Rest -NR- nicht an einen durch -NH₂ substituierten Phenylenrest gebunden ist, wenn D für den Rest eines Monoazo- oder Disazochromophors steht.

2. Verbindungen gemäss Anspruch 1, dadurch gekennzeichnet, dass R und R₁ unabhängig voneinander je für Methyl, Ethyl oder Wasserstoff stehen.

3. Verbindungen gemäss Anspruch 1 oder 2 der Formel (1a).

4. Verbindungen gemäss Anspruch 1 oder 3, dadurch gekennzeichnet, dass D
a) für einen Rest der Formel 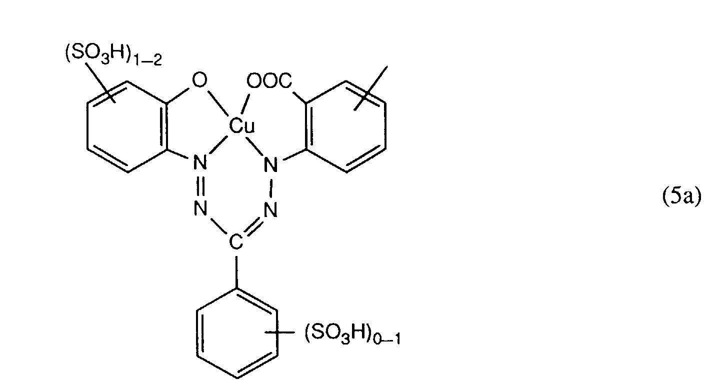 oder 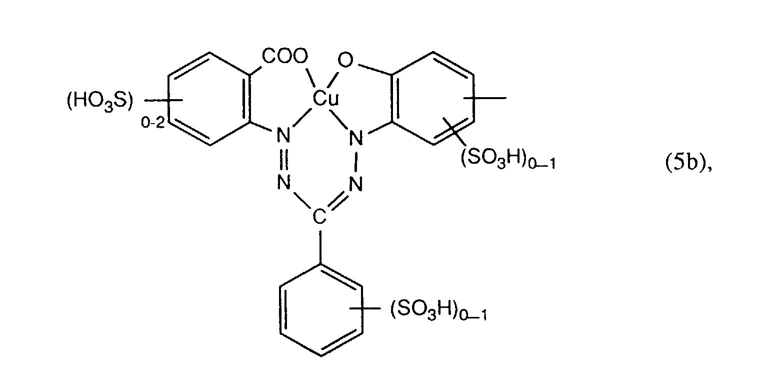 worin die Benzolkerne unsubstituiert oder durch Alkyl mit 1 bis 4 C-Atomen, Alkoxy mit 1 bis 4 C-Atomen, Alkylsulfonyl mit 1 bis 4 C-Atomen, Halogen, Carboxy oder durch einen faserreaktiven Rest der im Anspruch 1 angegebenen Formel (2a), (2b), (2c) oder (2d) substituiert sind,
b) für einen Rest der Formel 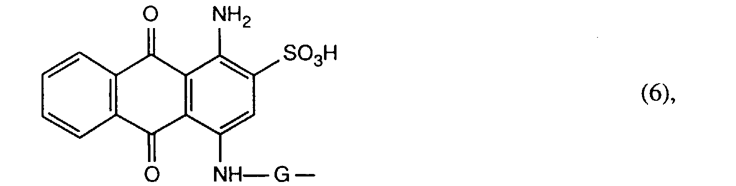 worin G ein Phenylen-, Cyclohexylen-, Phenylenmethylen- oder C₂-C₆-Alkylenrest ist, und der Anthrachinonkern unsubstituiert oder durch eine weitere Sulfogruppe substituiert ist, und G als Phenylrest unsubstituiert oder durch Alkyl mit 1 bis 4 C-Atomen, Alkoxy mit 1 bis 4 C-Atomen, Halogen, Carboxy oder Sulfo substituiert ist,
oder c) für einen Rest der Formel 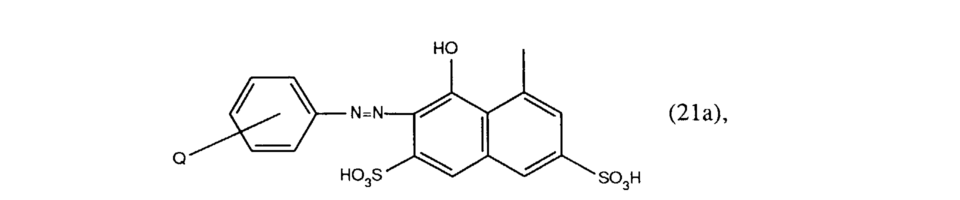 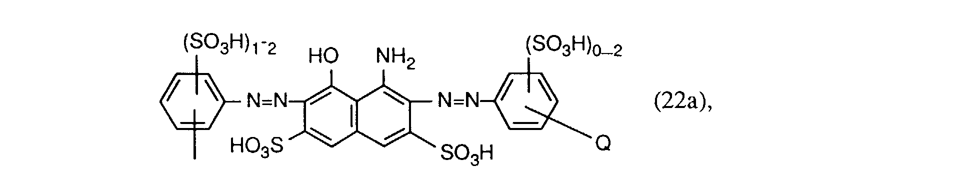 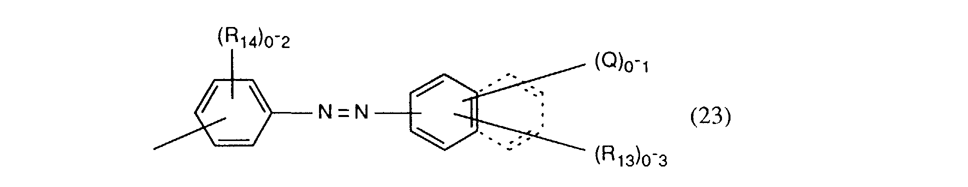 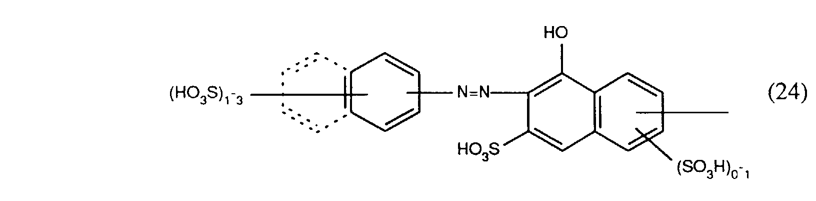 oder 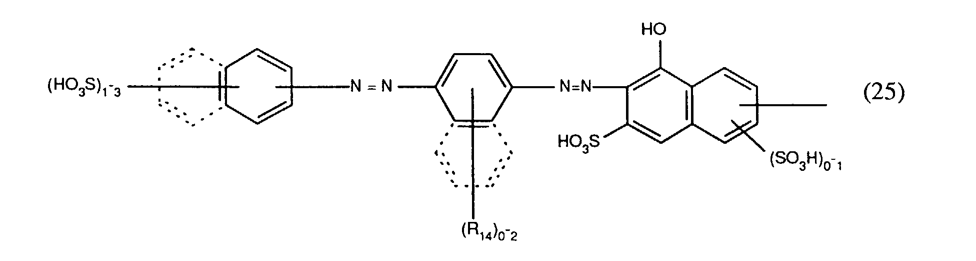 steht, worin (R₁₃)₀₋₃ für 0 bis 3 gleiche oder verschiedene Reste R₁₃ aus der Gruppe Methyl, Methoxy, Chlor und Sulfo steht, (R₁₄)₀₋₂ für 0 bis 2 gleiche oder verschiedene Reste R₁₄ aus der Gruppe Sulfo, Acetylamino, Propionylamino, Ureido, Methyl, Methoxy, 2-Hydroxyethoxy und 2-Sulfatoethoxy bedeutet, Q für einen Rest der Formel
-SO₂-Y (2a)
oder
-CONH-(CH₂)₂₋₃-SO₂-Y (2b'')
steht und Y Vinyl oder β-Sulfatoethyl bedeutet.

5. Verbindungen gemäss Anspruch 3 oder 4 der Formel 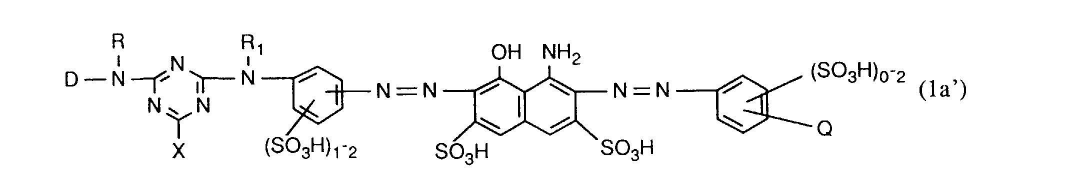 worin R und R₁ unabhängig voneinander je Wasserstoff, Methyl oder Ethyl sind, X Chlor oder Fluor bedeutet, Q einen Rest der im Anspruch 4 angegebenen Formel (2a) oder (2b") darstellt und D für einen Rest der im Anspruch 4 angegebenen Formel (5b), der ausser Sulfo keine weiteren Substituenten trägt, oder für einen Rest der im Anspruch 4 angegebenen Formel (6), (21a), (23), (24) oder (25) steht.

6. Verbindungen gemäss Anspruch 1 oder 2 der Formel (1b).

7. Verbindungen gemäss Anspruch 1 oder 6, dadurch gekennzeichnet, dass es sich bei D₁ um einen Rest der Formel (1*) handelt, worin (R₂)₀₋₂ für 0 bis 2 gleiche oder verschiedene Reste aus der Gruppe Sulfo, Acetylamino, Propionylamino, Ureido, Methyl, Methoxy, 2-Hydroxyethoxy und 2-Sulfatoethoxy steht und T einen unsubstituierten oder durch Sulfo, Methyl, Methoxy, Chlor oder einen Rest der Formel
-SO₂-Y (2a)
oder
-CONH-(CH₂)₂₋₃-SO₂-Y (2b''),
worin Y Vinyl oder β-Sulfatoethyl bedeutet, substituierten Phenyl- oder Naphthylrest als Rest einer Diazokomponente bedeutet.

8. Verbindungen gemäss einem der Ansprüche 1, 6 oder 7, dadurch gekennzeichnet, dass es sich bei D₁ um einen Rest der Formel (1*) handelt, worin (R₂)₀₋₂ für 0 bis 2 gleiche oder verschiedene Reste aus der Gruppe Sulfo, Acetylamino, Propionylamino, Ureido, Methyl, Methoxy, 2-Hydroxyethoxy und 2-Sulfatoethoxy steht und T unsubstituiertes oder z.B. durch C₁-C₂-Alkyl, C₁-C₂-Alkoxy, Halogen, Carboxy, Sulfo, Hydroxy, Amino, N-Mono- oder N,N-Di-C₁-C₄-Alkylarnino, C₂-C₄-Alkanoylamino oder Benzoylamino substituiertes Phenyl oder Naphthyl oder einen Rest der Formel 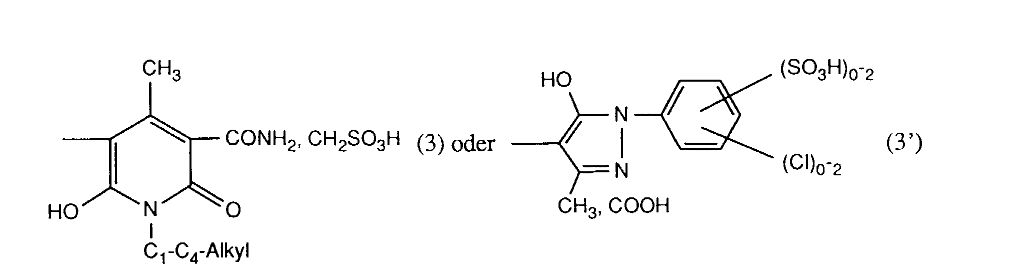 als Rest einer Kupplungskomponente bedeutet.

9. Verbindungen gemäss einem der Ansprüche 1 oder 6, dadurch gekennzeichnet, dass D₁
a) ein Rest der Formel 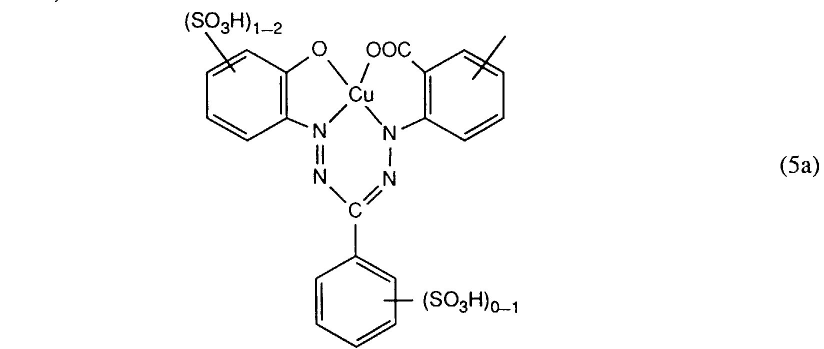 oder 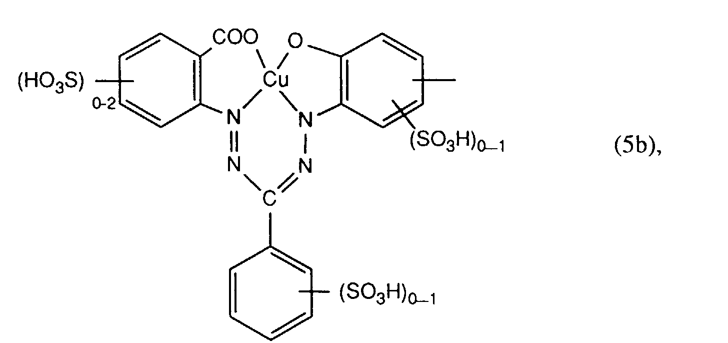 worin die Benzolkeme unsubstituiert oder durch Alkyl mit 1 bis 4 C-Atomen, Alkoxy mit 1 bis 4 C-Atomen, Alkylsulfonyl mit 1 bis 4 C-Atomen, Halogen, Carboxy oder durch einen faserreaktiven Rest der im Anspruch 1 angegebenen Formel (2a), (2b), (2c) oder (2d) substituiert sind,
b) ein Rest der Formel 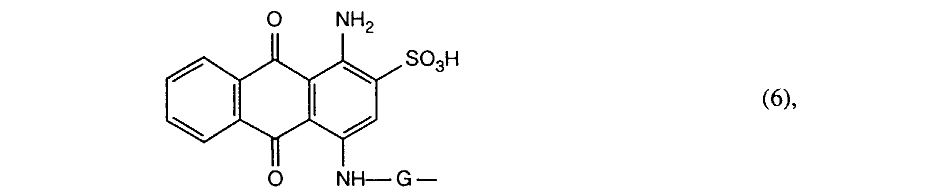 worin G ein Phenylen-, Cyclohexylen-, Phenylenmethylen- oder C₂-C₆-Alkylenrest ist, und der Anthrachinonkern unsubstituiert oder durch eine weitere Sulfogruppe ist, und G als Phenylrest unsubstituiert oder durch Alkyl mit 1 bis 4 C-Atomen, Alkoxy mit 1 bis 4 C-Atomen, Halogen, Carboxy oder Sulfo substituiert ist,
c) ein Rest der Formel 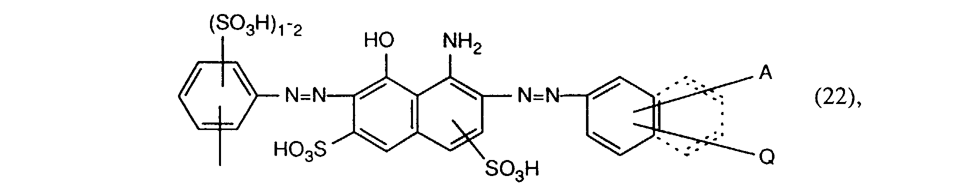 worin A Wasserstoff, Halogen, C₁-C₄-Alkyl, C₁-C₄-Alkoxy, Sulfo, Carboxy, Trifluormethyl, Nitro, Cyano, Hydroxy, Carbamoyl, N-Mono- oder N,N-Di-C₁-C₄-Alkylcarbamoyl, Sulfamoyl, N-Mono- oder N,N-Di-C₁-C₄-Alkylsulfamoyl, C₁-C₄-Alkylsulfonyl oder C₁-C₄-Alkoxycarbonyl bedeutet und Q für einen Rest der im Anspruch 1 angegebenen Formel (2a), (2b), (2c) oder (2d) steht,
oder d) ein Rest der Formel 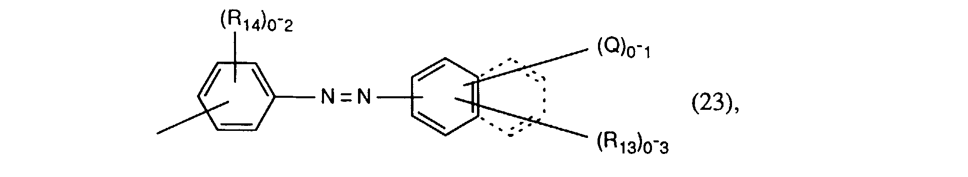 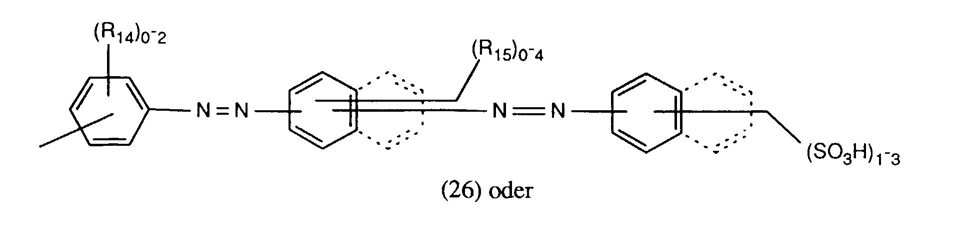 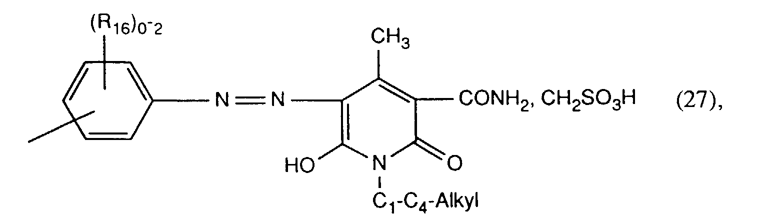 worin (R₁₃)₀₋₃ für 0 bis 3 gleiche oder verschiedene Reste R₁₃ aus der Gruppe Methyl, Methoxy, Chlor und Sulfo steht, (R₁₄)₀₋₂ 0 bis 2 gleiche oder verschiedene Reste R₁₄ aus der Gruppe Sulfo, Acetylamino, Propionylamino, Ureido, Methyl, Methoxy, 2-Hydroxyethoxy und 2-Sulfatoethoxy bedeutet, (R₁₅)₀₋₄ für 0 bis 4 gleiche oder verschiedene Reste R₁₅ aus der Gruppe Sulfo, Hydroxy, Amino, Methoxy, 2-Hydroxyethoxy, 2-Sulfatoethoxy, Methyl, Acetylamino, Benzoylamino, Propionylamino und Ureido steht, (R₁₆)₀₋₂ für 0 bis 2 gleiche oder verschiedene Reste R₁₆ aus der Gruppe Sulfo, Methyl, Methoxy und Chlor steht und Q einen Rest der im Anspruch 1 angegebenen Formel (2a), (2b), (2c) oder (2d) bedeutet, ist.

10. Verbindungen gemäss Anspruch 1 oder 6 der Formel 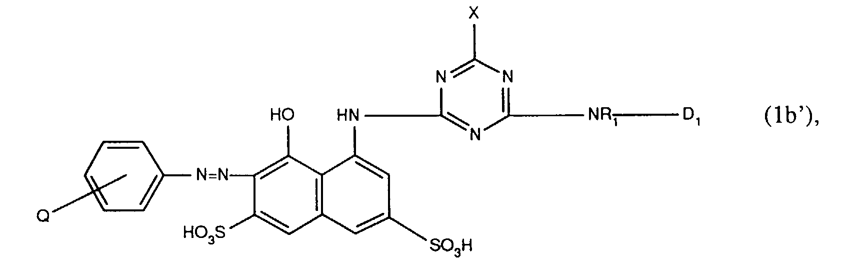 worin R₁ Wasserstoff, Methyl oder Ethyl ist, X Chlor oder Fluor bedeutet, Q ein Rest der Formel
-SO₂-Y (2a)
oder
-CONH-(CH₂)₂₋₃-SO₂-Y (2b''),
worin Y Vinyl oder β-Sulfatoethyl bedeutet, ist, und D₁ für einen Rest der im Anspruch 9 angegebenen Formel (5b), der ausser Sulfo keine weiteren Substituenten trägt, oder für einen Rest der im Anspruch 9 angegebenen Formel (22), (23), (26) oder (27) steht.

11. Verbindungen gemäss Anspruch 10 der Formel (1b'), worin D₁ ein Rest der Formel (5b), der ausser Sulfo keine weiteren Substituenten trägt, ist.

12. Verfahren zum Färben und Bedrucken von cellulosehaltigen Fasermaterialien, dadurch gekennzeichnet, dass man die Fasermaterialien in wässriger Lösung mit einem Farbstoff der Formel (1a) oder (1b) gemäss Anspruch 1 behandelt.

13. Verfahren gemäss Anspruch 12, dadurch gekennzeichnet, dass es sich bei den cellulosehaltigen Fasermaterialien um Baumwolle handelt.

14. Verwendung von Farbstoffen der Formel (1a) oder (1b) gemäss Anspruch 1 zum Färben oder Bedrucken von cellulosehaltigen Fasermaterialien.

## Claims

1. Compounds of the formula 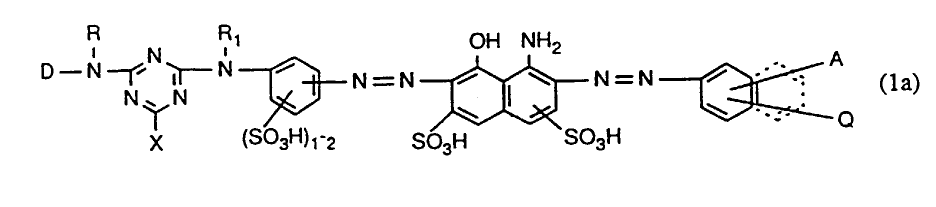 or 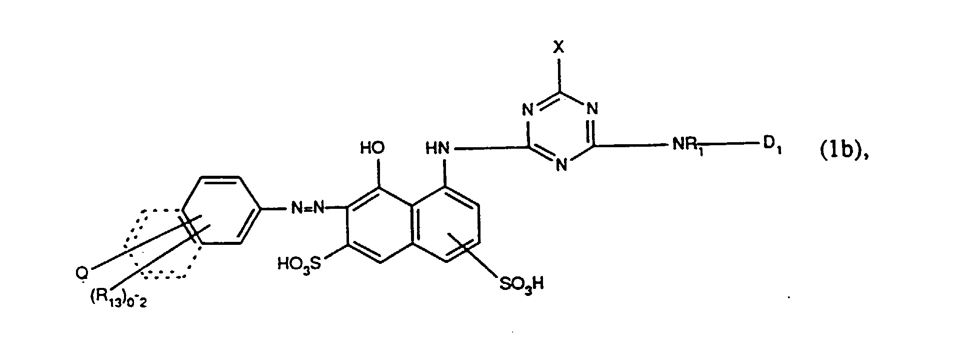 wherein
X is fluorine or chlorine,
R and R₁ are each independently of the other hydrogen or unsubstituted or halogen-, hydroxyl-, cyano-, C₁-C₄alkoxy-, C₁-C₄alkoxycarbonyl-, carboxyl-, sulfo- or sulfato-substituted C₁-C₄alkyl,
A is hydrogen, halogen, C₁-C₄alkyl, C₁-C₄alkoxy, sulfo, carboxyl, trifluoromethyl, nitro, cyano, hydroxyl, carbamoyl, N-mono- or N,N-di-C₁-C₄alkylcarbamoyl, sulfamoyl, N-mono- or N,N-di-C₁-C₄alkylsulfamoyl, C₁-C₄alkylsulfonyl or C₁-C₄alkoxycarbonyl, (R₁₃)₀₋₂ represents 0 to 2 identical or different radicals selected from the group consisting of methyl, methoxy, chlorine and sulfo,
Q is a radical of the formula
-SO₂-Y (2a)
-CONH-(CH₂)ₙ-SO₂-Y (2b)
-CONH-(CH₂)_{n'}-O-(CH₂)ₙ-SO₂-Y (2c)
or
-(O)ₚ-(CH₂)ₘ-CONH-(CH₂)ₙ-SO₂-Y (2d),
m, n and n' are each independently of the others a whole number from 1 to 6 and p is 0 or 1,
Y is vinyl, β-bromoethyl, β-chloroethyl, β-acetoxyethyl, β-phenoxyethyl,
β-phosphatoethyl, β-sulfatoethyl or β-thiosulfatoethyl,
D is the radical of a monoazo, polyazo, metal complex azo, anthraquinone, triphendioxazine, phthalocyanine or formazan chromophore that contains at least one sulfo group, and
D₁ is the radical of a monoazo chromophore of the formula 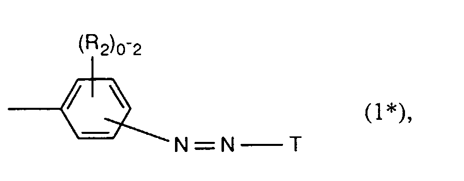 where (R₂)₀₋₂ represents 0 to 2 identical or different radicals R₂ selected from the group consisting of sulfo, sulfomethyl, hydroxyl, carboxyl, halogen, cyano, trifluoromethyl, sulfamoyl, carbamoyl, C₂-C₄alkanoylamino, ureido, C₁-C₄alkyl, C₁-C₄alkoxy, or C₁-C₄alkoxy substituted by C₁-C₄alkoxy, hydroxyl or sulfato in the alkyl moiety, and T is the radical of a diazo component or coupling component of the benzene or naphthalene series or of the heterocyclic series, or is the radical of a polyazo, metal complex azo, anthraquinone, triphendioxazine, phthalocyanine or formazan chromophore, with the proviso that the radical -NR- is not attached to an NH₂-substituted phenylene radical when D is the radical of a monoazo or disazo chromophore.

2. Compounds according to claim 1, characterized in that R and R₁ are each independently of the other methyl, ethyl or hydrogen.

3. Compounds according to claim 1 or 2 of the formula (1a).

4. Compounds according to claim 1 or 3, characterized in that D is
a) a radical of the formula 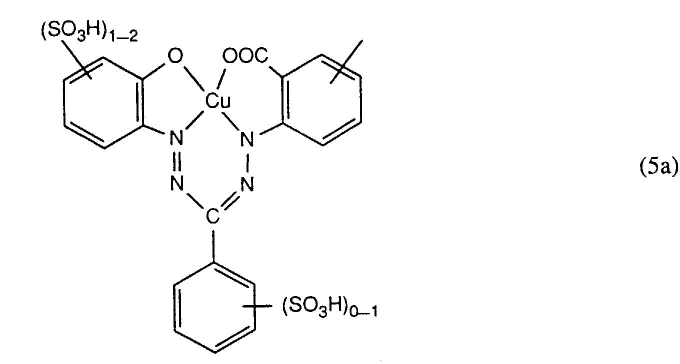 or 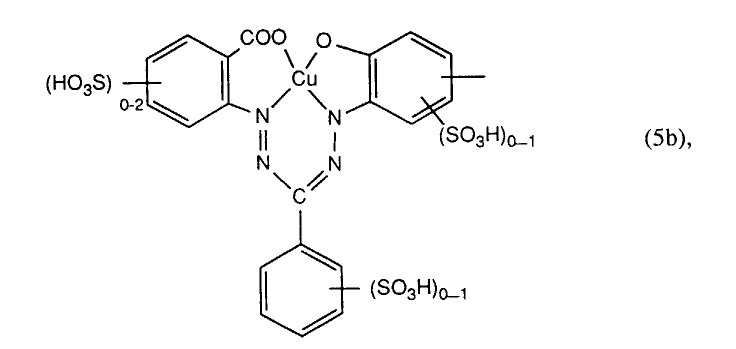 wherein the benzene nuclei are unsubstituted or substituted by alkyl having 1 to 4 carbon atoms, alkoxy having 1 to 4 carbon atoms, alkylsulfonyl having 1 to 4 carbon atoms, halogen, carboxyl or by a fibre-reactive radical of the formula (2a), (2b), (2c) or (2d) indicated in claim 1,
b) a radical of the formula 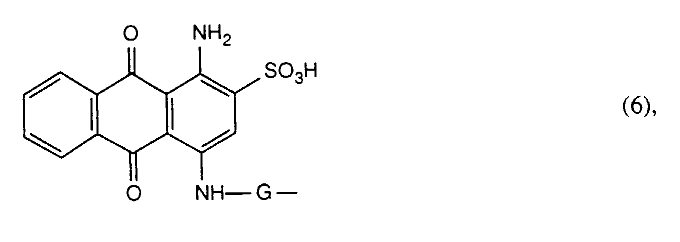 wherein G is a phenylene, cyclohexylene, phenylenemethylene or C₂-C₆alkylene radical, and the anthraquinone nucleus is unsubstituted or substituted by a further sulfo group, and G as phenyl radical is unsubstituted or substituted by alkyl having 1 to 4 carbon atoms, alkoxy having 1 to 4 carbon atoms, halogen, carboxyl or sulfo,
or c) a radical of the formula 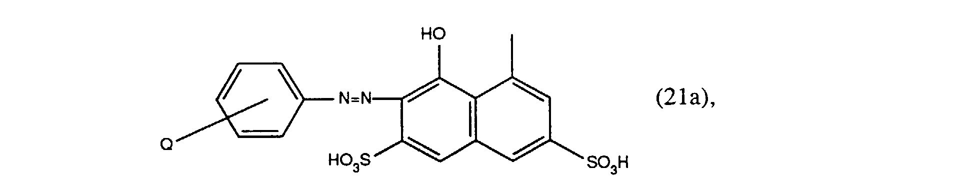 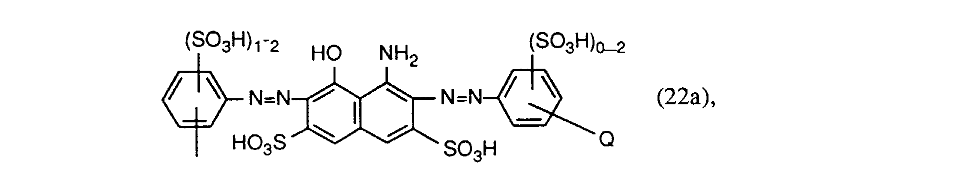 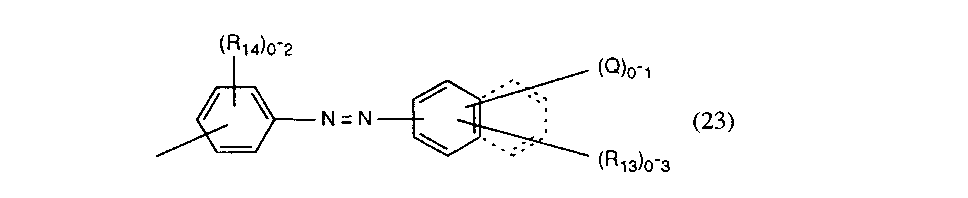 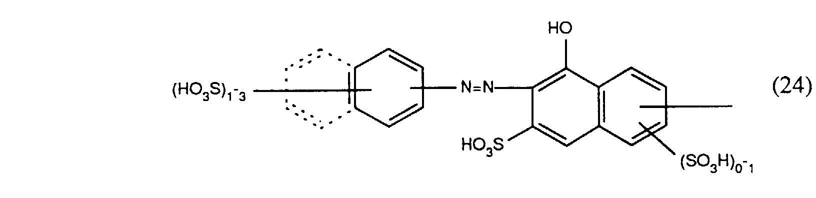 or 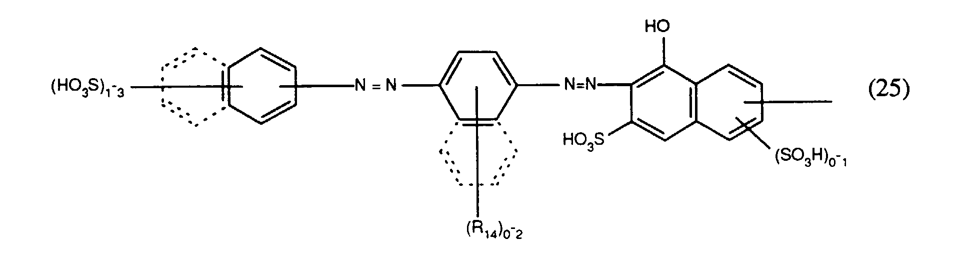 wherein (R₁₃)₀₋₃ represents 0 to 3 identical or different radicals R₁₃ selected from the group consisting of methyl, methoxy, chlorine and sulfo, (R₁₄)₀₋₂ represents 0 to 2 identical or different radicals R₁₄ selected from the group consisting of sulfo, acetylamino, propionylamino, ureido, methyl, methoxy, 2-hydroxyethoxy and 2-sulfatoethoxy, Q is a radical of the formula
-SO₂-Y (2a)
or
-CONH-(CH₂)₂₋₃-SO₂-Y (2b'')
and Y is vinyl or β-sulfatoethyl.

5. Compounds according to claim 3 or 4 of the formula 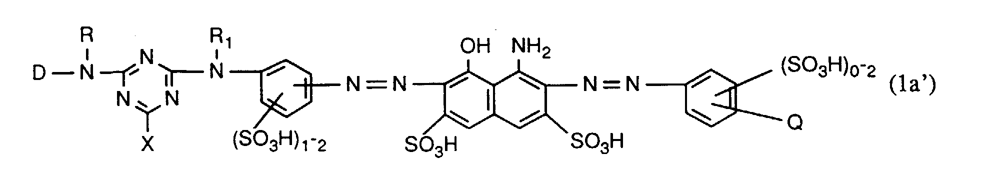 wherein R and R₁ are each independently of the other hydrogen, methyl or ethyl, X is chlorine or fluorine, Q is a radical of the formula (2a) or (2b") indicated in claim 4, and D is a radical of the formula (5b) indicated in claim 4 which apart from sulfo carries no further substituents, or is a radical of the formula (6), (21a), (23), (24) or (25) indicated in claim 4.

6. Compounds according to claim 1 or 2 of the formula (1b).

7. Compounds according to claim 1 or 6, characterized in that D₁ is a radical of the formula (1*) wherein (R₂)₀₋₂ represents 0 to 2 identical or different radicals selected from the group consisting of sulfo, acetylamino, propionylamino, ureido, methyl, methoxy, 2-hydroxyethoxy and 2-sulfatoethoxy and T is a phenyl or naphthyl radical which is unsubstituted or substituted by sulfo, methyl, methoxy, chlorine or a radical of the formula
-SO₂-Y (2a)
or
-CONH-(CH₂)₂₋₃-SO₂-Y (2b''),
wherein Y is vinyl or β-sulfatoethyl, as radical of a diazo component.

8. Compounds according to any one of claims 1, 6 or 7, characterized in that D₁ is a radical of the formula (1*) wherein (R₂)₀₋₂ represents 0 to 2 identical or different radicals selected from the group consisting of sulfo, acetylamino, propionylamino, ureido, methyl, methoxy, 2-hydroxyethoxy and 2-sulfatoethoxy and T is unsubstituted or for example C₁-C₂alkyl-, C₁-C₂alkoxy-, halogen-, carboxyl-, sulfo-, hydroxyl-, amino-, N-mono-C₁ -C₄alkylamino-, N,N-di-C₁-C₄alkylamino-, C₂-C₄alkanoylamino- or benzoylamino-substituted phenyl or naphthyl or a radical of the formula 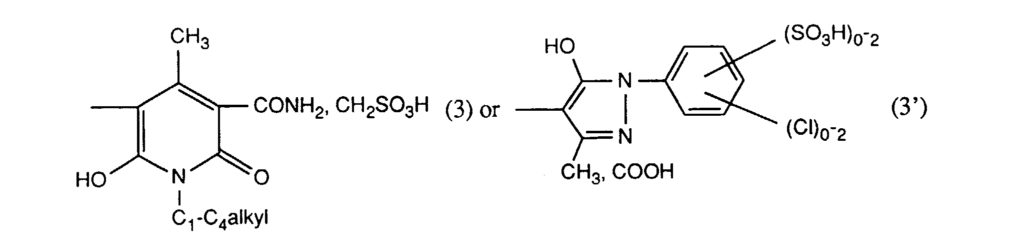 as radical of a coupling component.

9. Compounds according to any one of claims 1 or 6, characterized in that D₁ is
a) a radical of the formula 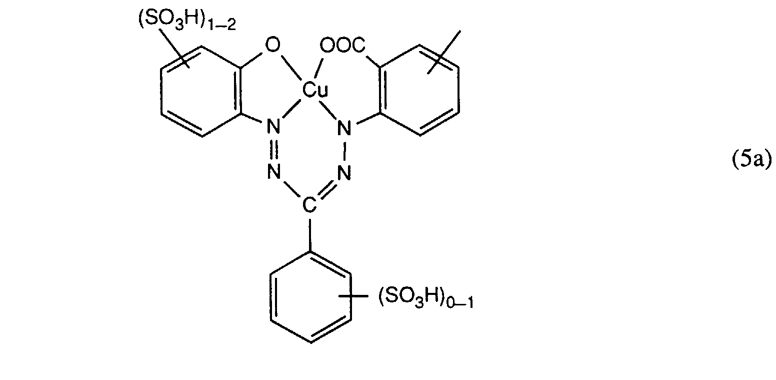 or 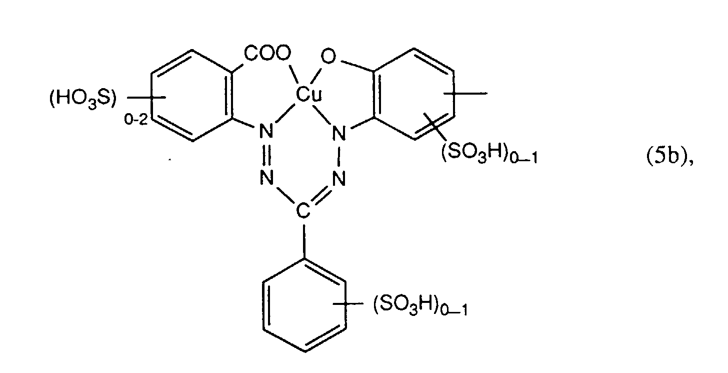 wherein the benzene nuclei are unsubstituted or substituted by alkyl having 1 to 4 carbon atoms, alkoxy having 1 to 4 carbon atoms, alkylsulfonyl having 1 to 4 carbon atoms, halogen, carboxyl or by a fibre-reactive radical of the formula (2a), (2b), (2c) or (2d) indicated in claim 1,
b) a radical of the formula 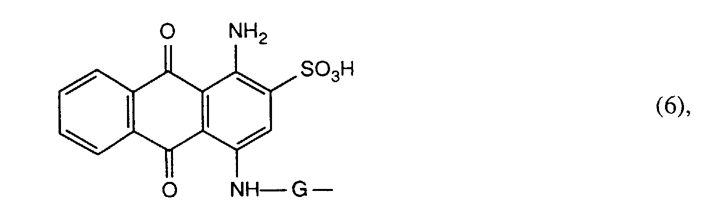 wherein G is a phenylene, cyclohexylene, phenylenemethylene or C₂-C₆alkylene radical, and the anthraquinone nucleus is unsubstituted or substituted by a further sulfo group, and G as phenyl radical is unsubstituted or substituted by alkyl having 1 to 4 carbon atoms, alkoxy having 1 to 4 carbon atoms, halogen, carboxyl or sulfo,
c) a radical of the formula 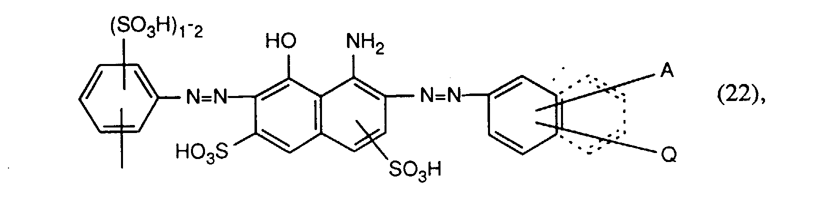 wherein A is hydrogen, halogen, C₁-C₄alkyl, C₁-C₄alkoxy, sulfo, carboxyl, trifluoromethyl, nitro, cyano, hydroxyl, carbamoyl, N-mono- or N,N-di-C₁-C₄alkylcarbamoyl, sulfamoyl, N-mono- or N,N,-di-C₁-C₄alkylsulfamoyl, C₁-C₄alkylsulfonyl or C₁-C₄alkoxycarbonyl, and Q is a radical of the formula (2a), (2b), (2c) or (2d) indicated in claim 1,
or d) a radical of the formula 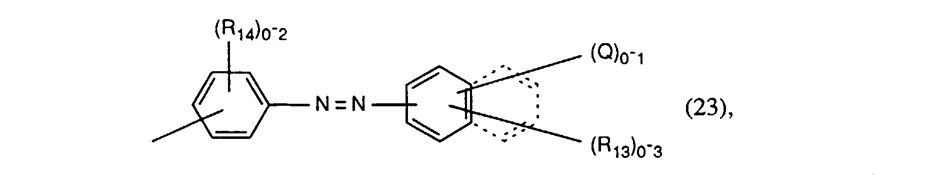 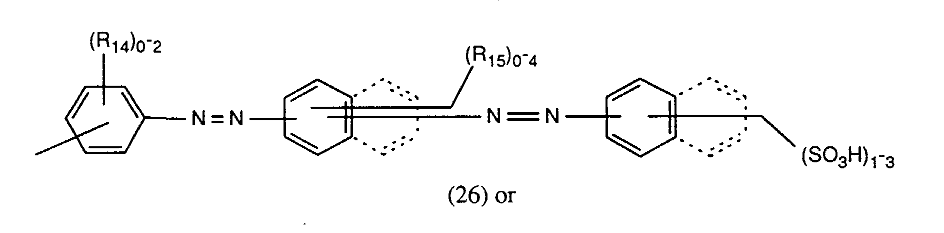 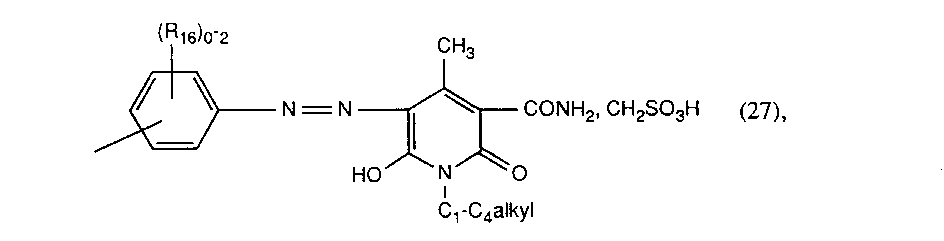 wherein (R₁₃)₀₋₃ represents 0 to 3 identical or different radicals R₁₃ selected from the group consisting of methyl, methoxy, chlorine and sulfo, (R₁₄)₀₋₂ represents 0 to 2 identical or different radicals R₁₄ selected from the group consisting of sulfo, acetylamino, propionylamino, ureido, methyl, methoxy, 2-hydroxyethoxy and 2-sulfatoethoxy, (R₁₅)₀₋₄ represents 0 to 4 identical or different radicals R₁₅ selected from the group consisting of sulfo, hydroxyl, amino, methoxy, 2-hydroxyethoxy, 2-sulfatoethoxy, methyl, acetylamino, benzoylamino, propionylamino and ureido, (R₁₆)₀₋₂ represents 0 to 2 identical or different radicals R₁₆ selected from the group consisting of sulfo, methyl, methoxy and chlorine, and Q is a radical of the formula (2a), (2b), (2c) or (2d) indicated in claim 1.

10. Compounds according to claim 1 or 6 of the formula 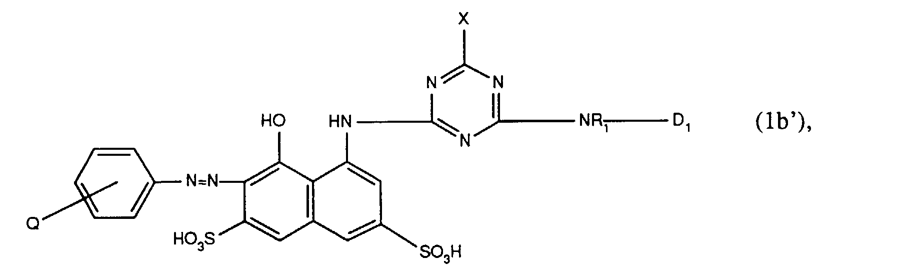
wherein R₁ is hydrogen, methyl or ethyl, X is chlorine or fluorine, Q is a radical of the formula
-SO₂-Y (2a)
or
-CONH-(CH₂)₂₋₃-SO₂-Y (2b''),
wherein Y is vinyl or β-sulfatoethyl, and D₁ is a radical of the formula (5b) indicated in claim 9 which apart from sulfo carries no further substituents, or is a radical of the formula (22), (23), (26) or (27) indicated in claim 9.

11. Compounds according to claim 10 of the formula (1b'), wherein D₁ is a radical of the formula (5b) which apart from sulfo carries no further substituents.

12. A process for dyeing and printing cellulosic fibre materials, characterized in that it comprises treating the fibre materials in aqueous solution with a dye of the formula (la) or (1b) according to claim 1.

13. A process according to claim 12, characterized in that the cellulosic fibre materials are cotton.

14. The use of dyes of the formula (1a) or (1b) according to claim 1 for dyeing or printing cellulosic fibre materials.

## Revendications

1. Composés de formule 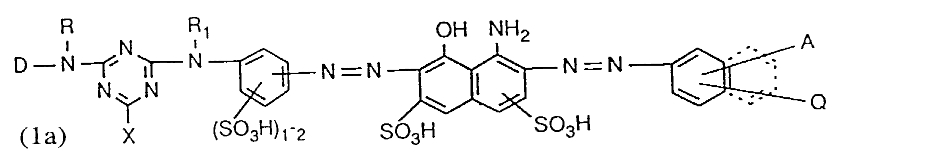 ou 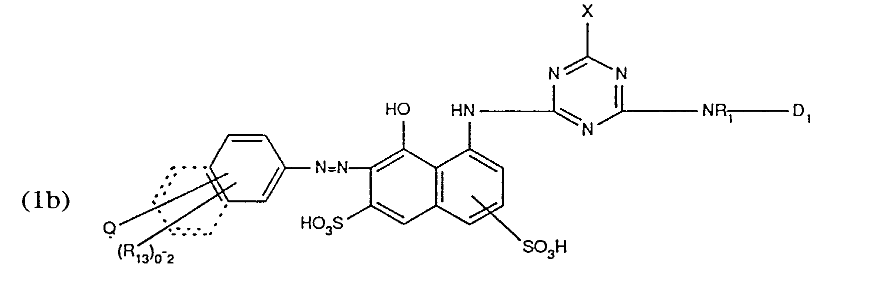 dans lesquelles
X représente un atome de fluor ou de chlore,
R et R₁ représentent, indépendamment l'un de l'autre, chacun un atome d'hydrogène ou un résidu alkyle en C₁₋₄ pouvant porter des substituants halogéno, hydroxy, cyano, alcoxy en C₁₋₄, (alcoxy en C₁₋₄)-carbonyle, carboxyle, sulfo ou sulfato,
A représente un atome d'hydrogène ou d'halogène, un groupe alkyle en C₁₋₄, alcoxy en C₁₋₄, sulfo, carboxy, trifluorométhyle, nitro, cyano, hydroxy, carbamoyle, N-mono- ou N,N-di-(alkyle en C₁₋₄)-carbamoyle, sulfamoyle, N-mono- ou N,N-di-(alkyle en C₁₋₄)-sulfamoyle, (alkyle en C₁₋₄)-sulfonyle ou (alcoxy en C₁₋₄)-carbonyle,
(R₁₃)₀₋₂ représente de 0 à 2 résidus, identiques ou différents, choisis parmi les résidus méthyle, méthoxy, chloro et sulfo,
Q représente un résidu de formule
(2a) -SO₂-Y
(2b) -CONH-(CH₂)ₙ-SO₂-Y
(2c) -CONH-(CH₂)_{n'}-O-(CH₂)ₙ-SO₂-Y
(2d) -(O)ₚ-(CH₂)ₘ-CONH-(CH₂)ₙ-SO₂-Y
m, n et n' représentent, indépendamment les uns des autres, un nombre entier compris entre 1 et 6 et p un nombre égal à 0 ou 1,
Y représente un résidu vinyle, β-bromoéthyle ou β-chloroéthyle, β-acétoxyéthyle, β-phénoxyéthyle, β-phosphatoéthyle, β-sulfatoéthyle ou β-thiosulfatoéthyle,
D représente le résidu d'un chromophore monoazoïque, polyazoïque, azoïque métallifère, anthraquinonique, triphène-dioxazinique, phtalocyanine ou formazan comportant au moins un groupe sulfo,
D₁ représente le résidu d'un chromophore monoazoïque de formule 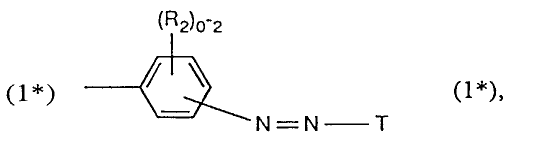 dans laquelle (R₂)₀₋₂ représente de 0 à 2 résidus R₂ identiques ou différents choisis dans le groupe formé par les résidus sulfo, sulfométhyle, hydroxy, carboxy, halogéno, cyano, trifluorométhyle, sulfamoyle, carbamoyle, alcanoylamino en C₂₋₄, uréido, alkyle en C₁₋₄, alcoxy en C₁₋₄ ou alcoxy en C₁₋₄ portant sur la partie alkyle un substituant alcoxy en C₁₋₄, hydroxy ou sulfato, et T représente le résidu d'un composant diazo ou d'un copulant de la série benzénique, naphtalénique ou hétérocyclique, ou le résidu d'un chromophore polyazoïque, azoïque métallifère, anthraquinonique, triphènedioxazinique, phtalocyanine ou formazan, à condition que, lorsque D représente un chromophore monoazoïque ou diazoïque, le résidu -NR- ne soit pas lié à un résidu phénylène substitué par un groupe -NH₂.

2. Composés conformes à la revendication 1, caractérisés en ce que R et R₁ représentent, indépendamment l'un de l'autre, chacun un groupe méthyle, éthyle ou un atome d'hydrogène.

3. Composés de formule (1a) conformes à la revendication 1 ou 2.

4. Composés conformes à la revendication 1 ou 3, caractérisés en ce que D représente
a) un résidu de formule 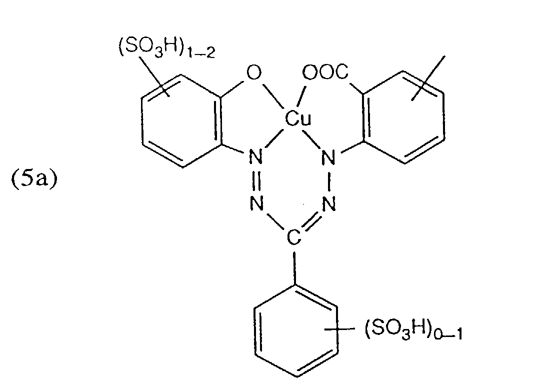 ou 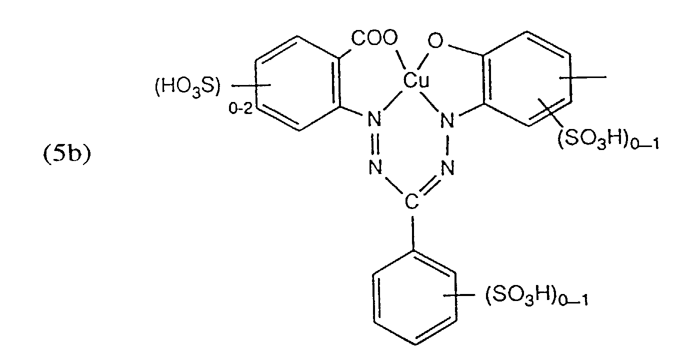 où les noyaux benzène ne sont pas substitués ou portent des substituants alkyle en C₁₋₄, alcoxy en C₁₋₄, akylsulfonyle en C₁₋₄, halogéno, carboxy, ou un résidu réactif vis-à-vis des fibres correspondant à une des formules (2a), (2b), (2c) ou (2d) indiquées dans la revendication 1.
b) un résidu de formule 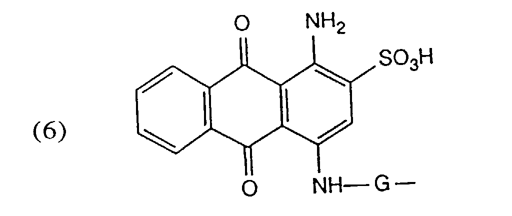 dans laquelle G représente un résidu phénylène, cyclohexylène, phénylène-méthylène ou alkylène en C₂₋₆, le noyau anthraquinonique étant non substitué ou portant un groupe sulfo supplémentaire, et G, dans la signification d'un résidu phénylène, étant non substitué ou portant un groupe alkyle en C₁₋₄, alcoxy en C₁₋₄, halogéno, carboxy ou sulfo, ou
c) un résidu de formule 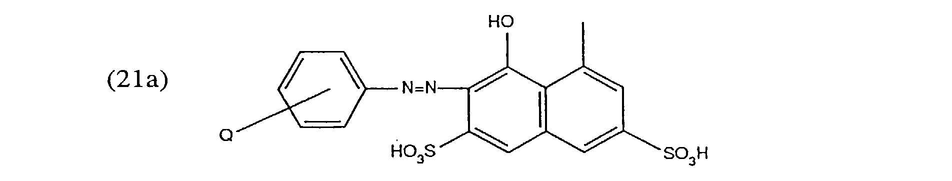 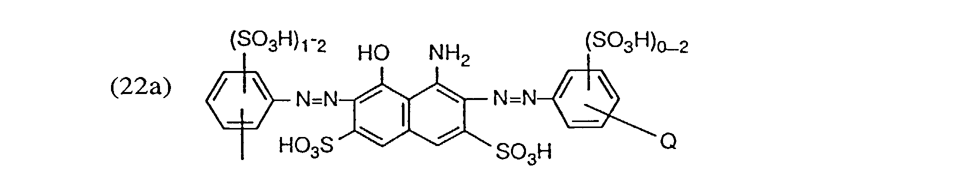 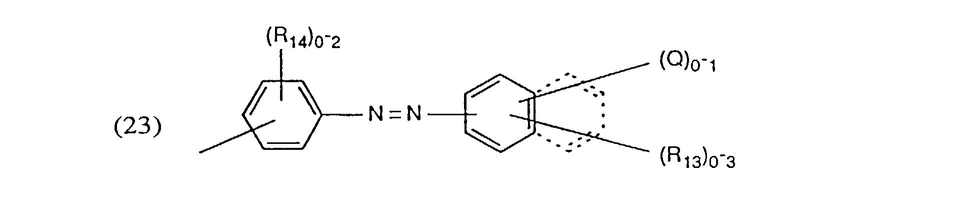 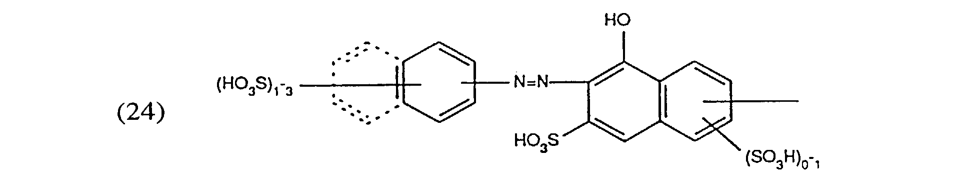 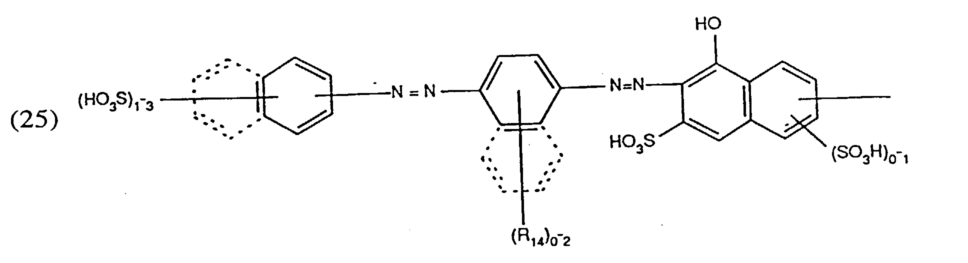 dans lesquelles (R₁₃)₀₋₃ représente de 0 à 3 résidus R₁₃, identiques ou différents, choisis parmi les résidus méthyle, méthoxy, chloro et sulfo, (R₁₄)₀₋₂ représente de 0 à 2 résidus, identiques ou différents, choisis parmi les groupes sulfo, acétylamino, propionylamino, uréido, méthyle, méthoxy, 2-hydroxyéthoxy et 2-sulfatoéthoxy, et Q représente un résidu de formule
(2a) -SO₂-Y
ou
(2b") -CONH-(CH₂)₂₋₃-SO₂-Y
et Y représente un groupe vinyle ou β-sulfatoéthyle.

5. Composés conformes à la revendication 3 ou 4 de formule 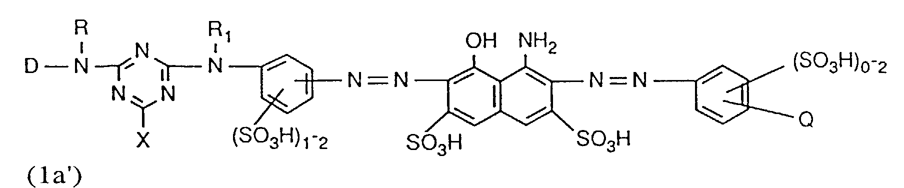 dans laquelle R et R₁ représentent, indépendamment l'un de l'autre, chacun un atome d'hydrogène ou un groupe méthyle ou éthyle, X représente un atome de chlore ou de fluor, Q représente un résidu de formule (2a) ou (2b") indiquées dans la revendication 4, et D représente un résidu de formule (5b) indiquée dans la revendication 4, qui ne présente pas d'autres substituants que les groupes sulfo, ou un résidu de formule (6), (21a), (23), (24) ou (25) indiquées dans la revendication 4.

6. Composés de formule (1b) conformes à la revendication 1 ou 2.

7. Composés conformes à la revendication 1 ou 6, caractérisés en ce que D₁ est un résidu de formule (1*) dans laquelle (R₂)₀₋₂ représente de 0 à 2 résidus, identiques ou différents, choisis dans le groupe formé par les résidus sulfo, acétylamino, propionylamino, uréido, méthyle, méthoxy, 2-hydroxyéthoxy et 2-sulfatoéthoxy, et T, en tant que résidu d'un composant diazo, représente un résidu phényle ou naphtyle non substitué ou portant un résidu sulfo, méthyle, méthoxy, chloro ou un résidu de formule
(2a) -SO₂-Y
ou
(2b'') -CONH-(CH₂)₂₋₃-SO₂-Y
où Y représente un groupe vinyle ou β-sulfatoéthyle.

8. Composés conformes à une des revendications 1, 6 ou 7, caractérisés en ce que D₁ est un résidu de formule (1*) dans laquelle (R₂)₀₋₂ représente de 0 à 2 résidus, identiques ou différents, choisis dans le groupe formé par les résidus sulfo, acétylamino, propionylamino, uréido, méthyle, méthoxy, 2-hydroxyéthoxy et 2-sulfatoéthoxy, et T, en tant que résidu d'un copulant, représente un résidu phényle ou naphtyle non substitué ou portant par exemple un résidu alkyle en C₁₋₂, alcoxy en C₁₋₂, halogéno, carboxy, sulfo, hydroxy, amino, N-mono- ou N,N-di-(alkyle en C₁₋₄)-amino, alcanoylarnino en C₂₋₄ ou benzoylamino, ou un résidu de formule

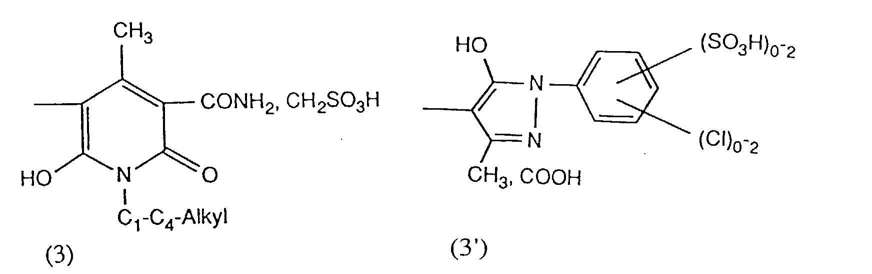

9. Composés conformes à une des revendications 1 ou 6, caractérisés en ce que D₁ représente
a) un résidu de formule 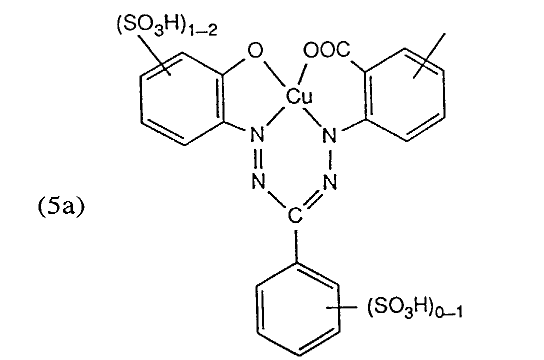 ou 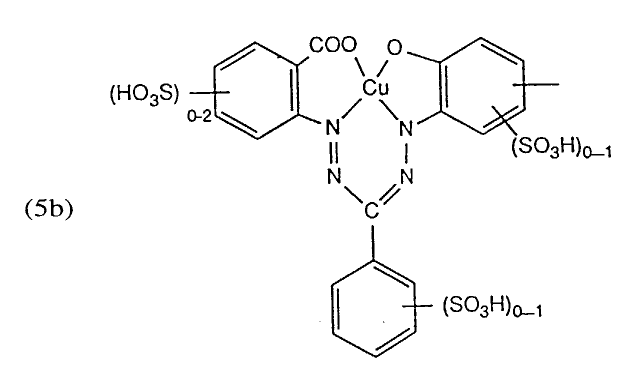 où les noyaux benzène sont non substitués ou portent des substituants alkyle en C₁₋₄, alcoxy en C₁₋₄, akylsulfonyle en C₁₋₄, halogéno, carboxy, ou un résidu réactif vis-à-vis des fibres correspondant à une des formules (2a), (2b), (2c) ou (2d) indiquées dans la revendication 1.
b) un résidu de formule 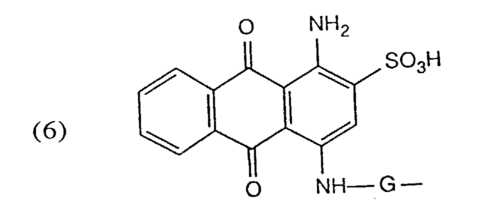 dans laquelle G représente un résidu phénylène, cyclohexylène, phénylène-méthylène ou alkylène en C₂₋₆, le noyau anthraquinonique étant non substitué ou portant un groupe sulfo supplémentaire, et G, dans la signification d'un résidu phénylène, étant non substitué ou portant un groupe alkyle en C₁₋₄, alcoxy en C₁₋₄, halogéno, carboxy ou sulfo; ou
c) un résidu de formule 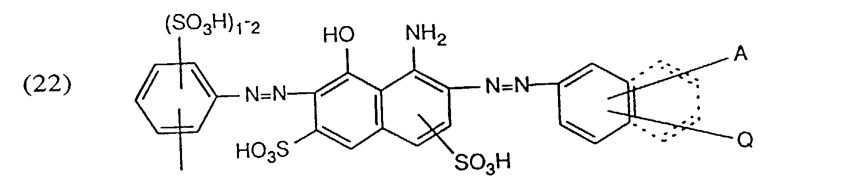 dans laquelle A représente un atome d'hydrogène ou d'halogène, un résidu alkyle en C₁₋₄, alcoxy en C₁₋₄, sulfo, carboxy, trifluorométhyle, nitro, cyano, hydroxy, carbamoyle, N-mono- ou N,N-di-(alkyle en C₁₋₄)-carbamoyle, sulfamoyle, N-mono- ou N,N-di-(alkyle en C₁₋₄)-sulfamoyle, (alkyle en C₁₋₄)-sulfonyle ou (alcoxy en C₁₋₄)-carbonyle, et Q représente un résidu correspondant à une des formules (2a), (2b), (2c) ou (2d) indiquées dans la revendication 1, ou
d) un résidu de formule 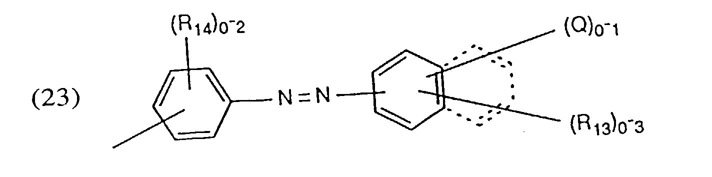 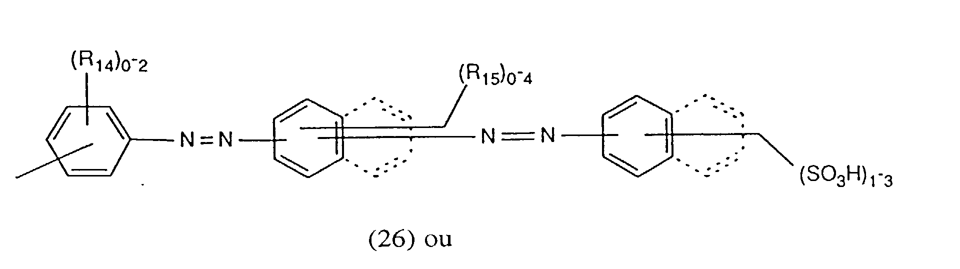 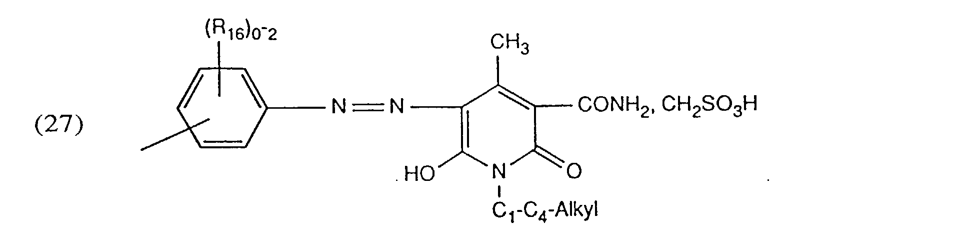 dans laquelle (R₁₃)₀₋₃ représente de 0 à 3 résidus R₁₃, identiques ou différents, choisis parmi les résidus méthyle, méthoxy, chloro et sulfo, (R₁₄)₀₋₂ représente de 0 à 2 résidus R₁₄, identiques ou différents, choisis parmi les résidus sulfo, acétylamino, propionylamino, uréïdo, méthyle, méthoxy, 2-hydroxyéthoxy et 2-sulfatoéthoxy, (R₁₅)₀₋₄ représente de 0 4 résidus R₁₅, identiques ou différents, choisis parmi les résidus sulfo, hydroxy, amino, méthoxy, 2-hydroxyéthoxy, 2-sulfatoéthoxy, méthyle, acétylamino, benzoylamino, propionylamino et uréido, (R₁₆)₀₋₂ représente de 0 à 2 résidus R₁₆, identiques ou différents, choisis parmi les résidus sulfo, méthyle, méthoxy et chloro et Q représente un résidu correspondant à une des formules (2a), (2b), (2c) ou (2d) indiquées dans la revendication 1.

10. Composés conformes à la revendication 1 ou 6 de formule 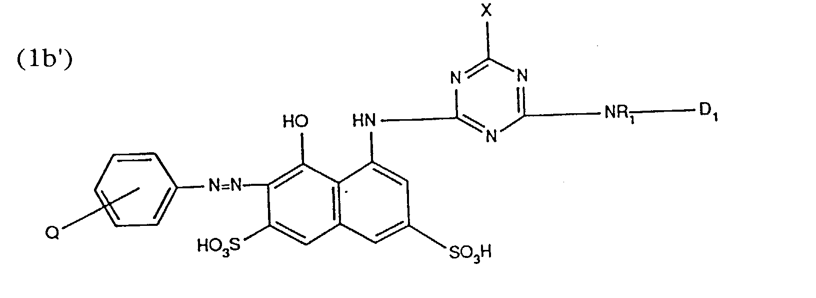 dans laquelle R₁ représente un atome d'hydrogène, ou groupe méthyle ou éthyle, X représente un atome de chlore ou de fluor, Q représente un résidu de formule
(2a) -SO₂-Y
ou
(2b") -CONH-(CH₂)₂₋₃-SO₂-Y
où Y représente un groupe vinyle ou β-sulfatoéthyle, et D₁ représente un résidu de formule (5b) indiquée dans la revendication 9 qui ne porte pas d'autres subtituants que des groupes sulfo, ou un résidu correspondant à une des formules (22), (23), (26) ou (27) indiquées dans la revendication 9.

11. Composés de formule (1b') conformes à la revendication 10, dans lesquels D₁ est un résidu de formule (5b) qui ne porte pas d'autres substituants que des groupes sulfo.

12. Procédé de teinture et d'impression de matériaux contenant de la cellulose, caractérisé en ce que l'on traite les matériaux fibreux en solution aqueuse avec un colorant de formule (la) ou (1b) conforme à la revendication 1.

13. Procédé conforme à la revendication 12, caractérisé en ce que le substrat fibreux contenant de la cellulose est du coton.

14. Utilisation de colorants de formule (1a) ou (1b) conformes à la revendication 1 pour la teinture ou l'impression de matériaux fibreux contenant de la cellulose.
